# EUROPEAN PATENT APPLICATION

(11) **EP 4 621 575 A1**
(43) Date of publication of application: **24.09.2025**
(21) Application number: 25153419.4
(22) Date of filing: 22.01.2025
(51) Int. Cl.: G06F 11/34

(54) **CIRCUITRY AND METHODS FOR ENHANCED PERFORMANCE MONITORING**

(30) Priority: 04.03.2024 US 202418595220
(71) Applicant: Intel Corporation, Santa Clara, CA 95054 (US)
(72) Inventor: HANNA, Anton, 1759270 Nof HaGalil (IL); YASIN, Ahmad, 1790700 Kafr Manda (IL)
(74) Representative: Samson & Partner Patentanwälte mbB

(57) **Abstract**

Techniques for performance monitoring are described. In certain examples, an apparatus (e.g., a processor) includes a first set of execution circuits of a first type; a second set of execution circuits of a second type different than the first type; an allocation circuit to allocate a first set of one or more ports for the first set of execution circuits of the first type, and a second set of one or more ports for the second set of execution circuits of the second type; and a performance monitor circuit to generate a first value that indicates a first number of ports of the first set of one or more ports that delayed pushing out a ready to execute micro-operation of the first type to the first set of execution circuits of the first type due to being busy executing another micro-operation of the first type, and a second value that indicates a second number of ports of the second set of one or more ports that delayed pushing out a ready to execute micro-operation of the second type to the second set of execution circuits of the second type due to being busy executing another micro-operation of the second type.

## Description

### BACKGROUND

Modern processors typically include performance monitoring capabilities to enable skilled users to perform debug and code analysis functions. In some processors, a top-down micro architecture analysis (TMA) methodology is provided for use in identifying software performance issues. This TMA methodology is a hierarchical organization of event-based metrics that identifies dominant performance bottlenecks in an application. Its aim is to show, on average, how well processor pipeline(s) are utilized while running an application. However, current mechanisms for gathering and differentiating this information can suffer from lack of precision.

### BRIEF DESCRIPTION OF DRAWINGS

Various examples in accordance with the present disclosure will be described with reference to the drawings, in which:
FIG. 1A illustrates a block diagram of a portion of a processor with a performance monitor in accordance with some examples.
FIG. 1B illustrates a more detailed block diagram of a portion of a processor with a performance monitor according to some examples.
FIG. 2 illustrates a flow diagram of a method according to some examples.
FIG. 3 is a block diagram illustrating a processor to generate and store precise event-based sampling (PEBS) and non-precise event-based sampling (NPEBS) records according to some examples.
FIG. 4 illustrates an example of a process to generate and store PEBS records in a memory buffer, and to store the memory buffer to a PEBS trace file according to some examples.
FIG. 5 illustrates an example of a process of programming a PEBS handler circuit to monitor processor performance and generate a PEBS record to be stored in a PEBS memory buffer, and then stored in a PEBS trace file according to some examples.
FIG. 6 illustrates three example performance monitoring events.
FIG. 7 illustrates three example performance monitoring metrics.
FIG. 8 illustrates an example Top-down Microarchitecture Analysis (TMA) hierarchy for out-of-order microarchitectures.
FIG. 9 illustrates an example TMA hierarchy for core bound that splits core bound issues for each execution resource (e.g., execution stack) type of multiple types between bandwidth and latency.
FIG. 10 illustrates an example TMA hierarchy for core bound that splits core bound issues for each execution resource type of multiple types between bandwidth and other issues.
FIG. 11 illustrates an example of operations for a method of generating performance monitoring values according to examples of the disclosure.
FIG. 12 illustrates examples of architectural performance monitoring layouts of the performance event select-x (PERFEVTSELx) MSRs.
FIG. 13 illustrates an example of a logic table using certain fields of a PERFEVTSELx MSR.
FIG. 14 illustrates an example computing system.
FIG. 15 illustrates a block diagram of an example processor and/or System on a Chip (SoC) that may have one or more cores and an integrated memory controller.
FIG. 16 is a block diagram illustrating a computing system 1600 configured to implement one or more aspects of the examples described herein.
FIG. 17A illustrates examples of a parallel processor.
FIG. 17B illustrates examples of a block diagram of a partition unit.
FIG. 17C illustrates examples of a block diagram of a processing cluster within a parallel processing unit.
FIG. 17D illustrates examples of a graphics multiprocessor in which the graphics multiprocessor couples with the pipeline manager of the processing cluster.
FIGS. 18A-18C illustrate additional graphics multiprocessors, according to examples.
FIG. 19 shows a parallel compute system 1900, according to some examples.
FIGS. 20A-20B illustrate a hybrid logical/physical view of a disaggregated parallel processor, according to examples described herein.
FIG. 21A is a block diagram illustrating both an example in-order pipeline and an example register renaming, out-of-order issue/execution pipeline according to examples.
FIG. 21B is a block diagram illustrating both an example in-order architecture core and an example register renaming, out-of-order issue/execution architecture core to be included in a processor according to examples.
FIG. 22 illustrates examples of execution unit(s) circuitry, such as execution unit(s) circuitry.
FIG. 23 is a block diagram of a register architecture according to some examples.
FIG. 24 illustrates examples of an instruction format.
FIG. 25 illustrates examples of an addressing information field.
FIG. 26 illustrates examples of a first prefix.
FIGS. 27A-27D illustrate examples of how the R, X, and B fields of the first prefix are used.
FIGS. 28A-28B illustrate examples of a second prefix.
FIG. 29 illustrates examples of a third prefix.
FIGS. 30A-30B illustrate thread execution logic including an array of processing elements employed in a graphics processor core according to examples described herein.
FIG. 31 illustrates an additional execution unit, according to an example.
FIG. 32 is a block diagram illustrating a graphics processor instruction formats 3200 according to some examples.
FIG. 33 is a block diagram of another example of a graphics processor.
FIG. 34A is a block diagram illustrating a graphics processor command format according to some examples.
FIG. 34B is a block diagram illustrating a graphics processor command sequence according to an example.
FIG. 35 is a block diagram illustrating the use of a software instruction converter to convert binary instructions in a source ISA to binary instructions in a target ISA according to examples.
FIG. 36 is a block diagram illustrating an IP core development system 3600 that may be used to manufacture an integrated circuit to perform operations according to some examples.

### DETAILED DESCRIPTION

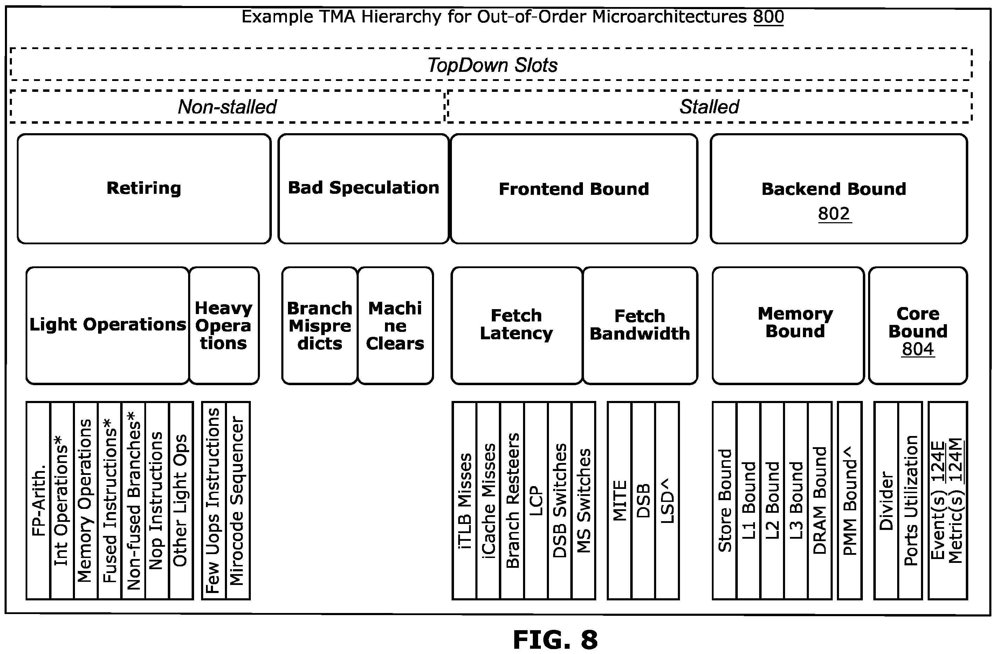

In various examples, a processor may be configured with multiple dedicated or fixed counters of a performance monitoring unit to enable counting of raw events of a highest hierarchical level of a multi-level performance monitoring methodology (also referred to herein equally as a "performance monitoring arrangement," "performance monitoring organization," and "performance monitoring system"). Although examples are applicable to any performance monitoring arrangement, a particular implementation described herein is for an Intel^{®} Top-Down Microarchitecture Analysis (TMA) methodology. In this methodology, there can be multiple levels of performance metrics that may monitor from a highest level to a lowest level of a hierarchy. In different cases there may be 2, 3, or more levels of performance metrics. For example, as shown in FIG. 8.

In one or more examples, a set of fixed counters may be provided, each associated with a particular highest level performance metric, e.g., which according to the above TMA methodology is a TMA level 1 (L1). In this way, the need for allocating programmable counters for counting such metric information or obtaining the information through a performance metric model (or machine) specific register (MSR) can be avoided.

Through these counters, a low-cost mechanism is realized to offload precious programmable counters. These fixed counters reduce multiplexing by allowing particular highest-level events to be collected alongside programmable events (which may be programmed for lower-level events). These fixed counters are very precise and fast to access, as they provide raw counts and have a size that may incur clearing on overflow at a relatively long duration, e.g., approximately 400 seconds.

In one processor implementation, it may be assumed that for each core, on each clock cycle, there are N (e.g., 4) pipeline slots available. Certain performance monitoring unit (PMU) events may be used to measure how well those pipeline slots were utilized. In this implementation, each pipeline slot available during an application's runtime can be classified into one of four L1 categories (e.g., Front End Bound, Bad Speculation, Back End Bound, or Retiring) based on occurrence of these PMU events during execution. In other cases, more or different L1 metrics may be maintained. In some cases, one of these four L1 categories may not be maintained in a fixed counter, but this L1 performance metric can be derived from the other L1 performance metrics as described further below.

In contrast to examples that provide fixed counters for a highest hierarchical level of a performance monitoring arrangement, other means of capturing TMA data have drawbacks. Without an example and with a limited number of programmable counters, a user would multiplex events across multiple runs of a workload to acquire a full profile and collect events at the lowest level of the hierarchy. TMA metrics can include dozens of events in total. This process of multiplexing can introduce problems in the profile, requiring more time to collect and at times generate inconsistent data, since each run of the workload may behave differently (e.g., based on what else is running on the system, interrupt rates, etc.). Examples may reduce or even avoid the need for multiplexing, thus improving fidelity of profiles.

Some processors may provide a performance metrics MSR (e.g., called PERF_METRICS MSR), which can provide a means to collect TMA L1 data without using programmable counters. However this counter can only provide percentage information, e.g., a percentage of slots that fell into each of the TMA L1 categories. But this PERF_METRICS interface has downsides. First, accesses to the PERF_METRICS MSR are much slower than accesses to PMU counters. While reads to programmable PMU counters can be as fast as 10 cycles (e.g., using a read operation via a read performance monitoring counter instruction (RDPMC), a read of PERF_METRICS MSR takes around 100 cycles in certain examples. On top of this time, in certain examples there is additional latency to obtain percentage information, since the processor collects raw counts per L1 metric, then divides each by the total number of slots in order to compute the percentage to be returned for this MSR. Also, the precision of the L1 metrics degrades over time, as more slots are represented by each of the 8 bits that form the percentage for each L1 metric in certain examples. To minimize the accumulation of this error, certain tools clear the PERF_METRICS MSR each time the value is consumed. This process can take about 500 cycles in certain examples, and may typically occur every millisecond, increasing the overhead of collecting the profile.

In an example, processor identification information may be accessed to denote the presence of fixed performance monitoring counters, including the fixed counters described herein. In a particular example, software or another entity may discover the fixed counters described herein via execution of a CPUID instruction:
CPUID.0xA.ECX[7:4] = 0b1111 (Fixed counter bitmap).

In one or more examples, a set of four fixed counters may be provided to count the four TMA L1 metrics. More or fewer such fixed counters may be provided in other examples to count additional or different TMA level 1 metrics. And in other examples, additional fixed counters may be provided for TMA metrics of other levels, and/or other types of metrics. In one example, the following fixed counters may be allocated to the TMA L1 performance metrics:
FIXED_CTR4 - TOPDOWN_BAD_SPECULATION (MSR 0x30D)
FIXED_CTR5 - TOPDOWN_FE_BOUND (MSR 0x30E)
FIXED_CTR6 - TOPDOWN_RETIRING (MSR 0x30F)
FIXED_CTR7 - TOPDOWN_BE_BOUND (MSR 0x310)

Note that if any single counter is not supported, in certain examples the missing metric can be computed from SLOTS - SUM(FixedCtr[7:4]), where SLOTS may be obtained from another fixed counter or via another means. In an example processor there may be additional fixed counters that count additional events including retired instructions, unhalted core clocks, unhalted time stamp counter clocks, slots, among possibly others.

In one or more examples, these counters are enabled and configured in response to a request from a given performance analysis software or other entity. In response to such request, fields in one or more configuration registers may be set. This configuration register(s) may include various bit fields for configuring these fixed counters. As examples, the bit fields may enable the counters, their overflow behavior, user/operating system (OS) mode and so forth. In one or more examples, to enable a given fixed counter, an enable indicator of a global performance control register (e.g., PERF_GLOBAL_CTRL) may be set. In addition, an overflow indicator of a global performance status register (e.g., PER_GLOBAL_STATUS) may be set to indicate overflow behavior. Also, an in-use indicator of a global performance in-use register (e.g., PERF_GLOBAL_INUSE) may be set to indicate that the counter is active. Further, an enable indicator of a processor-event based sampling enable register (e.g., PEBS_ENABLE) may be set.

Further to configure the fixed counters, writes may be made to a fixed counter configuration register (e.g., FIXED_CTR_CTRL). In an example, a configuration field may be provided in this register for each fixed counter. The configuration field may store information to identify whether the counter is enabled for a given privilege level (e.g., user or OS, or both), and whether a performance monitoring interrupt (PMI) is to be raised in response to overflow of the counter.

In some situations, a user may wish to determine the percentage of slots in each L1 category. To determine this percentage, the total number of slots can be collected by one of various means. In one example, a TOPDOWN.SLOTS event can be obtained via a fixed counter or a programmable event (as one example, this event may be: event ID 0xA4, umask 0x01). In an example for a fixed width microarchitecture, total slots may be computed by collecting total cycles and multiplying by the slots per cycle. Note that slots per cycle may vary per microarchitecture, but if the width is fixed, the width is enumerated in an ID register, e.g., CPUID.0xA.EDX[19:16] (otherwise 0, in which case the above technique may be used).

In yet another case, cycles can be collected via a fixed counter or a programmable CPU_CLK_UNHALTED.CORE event (as one example, this event may be: event ID 0x3c, umask 0x00).

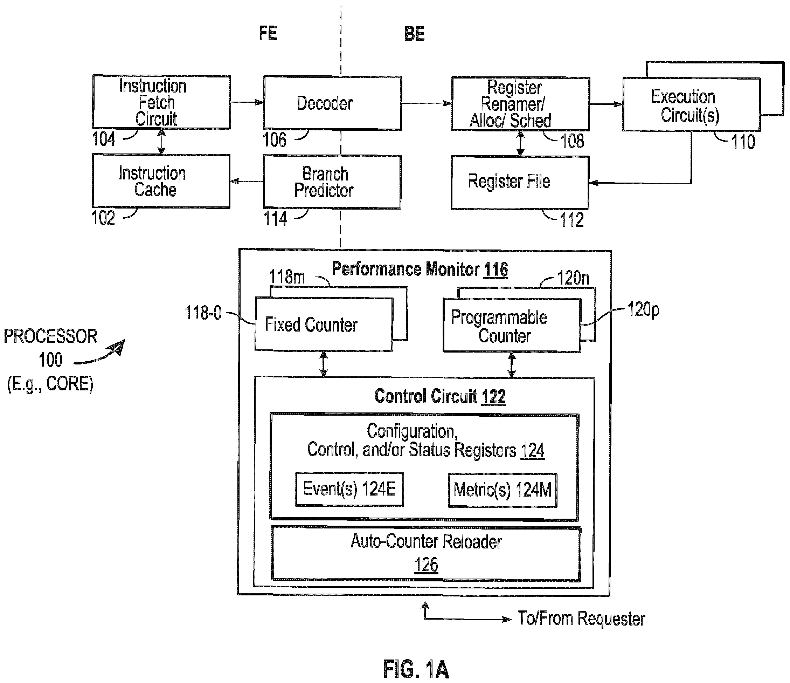

Referring now to FIG. 1A, shown is a block diagram of a portion of a processor in accordance with an example. Note that in FIG. 1A, processor 100 is shown at a high level, and illustrates a general pipeline architecture of a processing engine such as a processor core. Understand that multiple pipelines may be present in one or more cores. At the high level shown in FIG. 1A, a performance monitor 116 also is present, details of which are described below.

In FIG. 1A, a branch predictor 114 may, based upon history of branch direction, predict whether a branch is taken or not taken and provide this information to an instruction cache 102. Instruction cache 102 is coupled to an instruction fetch circuit 104. Instruction fetch circuit 104 may fetch instructions, either from instruction cache 102 or from another storage. In turn, fetched instructions, which at this point may be in the form of macro-instructions, are provided to a decoder 106. In examples, decoder 106 may decode each macro-instruction into one or more micro-operations.

Still with reference to FIG. 1A, decoder 106 provides the decoded instructions to a register renamer 108 which, as shown, also may perform allocation (e.g., resource allocation) and scheduling operations to schedule incoming instructions for execution within an execution circuit 110. Execution circuit 110 may include multiple execution units such as integer and floating-point units to perform operations on incoming source operands. Results are provided via a write back path to a register file 112.

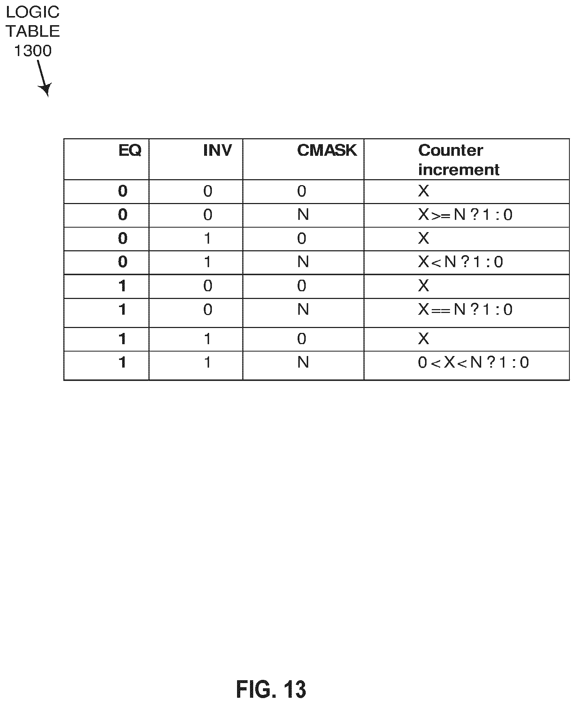

As further shown in FIG. 1A, performance monitor 116 is coupled to both the front end (FE) and back end (BE) of processor 100. Understand that in one or more implementations performance monitor 116 may be a distributed hardware circuit that includes various storages, e.g., registers or other counters, to perform counting of various events or other operations, under control of a control circuit 122. As shown control circuit may include (or be coupled to) a set of registers 124, which may include configuration, control, and/or status registers that may be used for enabling and/or configuring fixed counters described herein (e.g., according to the logic table 1300 in FIG. 13). In certain examples, the configuration, control, and/or status registers 124 includes one or more configuration, control, and/or status registers for event(s) 124E and/or one or more configuration, control, and/or status registers for metric(s) 124M.

In the high level shown in FIG. 1A, performance monitor 116 includes a set of fixed counters 118 (e.g., 118-0 to 118m) and a set of programmable counters 120 (e.g., 120n to 120p). Note the counters may be external to the performance monitor 116. In certain examples, at least some fixed counters 118 may be provided for maintaining TMA level 1 counts as described herein. Although examples are not limited in this regard, in one or more examples there may be eight fixed counters, including the four TMA level 1 counters and four additional counters that may count other events such as described above. In one or more examples a separate set of fixed and programmable counters may be provided per core. And while in certain figures the various counters are generically shown in a performance monitor, in some implementations, the counters may reside in a bus cluster unit or other location.

In different examples, there may be different numbers of programmable counters. In one example, there may be eight programmable counters. In certain examples, since there are fixed counters provided for TMA level 1 metrics, there is no need to allocate any of programmable counters 120 for these metrics, reducing pressure on these programmable counters. Understand while shown at this high level in the example of FIG. 1A, many variations and alternatives are possible.

In some examples, a last branch record (LBR) insert and/or remove event is countable (Event Select E4H, Umask 01H). For example, this event counts when an LBR entry is inserted or removed. In certain examples, inserted means an actual LBR buffer update has occurred, considering LBR configuration and filtering. In certain examples, an LBR entry is removed when a RET instruction is retired in LBR Call-stack mode. Software may use this event in usages like profile-guided optimization (PGO) for profiling collections across processors and in virtualized environments.

In some examples, processors that support performance metrics may also support clearing them on read, e.g., if a MSR PERF_CAPABILITIES.RDPMC_CLEAR_METRICS[bit 19] is set. In certain examples, RDMPC is a read performance monitoring instruction which reads the contents of a particular counter. In some examples, the counter is referenced by contents of a register. In some examples, the register is implicit (e.g., not explicit).

When a MSR FIXED_CTR_CTRL.METRICS_CLEAR_EN[bit 14] is set, an RDPMC instruction for ERF_METRICS -that is, when ECX=0x2000'0000 - clears PERF _METRICS-related resources as well as fixed-function performance monitoring counter 3 after the read is performed. Read-only behavior is maintained when METRICS_CLEAR_EN is clear.

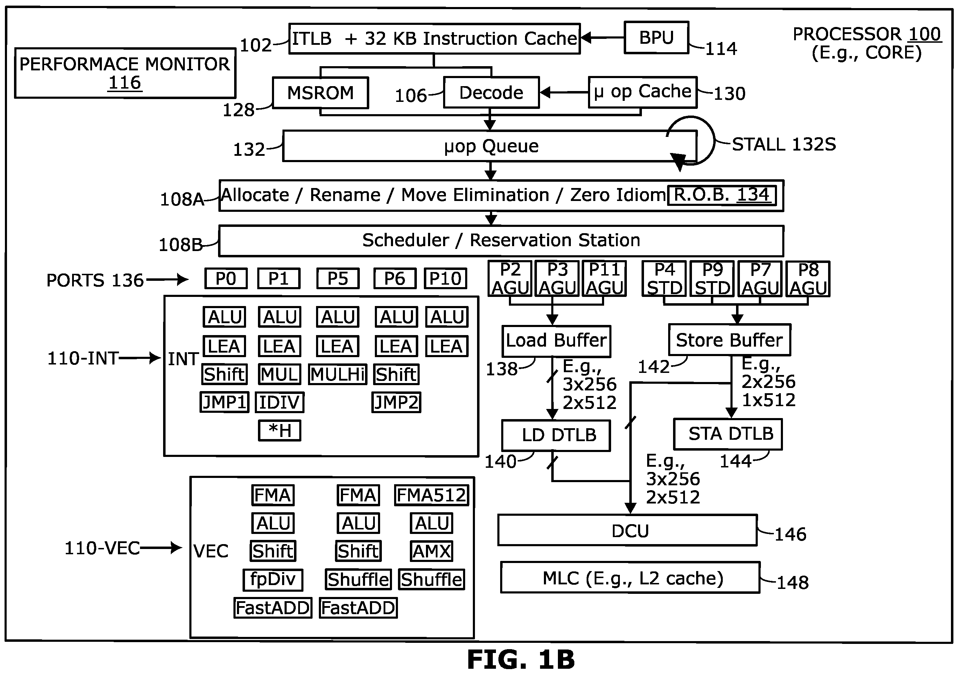

FIG. 1B illustrates a more detailed block diagram of a portion of a processor 100 with a performance monitor 116 (e.g., performance monitor circuit) according to some examples. In certain examples, the performance monitor 116 (e.g., performance monitor circuit) includes coupling(s) (e.g., electrical connections) to one or more of the components illustrated in FIG. 1B, for example, to allow for monitoring of the performance of the one or more components (e.g., monitoring of the performance of execution resources as disclosed herein).

Depicted processor 100 (e.g., processor core) includes an instruction translation lookaside buffer (iTLB) 102 (e.g., to store a corresponding virtual-to-physical address translation for instructions) and (e.g., 32KB) instruction cache (e.g., to store instruction data (e.g., micro-operations) corresponding to a particular instruction address). In certain examples, processor 100 includes a branch prediction unit (BPU) 114, e.g., to predict an outcome (e.g., taken or not-taken) of upcoming conditional branches (e.g., "if-else" statement) and/or causes the speculative execution of the instructions in the expected outcome (e.g., path).

In certain examples, a decoder 106 (e.g., decoder circuit) is to decode certain (e.g., macro) instructions into a corresponding set of one or more micro-operations without utilizing a microcode sequencer (MS) (e.g., MS read only memory (MSROM) 128) (e.g., a microcode sequencer separate from any decoder circuit) and/or decode other (e.g., macro) instructions (e.g., complex instruction set computer (CISC) instructions) into a corresponding set of one or more micro-operations by utilizing the microcode sequencer 128 (e.g., the microcode sequencer separate from any decoder circuit). In one example, decoder 106 is to output a certain number of micro-operation per cycle (e.g., one micro-operation per cycle and/or between one and four micro-operations per cycle). In certain examples, a "micro-coded" instruction generally refers to an instruction where a decode cluster (e.g., set of decoders) requests the microcode sequencer 128 to load the corresponding set of one or more (e.g., plurality of) micro-operations (µops) from the microcode sequencer memory (e.g., read-only memory (ROM)) into the decode pipeline (e.g., into the corresponding instruction decode queue 132), e.g., instead of producing that instruction's set of one or more micro-operations directly by a decoder. For example, to implement some (e.g., complex) (e.g., x86) instructions, a microcode sequencer 128 is used to divide the instruction into a sequence of smaller (e.g., micro) operations (also referred to as micro-ops or µops). In certain examples, processor 100 includes a micro-operations cache 130, e.g., shared between two threads and/or storing pointers to the microcode sequencer ROM. In certain examples, processor 100 includes a micro-operations queue 132, e.g., to store (e.g., decoded) instructions (e.g., corresponding micro-operation(s) for an instruction) between the front end (e.g., components 102, 106, 114, 128, 130, and/or 132) and the back end (e.g., starting with the allocation circuit 108A).

In certain examples, the allocation circuit 108A includes a re-order buffer (R.O.B.) 134, e.g., to queue instructions (e.g., corresponding micro-operations) in program order that tracks the status of the instructions currently in the instruction window. In certain examples, instructions are enqueued in program order, e.g., after register renaming. In certain examples, these instructions are in various states of execution as the instructions in the window are selected for execution. In certain examples, completed instructions leave the reorder buffer in program order when committed. In certain examples, the R.O.B. 134 includes one or more (e.g., performance monitoring) counters, e.g., for event(s) and/or metric(s) as discussed herein. In certain examples, if the allocation circuit 108A is not available, it causes a stall 132S (e.g., the micro-operation stays within the micro-operation queue 132 until it is accepted into the allocation circuit 108A).

In certain examples, the scheduler/reservation station 108B is to schedule incoming instructions for execution on a port of ports 136, e.g., a port(s) for integer execution circuits 110-INT (e.g., integer arithmetic and logic unit (ALU), Load Effective Address (LEA), multiply (MUL), multiply high bits (MULHi), shift, jump (JMP), and/or integer divide (IDIV)) and/or a port(s) for vector execution circuits 110-VEC (e.g., including vector ALU, fused multiply accumulate (FMA) execution circuits, vector shift, floating-point (FP) divide, fast addition (fastADD), and/or Advanced Matrix Extensions (AMX)). In certain examples, port(s) 136 are included for address generation unit(s) (AGU), e.g., load port(s) coupled to load buffer 138 and/or load data TLB 140, and/or store data (STD) and/or AGU, e.g., store port(s) coupled to store buffer 142, store address (STA), dataTLB 144. In certain examples, a data cache unit 146 and/or medium level cache 148 (e.g., L2 cache) are included.

In certain examples, scheduler 108B is to send a micro-operation to a port 136 for execution in a corresponding execution circuit 110, e.g., a first set of execution circuits of a first type (e.g., 110-INT) and a second set of execution circuits of a second type (e.g., 110-VEC) different than the first type. In certain examples, the scheduler 108B is a combined scheduler, e.g., for integer and vector (e.g., and floating-point). In other examples, separate schedulers are included for each type of execution circuit.

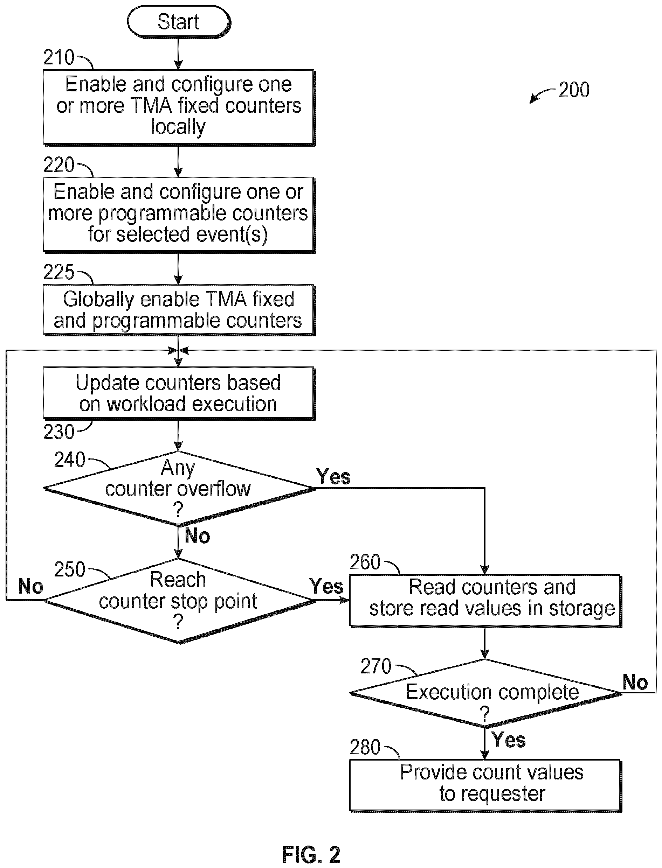

Referring now to FIG. 2, shown is a flow diagram of a method 200 in accordance with an example. More specifically as shown in FIG. 2, method 200 is a method for controlling operation of one or more fixed and programmable counters of a performance monitor (e.g., of the performance monitor 116 of FIGS. 1A or 1B). In an example, method 200 may be performed at least in part by hardware circuitry such as a control circuit 122 of the performance monitor. In other cases, method 200 may be performed by hardware circuitry, in combination with firmware and/or software.

As shown in FIG. 2, method 200 begins by enabling and configuring one or more TMA fixed counters at block 210. In an example, these counters may be enabled in response to a write to one or more configuration registers (e.g., registers 124 in FIG. 1A). In this way, individual counters can be enabled and configured for a given mode of operation. For example, in one use case a performance monitoring tool may issue a request that causes the configuration register write.

Next at block 220 one or more programmable counters can be enabled and configured for a selected event or events. For example, additional configuration register writes may be performed to cause different ones of a set of programmable counters to be associated with given events. Then at block 225 both the fixed and programmable counters (e.g., 120n to 120p in FIG. 2) can be globally enabled.

At this point, the various counters of a performance monitoring unit are configured for normal operation. As such, a given application or other program of interest may begin execution. During such workload execution, at block 230 various counters may be updated based on this workload execution. For example, events that occur during processor execution and are associated with a particular top-down level 1 metric may cause updating of an associated fixed counter.

During workload execution, it may be determined whether any counter overflows at diamond 240. If so, control passes to block 260 where at least this counter, and possibly all counters, may be read and their values stored in a storage such as a performance log file (which may be stored in a system memory, e.g., a dynamic random-access memory (DRAM)).

Next control passes to diamond 270 to determine whether execution of the application (or a desired amount of application execution for performance monitoring) is complete. If not, control passes back to block 230. Otherwise when this execution has completed, control passes to block 280 where the count values may be provided to a requester. For example, a log file may be provided in a form readable by the user to identify various fixed and programmable counters and corresponding count values or other information present in each of the counters.

Still with reference to FIG. 2, if instead at diamond 240 it is not determined that any counter has overflowed, control may pass to block 250 where it can be determined whether a given counter has reached a stop point. For example, some counters may be programmed to count until a given (e.g., threshold) value (e.g., counter mask) is reached. Upon such an occurrence, control passes to block 260, discussed above. Understand while shown at this high level in the example of FIG. 2, many variations and alternatives are possible. For example in other cases, one or more of the fixed counters can be read in response to a read performance monitoring counter instruction (e.g., RDPMC), which can be executed in a small number of cycles (e.g., 10).

### PRECISE AND NON-PRECISE EVENT BASED SAMPLING (PEBS AND NPEBS)

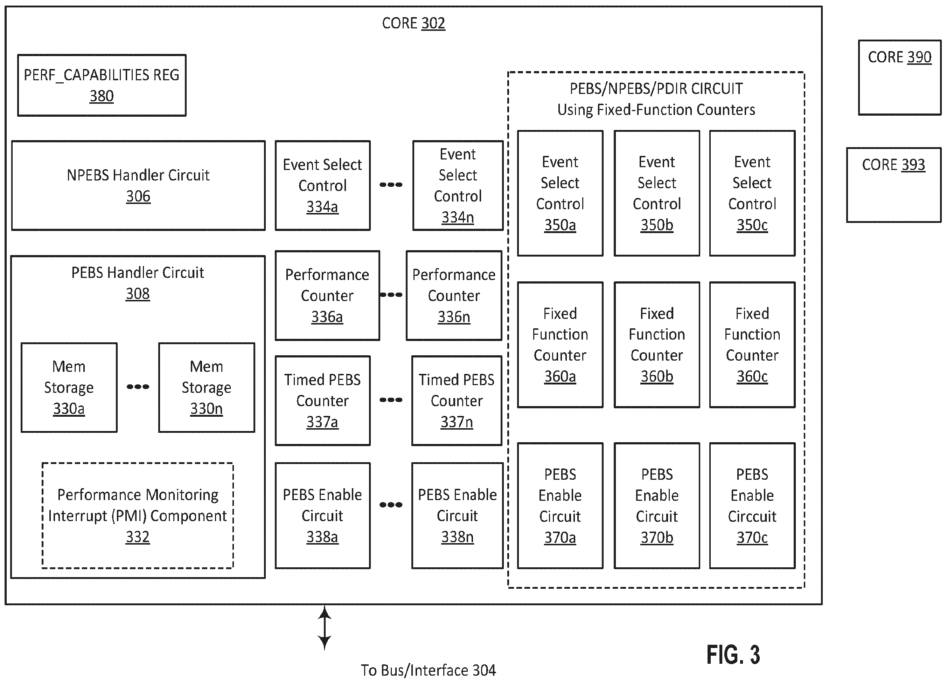

The performance monitoring capability employed in some examples may be built upon three sets of event counters: fixed function counters, general purpose counters, and timed PEBS counters (e.g., timed PEBS counters 337a-337n in FIG. 3). In examples, three fixed function counters may be defined and implemented to count instructions retired, reference clocks, and core clocks. The general-purpose counters and timed PEBS counters may be defined and implemented as described below. In examples, any number of general-purpose counters may each be associated with a corresponding timed PEBS counter. In examples, any number of timed PEBS counters may be available for use in connection with monitoring events (e.g., Load STLB hit) that may not be defined and/or selectable as PEBS events according to a previous PEBS architecture.

As used herein, a precise event is a performance event that is linked to a specific instruction or micro-operation in an instruction trace and occurs when that instruction or micro-operation retires. Such precise events may include, but are not limited to, instructions retired, branch instructions retired, cache references, or cache misses, to name just a few examples. On the other hand, a non-precise event is a performance event that is either not linked to a specific instruction or micro-operation in an instruction trace or can occur speculatively even when the instruction or micro-operation does not retire. By way of example, a non-precise event may include, but is not limited to, reference clock ticks, core clock ticks, cycles when interrupts are masked, to name just a few examples.

In some examples, performance of a processing device is monitored to manage events and measure their impact on performance. In some examples, the processing device tracks precise and non-precise events and stores architectural and micro-architectural metadata regarding the events in a non-intrusive manner utilizing a mechanism on the processing device without the intervention of a performance monitoring interrupt (PMI).

The operation of a processing device may include the occurrences of a plurality of events that monitor performance of the system. An event may include any operation, occurrence, or action in a processor. In examples, the event is a response to a given instruction and data stream in the processing device. The events may be associated with architectural metadata including state information of the processing device including, but not limited to, an instruction pointer, a time stamp counter, and register state. The events may also be generic events (e.g., INST_RETIRED) that may be tagged with a performance cost.

In examples, a performance counter is configured to count one or more types of events. While the counter is incrementing or decrementing, software reads the counter at selected intervals to determine the number of events that have been counted between the intervals. The counter may be implemented in multiple ways. In examples, the counter decrements from a positive starting value, overflowing when the count reaches zero. In other examples, the counter starts at a zero value and increments the count of occurrences until it overflows at a specified value. In other examples, the counter starts at a negative value, and increments until it overflows upon reaching zero. The performance counter may generate a performance record or a performance monitoring interrupt (PMI) when the counter overflows. To trigger an overflow, the counter may be preset to a modulus value that may cause the counter to overflow after a specific number of events have been counted, which generates either a PMI or a performance record, such as a precise event-based sampling (PEBS) record.

A performance record, as further described below, may include a performance cost or penalty metric that would help to rank criticality of events to performance. In examples, the cost may be measured in the retirement push-out time induced by the event.

Examples may include new (e.g., not defined and/or selectable as PEBS events according to a previous PEBS architecture) precise events (e.g., for STLB-hit retired load/stores, BR_MISP_RETIRED.PLUS_ONE (fires on the first instruction after a branch misprediction) and/or upgrading events (MACHINE_CLEARS) to precise.

### TRACKING PRECISE EVENTS

There are several types of mechanisms for monitoring and managing various events. One type is a PEBS mechanism, which functions to monitor and manage precise events. A precise event is a performance event that is linked to a specific instruction or micro-operation in an instruction trace and occurs when that instruction or micro-operation retires. Such precise events may include, but are not limited to, instructions retired, branch instructions retired, cache references, or cache misses, to name just a few examples. The PEBS mechanism may include several components, such as an event select (ES) control (e.g., ES control 350a-350c in FIG. 3), a performance counter, a PEBS enable circuit and a PEBS handler circuit. The ES control may be programmed with an event identifier, which causes a performance counter corresponding to the ES control to start tracking (e.g., counting occurrences of) the programmed event corresponding to the event identifier.

Examples may also include a PEBS enable circuit of the processing device that controls when a PEBS record is generated. When the PEBS enable circuit is activated, a PEBS record is stored in a memory of the PEBS handler circuit upon overflow of the performance counter corresponding to the PEBS enable circuit. In examples, a user (e.g., software) may activate or set the PEBS enable circuit. A PEBS record may include architectural metadata of a state of the system upon the overflow of the performance counter. Such architectural metadata may include, but is not limited to, an Instruction Pointer (IP), Time Stamp Counter (TSC) and register state. As such, the PEBS record not only allows the location of the precise events in the instruction trace to be accurately profiled, but also provides additional information for use in software optimization, hardware optimization, performance tuning, etc.

A PEBS record may also include micro-architectural information that may measure the performance cost of events. For example, in the case of MEM_LOAD_RETIRED.L3_MISS (demand load accesses missing the L3 cache), the PEBS record may include a performance cost or penalty metric that would help to rank criticality of misses at different Ips.

### TRACKING NON-PRECISE EVENTS

Examples may further utilize the PEBS mechanism to track and manage non-precise events of a processing device. A non-precise event is a performance event that is either not linked to a specific instruction or micro-operation in an instruction trace or can occur speculatively even when the instruction or micro-operation does not retire. By way of example, a non-precise event may include, but is not limited to, reference clock ticks, core clock ticks, cycles when interrupts are masked, and so on.

Some examples introduce a non-precise event-based sampling (NPEBS) handler circuit of the processing device that allows an NPEBS handler circuit to generate a NPEBS record for programmed non-precise events and stores this NPEBS record for the non-precise event in the PEBS memory buffer of the PEBS handler circuit.

In examples, the NPEBS record shares the same format as the PEBS record. In other examples, the NPEBS record is formatted differently from the PEBS record.

The PEBS handler circuit and the NPEBS handler circuit may share some circuitry. The NPEBS handler circuit may use the resources of the PEBS handler circuit, differing from the PEBS handler circuit only in name. In an example, when the ES control is programmed with a non-precise event identifier, the performance counter associated with the ES control and the PEBS enable circuit tracks the programmed non-precise event. In examples, the NPEBS handler circuit is coupled to the PEBS enable circuit, which is coupled to the performance counter such that when the performance counter overflows, the PEBS enable circuit causes the NPEBS handler circuit to generate the NPEBS record for the non-precise event. Accordingly, the architectural metadata associated with the non-precise event is captured without requiring a PMI.

In examples, the NPEBS handler circuit controls timing of the generation of the NPEBS record for the non-precise event. In examples, the NPEBS record for the non-precise event is generated immediately upon occurrence of the overflow of the performance counter tracking the non-precise event. In other examples, the NPEBS record for the non-precise event is generated immediately after the occurrence of the overflow of the performance counter tracking the non-precise events (e.g., upon execution of next subsequent instruction). In examples, the NPEBS handler circuit stores the NPEBS record for the non-precise event in memory storage of the NPEBS handler circuit.

Some examples include compact circuits, and therefore are implemented as an integral part of a wide range of processing units without incurring a significant increase of cost and power consumption. Some examples are programmable circuit logics and are used to track and manage different types of non-precise events on the same circuit logic. The NPEBS handler circuit is also extensible to track multiple processing units. The NPEBS handler circuit may be shared by a plurality of applications running on a same processor and managed by an operating system (OS) or a virtual machine as a shared resource.

### EXEMPLARY PROCESSOR TO GENERATE AND STORE PEBS AND NPEBS RECORDS

FIG. 3 is a block diagram illustrating a processor to generate and store PEBS and NPEBS records according to examples. Any or all of the blocks shown in FIG. 3 may represent circuitry and/or logic in a performance management unit (PMU) of the processor. In some examples, the PMU supports timed PEBS and a hybrid enumeration architecture via CPUID.

A CPUID leaf enhances enumeration of PMU capabilities. In particular, in some examples, CPUID sub-leafing accommodates future PMU extensions, hybrid resources are exposed per core-type, a bitmap hybrid enumeration of general counters availability is used, a bitmap hybrid enumeration of fixed counters availability is used, and new architectural PMU capabilities can be exposed via CPUID.

In FIG. 3, a core 302 of a multicore processor (e.g., having one or more performance core(s) and one or more efficiency core(s) - other cores 390 and 393 are shown and they may be either performance or efficiency) includes an NPEBS handler circuit 306 and a PEBS handler circuit 308 (e.g., performance monitor 116) having one or more memory storages 330a to 330n (which may be implemented as physical memory storage such as a buffer). The PEBS handler circuit 308 may also include a performance monitoring interrupt (PMI) component 332 as described above. In addition, the processor core 302 may include one or more event select (ES) controls 334a to 334n corresponding to one or more general purpose performance counters 336a - 336n and further corresponding to one or more PEBS enable circuits 338a - 338n (details of which are described above). In some implementations, PEBS enable circuits 338a- 338n may be located in a single control register (e.g., machine specific register or MSR). In some examples, the performance core(s) and efficiency core(s) share an instruction set architecture. In some examples, the performance core(s) and efficiency core(s) have different instruction set architectures.

In addition, in the example shown in FIG. 3, PEBS, NPEBS, and Precise Distribution of Instructions Retired (PDIR) operations are applied using fixed function counters 360a-360c. In examples, the three fixed function counters 360a-360c are defined and implemented to count instructions retired, reference clocks, and core clocks. It will be appreciated, however, that the underlying principles of the invention are not limited to any particular number of fixed function counters or any particular fixed function counter implementation.

As mentioned, the processor core 302 may execute a stream of instructions that may be embedded with markers for events that may be placed on a bus/interconnect fabric 304. The execution of a segment of instructions may constitute one or more non-precise events. A non-precise event is a performance event that is either not linked to a specific instruction or micro-operation in an instruction trace or can occur speculatively when the instruction or micro-operation does not retire. Such non-precise events may include, but are not limited to, reference clocks, core clocks and cycles, to name a few examples. In examples, the non-precise event is generated by the processor core 302. In examples, the non-precise event is generated outside the processor core 302 and communicated to the processor via the bus/interconnect fabric 304.

In examples, event select (ES) controls 350a-c shown in FIG. 3 perform similar operations to ES controls 334a-c described above but correspond to the fixed function performance counters 360a-c and further correspond to PEBS enable circuits 370a-c associated with the fixed function counters 360a-c. In examples, the PEBS enable circuits 338a- 338n and 370a-c are located in a single control register.

In one example, the programming of the ES controls 350a-c causes a performance counter 360a-c corresponding to the programmed ES control to track occurrences of the particular programmed non-precise/precise event. In some examples, any event that is not defined as a precise event is considered a non-precise event. In one example, the ES control 350a-c is programmed by an executing application. In another example, a user programs the ES control 350a-c with the non-precise/precise event identifier.

When the ES control 350a-c is programmed with an event identifier, the performance counter 360a-c corresponding to the ES control 350a-c is incremented or decremented upon each occurrence of the programmed event. The PEBS enable circuit 370a-c corresponding to the ES control 350a-c and the fixed function performance counter 360a-c may be set (e.g., activated, flag set, bit set to 3, etc.) to generate a PEBS record upon overflow of the fixed function performance counter 360a-c or, if the counter is decremented, upon the fixed function performance counter 360a-c reaching a value of 0. In one example, PEBS enable bits are set to enable the PEBS handler circuit 308 to generate a PEBS record upon overflow or zero value of the fixed function performance counter 360a-c that is counting the event. As discussed above, a PEBS record includes an architectural metadata of a state of the system upon the overflow or zero value of the fixed function performance counter 360a-c. The architectural metadata may include, but is not limited to, an IP, TSC, or register state, for example.

In one example, the NPEBS handler circuit 306 is coupled to the PEBS enable circuit 370a-c such that when the fixed function performance counter 360a-c overflows or reaches a zero value, the NPEBS handler circuit 306 causes the PEBS enable circuit 370a-c to generate the PEBS record for the event. In some examples, the NPEBS handler circuit 306 controls timing of generation of the PEBS record for the event. For example, in one example, the NPEBS handler circuit 306 causes the PEBS enable circuit 370a-c to generate the PEBS record for the event immediately upon occurrence of the overflow or zero value of the performance counter 360a-c, tracking and counting the programmed event.

In another example, the NPEBS handler circuit 306 causes the PEBS enable circuit 370a-c to generate the PEBS record for the event immediately after the occurrence of the overflow or zero value of the fixed function performance counter 360a-c, tracking and counting the programmed event. In this example, the PEBS record is generated after the next instruction that retires (i.e., after completion of the next instruction in the instruction trace that triggered the fixed function performance counter 360a-c to overflow or run to zero). In one example, the PEBS record generated for the event by PEBS handler circuit 308 is stored in memory storage 330 of the PEBS handler circuit 308. Accordingly, the architectural metadata associated with the event may be captured without utilizing a PMI.

In one example, the PMI component 332 collects the PEBS records stored in the memory storage(s) 330a- 330n of PEBS handler circuit 308. The PMI component 332 may immediately collect the PEBS records stored in the memory storage 330a- 330n. In another example, the PMI component 332 is delayed in collecting the PEBS records in memory storage 330a-330n at once. The interface may be provided as an MSR.

Applying PEBS/NPEBS/PDIR to the fixed function counters 360a-c provides similar benefits as adding those features to the general-purpose counters 336a-n, but allows for the freedom to use the general-purpose counters for other activities. These and other benefits and additional features of the examples of the invention are discussed below.

A performance capabilities control register 380 (e.g., PERF_CAPABILITIES MSR) enhances enumeration for PMU non-architectural features. For hybrid parts, this register 380 includes a per-field attributed to indicated whether the reporting is common or hybrid across core-types. An example format is as follows.

| **Field Name** | **Bits** | **Type** |
|---|---|---|
| LBR FMT | 5:0 | Common |
| PEBS Trap | 6 | Common |
| PEBS Arch Regs | 7 | Common |
| PEBS FMT | 11:8 | Common |
| Freeze while SMM | 12 | Common |
| Full Write | 13 | Common |
| PEBS Baseline | 14 | Common |
| Perf Metrics Available | 15 | Hybrid |
| PEBS Output PT Available | 16 | Hybrid |
| PEBS Timing Info | 17 | Common |
| TSX Store Address Register | 18 | Hybrid |
| RDPMC Clear Metrics | 19 | Hybrid |

### EXEMPLARY PROCESS FOR GENERATING AND STORING PEBS RECORDS

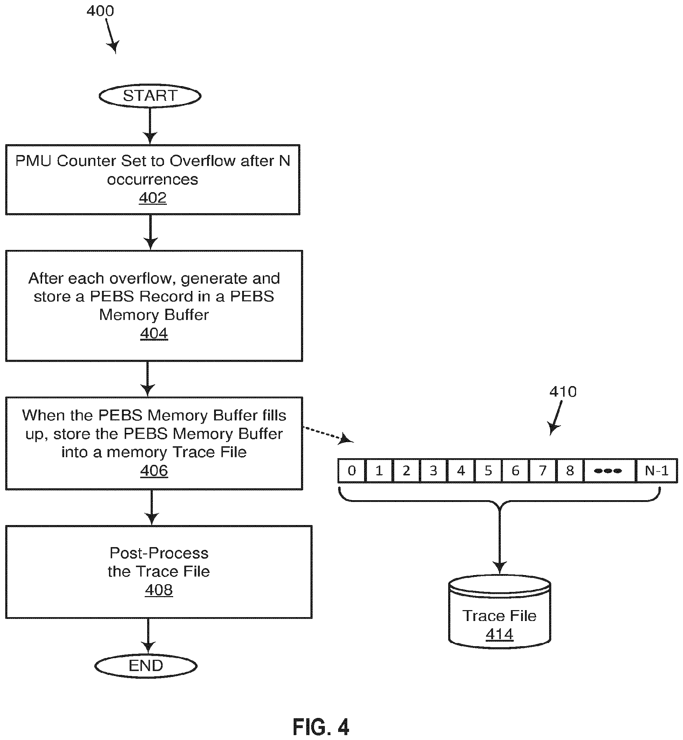

FIG. 4 illustrates an example of operations 400 of a process to generate and store PEBS records in a memory buffer, and to store the memory buffer to a PEBS trace file. After starting, at 402, a PMU counter is set to -N. Starting at a negative value, the PMU counter in this example is to be incremented every time a PEBS record is generated, until it reaches zero (0). In an alternate example, not shown, the PMU counter is set to +N, and decremented every time a PEBS record is generated. At 404, N number of PEBS records are generated and stored in a PEBS memory buffer. At 406, the N PEBS records 410 are stored in a PEBS trace file 414. This step is also illustrated as 230, showing N PEBS records being stored in a PEBS trace file 414. At 408, the PEBS trace file is post-processed, after which the process ends.

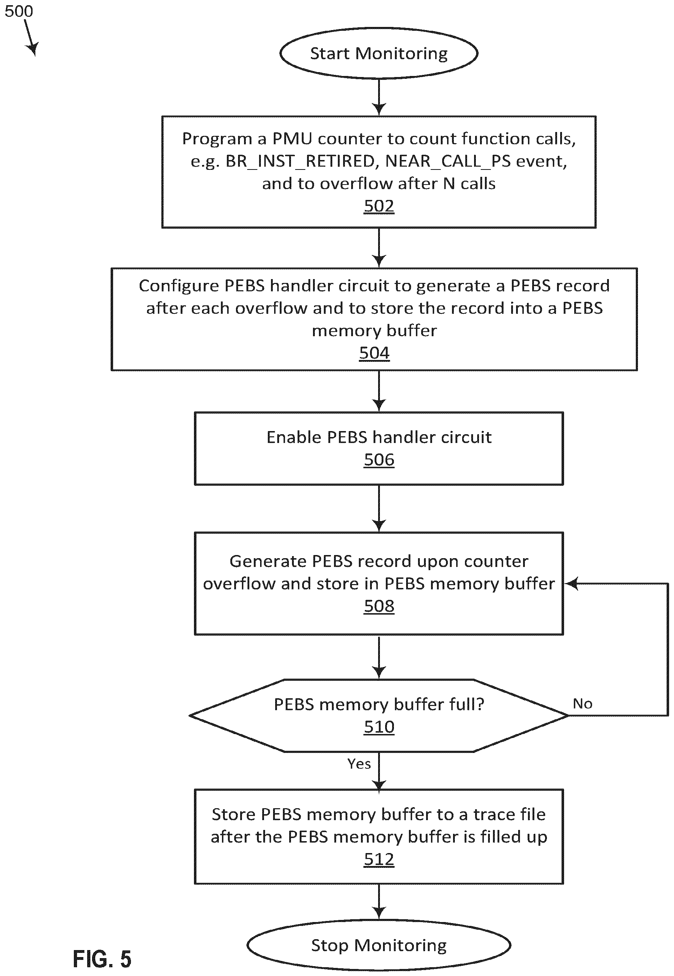

FIG. 5 illustrates an example of operations 500 of a process of programming a PEBS handler circuit to monitor processor performance and generate a PEBS record to be stored in a PEBS memory buffer, and then stored in a PEBS trace file. After starting, at 502 a PMU counter is programmed to count function calls, such as BR_INST_RETIRED and NEAR_CALL_PS event, and to overflow after N calls. At 504, the PEBS handler circuit is programmed to generate, after each overflow, a PEBS record configured to contain architectural metadata including state information of the processor including, but not limited to, an instruction pointer, a time stamp counter, and register state, as well as performance cost. Configuration of the processor information monitored by PEBS and stored in a PEBS data record. At 506, a PEBS handler circuit is enabled. At 508, a PEBS record is generated upon counter overflow, and stored in PEBS memory buffer. At 510, a check if the PEBS memory buffer is full is performed, and if no, return to block 508, and if yes, proceed to block 512. At block 512, after the PEBS memory (e.g., buffer) has been filled up, the PEBS memory contents are stored to a PEBS trace file. The process then ends.

In some examples, architectural performance monitoring a range for the counters' MSRs in the 19xxH address range. This MSR range allows for at least scaling the number of general-purpose and fixed-function counters beyond the quantities in current products. Additionally, it banks registers of the same counter closer to each other.

In some examples, legacy and new counters, e.g., those enumerated in CPUID.(EAX = 23H, ECX = 01H), will be supported in this address range.

| **Register** | **General Counter n** | **Fixed Counter m** |
|---|---|---|
| Counter | IA32_PMC_GPn_CTR | IA32_PMC_FXm_CTR |
| Event-Select | IA32_PMC_GPn_CFG_A | N/A |
| Event-Select Extended | IA32_PMC_GPn_CFG_B | IA32_PMC_FXm_CFG_B |
| Event-Select Extended (aka_EXT) | IA32_PMC_GPn_CFG_B | IA32_PMC_FXm_CFG_B |
| Reload Config | IA32_PMC_GPn_CFG_C | IA32_PMC_FXm_CFG_C |

For general-purpose counters (e.g., performance counters 336 and/or programmable counters 120), the PMC_GPn_CTR MSR holds the counter value with full-width write support1. The MSR address is 1260H + 4 * n. For example, the PMC_GP1_CTR MSR has MSR address 1264H.

The aliased register for legacy counters is in MSR address 4C1H + n. The PMC_GPn_CFG_A MSR is the Performance Event Select Register at address 1261H + 4 * n. For example, PMC_GP1_CFG_A has MSR address 1265H. The aliased register for legacy counters is in MSR address 186H + n.

For fixed-function counters, the PMC_FXm_CTR MSR holds the counter value. The MSR address is 1980H + 4* m. For example, IXED_CTR1 has MSR address 1984H. The aliased register for legacy counters is in MSR address 309H + m. The available general-purpose and fixed-function counters are reported by CPUID.(EAX = 23H, ECX = 01H):EAX and CPUID.(EAX = 23H, ECX = 01H):EBX, respectively.

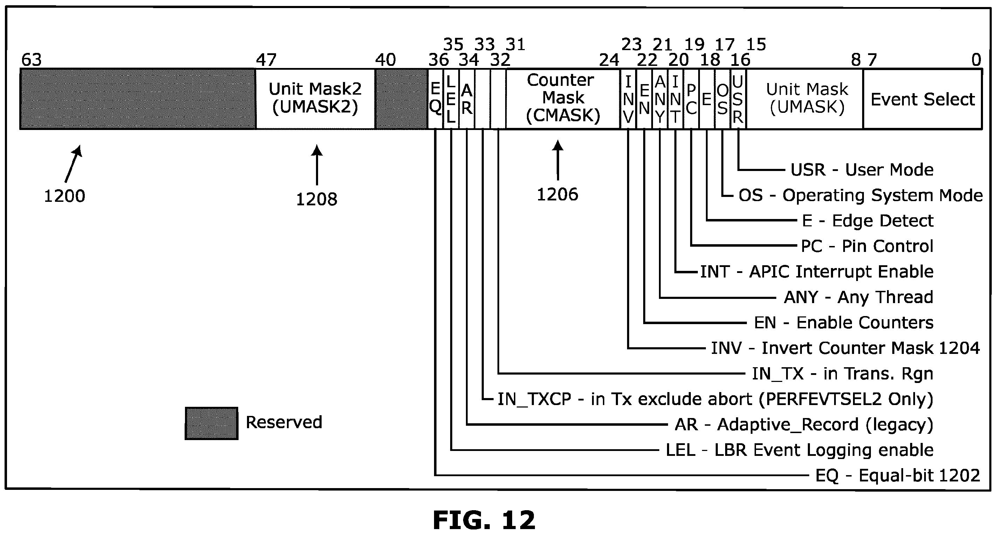

Architectural performance monitoring may support a Unit Mask 2 (UMASK2) field in the PERFEVTSELx MSRs if enumerated by CPUID.(EAX=23H, ECX=0):EBX[bit 0]. UMASK2 field (e.g., bits 40 through 47) qualify the condition that the selected event logic unit detects. Valid UMASK2 values for each event logic unit are specific to the unit. The new UMASK2 field may also be used in conjunction with UMASK. An example architectural performance monitoring layout of the PERFEVTSELx MSRs (e.g., Unit Mask 2 (UMASK2) field 1208) is shown in FIG. 12.

Automatic counter reloader logic (e.g., automatic counter reloader logic 126 or part of PEBS handler circuit 308) (circuitry, firmware, a combination thereof, etc.) provides a means for Auto Counter Reload (ACR) for software to specify that, for each supported counter, the performance monitor hardware should automatically reload the counter to a specified initial value upon overflow of chosen counters. This mechanism enables software to sample based on the relative rate of two (or more) events, such that a sample (PMI or PEBS) is taken only if the rate of one event exceeds some threshold relative to the rate of another event. Common examples may include sampling only when IPC (instructions per cycle) drops below a threshold or MPKI (mispredicts per 1000 instructions) exceeds a threshold. In some examples, the threshold is user configurable.

### ACR discovery and interface

CPUID.(EAX=23H, ECX=2):EAX indicates which programmable counters support ACR. If a programmable counter (PMCx) supports ACR, an associated PMCx_RELOAD_CFG MSR and PERFEVTSELx_EXT MSR are supported. Similarly, CPUID.(EAX=23H, ECX=2):EBX indicates which fixed counters support ACR, and each fixed counter with ACR support has a corresponding FIXED_CTRx_RELOAD_CFG MSR andFIXED_CTRx_CTRL_EXT MSR.

For a given counter PMCx, bit fields in PMCx_RELOAD_CFG may have the following meaning:
- If PMCi=1 and PMCi_RELOAD_CFG.PREVENT_RELOAD=0, load counter PMCx with the reload value in PERFEVTSELx_EXT[31:0] upon overflow of PMCi.
- If FIXED_CTRi=1 and FIXED_CTRi_RELOAD_CFG.PREVENT_RELOAD=0, load counter PMCx with the reload value in PERFEVTSELx_EXT[31:0] upon overflow of FIXED_CTRi.
- If PREVENT_RELOAD=1, do not allow any counters to reload based on the overflow of PMCx. Overrides PMCx=1 set in any *_RELOAD_CFG MSR.

In some examples, ACR will not reload PMCx if counters are frozen (PERF_GLOBAL_STATUS.COUNTERS_FROZEN=1) or if PMCx is already overflowed (PERF_GLOBAL_STATUS.PMCx_OVF=1). If a PMI or PEBS is taken due to a counter overflow, the PMI ISR or PEBS record can record the unmodified counter value before reloading the counter. In race conditions, where PMCx overflows in the same cycle as a counter configured to reload PMCx on overflow, PMCx will not be reloaded, and PMCx_OVF will be set.

For counters that reload themselves (e.g., PMCx_RELOAD_CFG.PMCx=1), the overflow bit (PERF_GLOBAL_STATUS.PMCx_OVF) will never be set. Instead, upon overflow, the counter will be immediately reloaded; thus, it is never in an overflowed state. There is an exception associated with PEBS.

The behavior is similar for reloading of fixed counters. For FIXED_CTRx, the reload value is stored in FIXED_CTRx_EXT[31:0], and which counters cause reload of FIXED_CTRx is configured in FIXED_CTRx_RELOAD_CFG.

ACR reload is not guaranteed to be precise in some examples; in some cases, a small number of events may be lost during the time between counter overflow and counter reload. When the overflow of a single counter is configured to reload multiple counters, it is guaranteed that those counters will be reloaded simultaneously.

For counters configured to reload counters with ACR and to take PEBS on overflow, the counter reload actions will be taken only after the PEBS record has been written. This ensures that any counter values captured in the PEBS record reflect the value before the reload occurs. Because some latency is associated with PEBS record generation, this could result in more lost counts due to more time passing between counter overflow and counter reload.

For a counter configured to reload itself and to take PEBS on overflow, the overflow bit associated with the counter (in PERF_GLOBAL_STATUS) will be set from the time the counter overflows to the time the PEBS record is written. This is required to ensure the PEBS record is not lost due to a VM exit taken during record generation. Once the record is written, the overflow bit will be cleared, and the counter reloaded.

When counters that support a precise distribution (PDIST) are reloaded by ACR, the PDIST behavior will be lost. With Pdist, the PEBS record will be generated precisely upon completion of the instruction or operation that causes the counter to overflow (there is no "wait for next occurrence" by default). Pdist is supported by selected counters, and is only supported when those counters are programmed to count select precise events.

The table below provides example details for some MSRs.

| **Register Address** | | **Architectural MSR Name / Bit Fields (Former MSR Name)** | **MSR/Bit Description** | **Reset Value** |
|---|---|---|---|---|
| **Hex** | **Dex** | | | |
| 1902H, 1906H, 190AH, ... 1902H +(4*n) | 6402, 6406, 6410, ... 6402 +(4*n) | IA32_PMCx_RELOAD_CFG | ACR Reload Configuration for PMCx | |
| | | 0 | PMC 0 | 0 |
| | | | Reload PMCx on overflow of PMC0. | |
| | | 1 | PMC1 | 0 |
| | | | Reload PMCx on overflow of PMC1. | |
| | | ... | ... | 0 |
| | | n | PMCn | 0 |
| | | | Reload PMCx on overflow of PMCn. | |
| | | 31:n+1 | Reserved. | 0 |
| | | 32 | FIXED_CTR0 | 0 |
| | | | Reload PMCx on overflow of FIXED_CTR0. | |
| | | 33 | FIXED_CTR1 | 0 |
| | | | Reload PMCx on overflow of FIXED_CTR1. | |
| | | ... | ... | 0 |
| | | 32+m | FIXED_CTRm | 0 |
| | | | Reload PMCx on overflow of FIXED_CTRm. | |
| | | 62:32+m+1 | Reserved. | 0 |
| | | 63 | PREVENT_RELOAD | 0 |
| | | | Do not allow other counters to reload based on overflow of PMCx. | |
| 1903H, 1907H, ... 1903H +(4*n) | 6403, 6407, ... 6403 +(4*n) | IA32_PERFEVTSELx_EXT | Extended Performance Event Selector for GP Counter x | |
| | | 31:0 | PMCx Reload Value | 0 |
| | | 63:32 | Reserved. | 0 |
| 1982H, 1986H, 198AH, ... 1982H +(4*m) | 6530, 6534, 6538, ... 6530 +(4*m) | IA32_FIXED_CTRx_RELOAD _CFG | ACR Reload Configuration for Fixed CTRx | |
| | | 0 | PMC 0 | 0 |
| | | | Reload PMCx on overflow of PMC0. | |
| | | 1 | PMC1 | 0 |
| | | | Reload PMCx on overflow of PMC1. | |
| | | ... | ... | 0 |
| | | n | PMCn | 0 |
| | | | Reload PMCx on overflow of PMCn. | |
| | | 31:n+1 | Reserved. | 0 |
| | | 32 | FIXED_CTR0 | 0 |
| | | | Reload PMCx on overflow of FIXED_CTR0. | |
| | | 33 | FIXED_CTR1 | 0 |
| | | | Reload PMCx on overflow of FIXED_CTR1. | |
| | | ... | ... | 0 |
| | | 32+m | FIXED_CTRm | 0 |
| | | | Reload PMCx on overflow of FIXED_CTRm. | |
| | | 62:32+m+1 | Reserved. | 0 |
| | | 63 | PREVENT_RELOAD | 0 |
| | | | Do not allow other counters to reload based on overflow of CTRx. | |
| 1983H, 1987H, | 6531, 6535, | IA32_FIXED_CTRx_CTRL _EXT | Extended Performance Event Selector for Fixed Counter x | |
| ... 1983H +(4*m) | ... 6531 +(4*m) | 31:0 | FIXED_CTRx Reload Value | 0 |
| | | 63:32 | Reserved. | 0 |

Certain architectural performance monitoring (PerfMon) facilities (e.g., a performance monitor circuit) include a set of performance monitoring counters and performance event select registers.

Workloads can be limited from executing on execution circuits (e.g., execution engines) due to multiple reasons, for example, insufficient execution resources (e.g., insufficient hardware) or a tight dependency between instructions (e.g., software). A TMA may include a category of core bound (e.g., as shown in FIG. 8). In certain examples, the term "core bound" corresponds to pressure on the execution circuits (e.g., execution units) and/or lack of Instructions-Level-Parallelism (ILP) in code (e.g., a program). In certain examples, core bound stalls can either manifest with short execution starvation periods, or with sub-optimal execution port utilization, which makes it more challenging to identify. For example, a long latency divide operation might serialize execution. In contrast, pressure on an execution port that serves specific varieties of micro-ops might manifest as a small number of ports utilized in a cycle. core bound issues can often be mitigated with better code generation. In certain examples, a sequence of dependent arithmetic operations would be classified as core bound. A compiler may relieve this stall with better instruction scheduling. Vectorization can mitigate core bound issues as well.

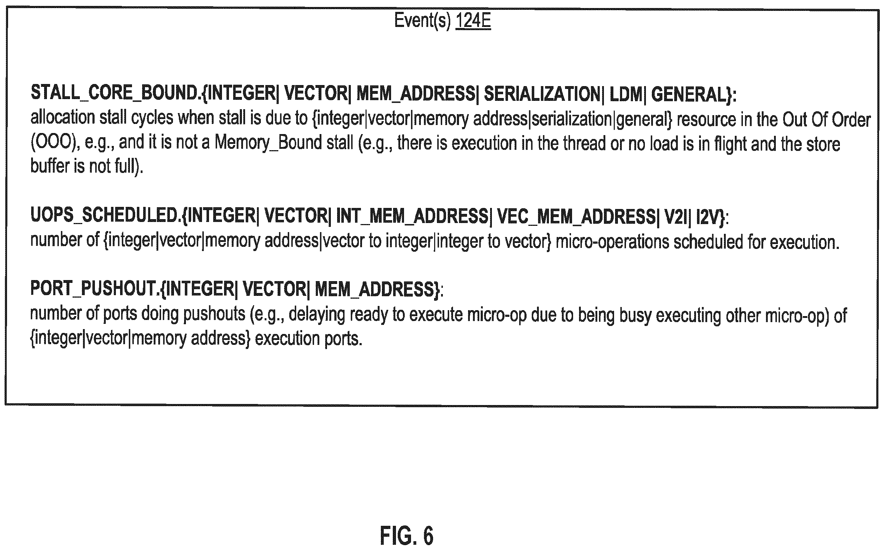

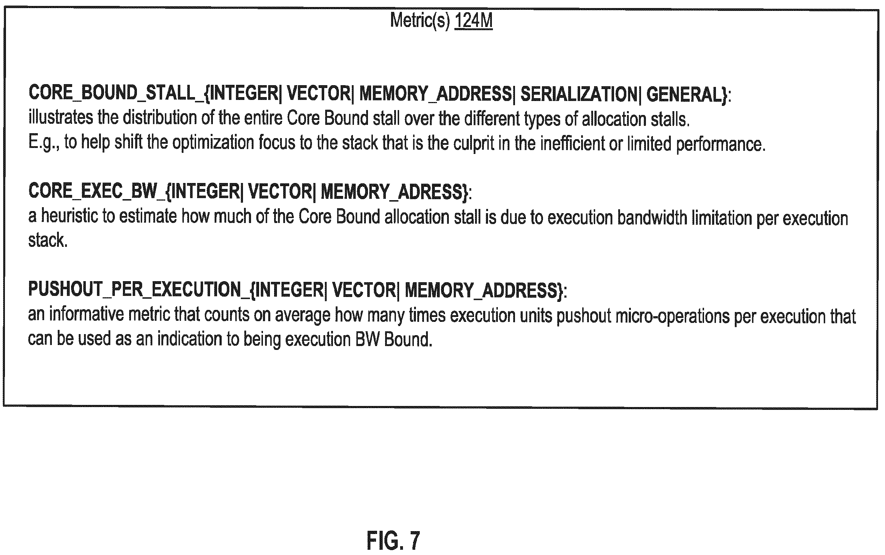

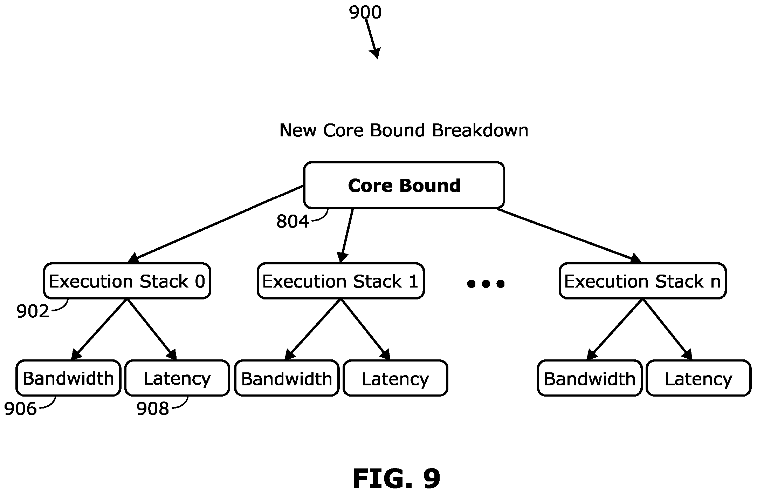

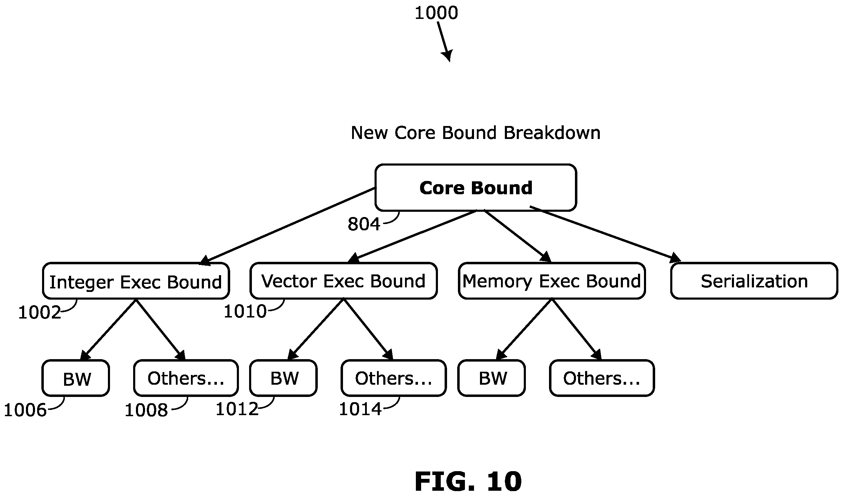

Certain examples herein are directed to a performance monitor circuit that generates events and/or metrics to differentiate between those two key classes, e.g., to events and/or metrics further differentiate a "core bound" issue. Certain examples herein differentiate (e.g., "break down") a core bound issue by (i) execution circuit (e.g., execution stack) type and (ii) bandwidth issues versus latency/dependency issues within each type (e.g., within each execution stack), for example, as show in FIG. 9. Certain examples herein are directed to a performance monitor circuit that generates "core bound" events and/or metrics that differentiate execution bandwidth limited issues versus dependency chain issues (e.g., where an input for a second instruction depends on an output of a first instruction), for example, as shown in FIG. 10. Having events and/or metrics to further differentiate a "core bound" issue is insightful for both performance engineers (e.g., to allow focus on relevant software optimizations) as well as for (e.g., central processing unit (CPU)) architects of next generations of high-performance processors. Certain examples herein are directed to a performance monitor circuit that generates a new set of performance monitoring events and/or TMA metrics (e.g., as discussed in reference to FIGS. 6 and 7). In certain examples, these metrics help understanding the reason behind the performance bottleneck when it is pointed out to be core bound (e.g., when an execution circuit (e.g., execution engine) is the primary performance bottleneck) by TMA method, and hence it gives a better hint for the code optimization that leads to a high return of investment. Certain examples herein are directed to a performance monitor circuit that generates performance monitoring (PerfMon) events and/or metrics that can be exploited to optimize product performance. These PerfMon events and/or metrics can be exposed in tools (e.g., profiling tool code) to the end user (e.g., a performance engineer or hardware architect), for example, via methods including Top-down Microarchitectural Analysis (TMA).

Certain processors include more than one type of execution circuit (e.g., execution engine), and certain examples herein are directed to a performance monitor circuit that generates events and/or metrics for each type of execution circuit, e.g., a first set of events and/or metrics for a first type of execution circuit, a second set of events and/or metrics for a second type of execution circuit, a third set of events and/or metrics for a third type of execution circuit, etc., for example, in contrast to a single set of events and/or metrics for multiple types of execution circuits.

In other examples, performance monitoring counts instruction level parallelism (ILP), e.g., the total number of operations executed is counted and classified by execution parallelism level. For example, a net of 1, 2, 3 or more instructions (e.g., micro-operations) that are executed in each cycle. However, an issue with this is certain processors have a wide execution engine (e.g., one example processor core has twelve execution units) and a high ILP is common, and cannot be used as a clear signal to differentiate execution bandwidth issues versus latency/dependency issues. Furthermore, certain complex instruction set computer (CISC) instructions with multiple micro-operations make the task even harder.

In other examples, performance monitoring monitors the utilization of execution unit(s), e.g., by counting the number of operations executed a for certain execution unit, and dividing that by the total (e.g., clock) cycles to get a utilization percentage. However, an issue with this is that it may indicate to a user that the tested workload is compute bound (e.g., core bound in TMA), but without any clear hint to the reason for that boundedness. For example, a processor can saturate execution unit utilization in both cases of tight dependency chains on simple ALU operations as well as when a specific operation type has a single/few execution units (e.g., multiply or shuffle in FIG. 1B).

Examples herein overcome these issues via a performance monitor circuit that generates "core bound" events and/or metrics (e.g., as discussed in reference to FIGS. 6 and 7)that allow for a performance bottleneck analysis for core/execution bound workloads. Examples herein generate "core bound" events and/or metrics that allow developers to better understand the bottleneck of performance when using the TMA methodology, for example, by distinguishing between two high level reasons for core boundedness (e.g., (i) execution bandwidth issues versus (ii) latency/dependency chain issues), e.g., which leads to better and more focused code optimization.

In certain examples, when the "core bound" events and/or metrics indicate (i) execution is limited by execution bandwidth (e.g., not enough available integer or scalar execution stacks), a user can employ vectorization or multithreading to gain performance. In certain of these examples, breaking down stall(s) per stack (e.g., execution unit type) clears ambiguity in an otherwise aggregated (e.g., aggregated for multiple execution unit types) ILP metric. In certain of these examples, the "core bound" events and/or metrics distinguish whether a saturated execution unit is due to execution unit's bandwidth or otherwise, e.g., using a new "execution unit pushout" PerfMon event (e.g., PORT_PUSHOUT event). In certain examples, a port pushout event is not an execution utilization event.

In certain examples, when the "core bound" events and/or metrics indicate execution is limited by (ii) a dependency chain(s), the (e.g., tight-dependency) dependency chain(s) are to be collapsed (e.g., when possible), e.g., to improve performance.

In certain examples, a processor includes a performance monitor circuit that supports such "core bound" events and/or metrics (e.g., including counter mode(s)). In certain examples, a processor includes a performance monitor circuit that generates "core bound" events and/or metrics for execution units (e.g., and RS (Reservation Station)) scheduling behavior, e.g., "core bound" events and/or metrics for counting execution pushout (e.g., delaying otherwise ready to execute micro-op) due to stress on execution unit, e.g., which is different than Port Utilization events and/or provides a "core bound" metric breakdown into multiple parts (e.g., as shown in FIGS. 9 and 10). In certain examples, a processor includes a performance monitor circuit that generates a "core bound" execution pushout event to enable counting micro-ops execution delays, e.g., to allow for a "core bound" bottleneck understanding and a greater chance of successful workloads optimization.

Certain examples herein are directed to a performance monitor circuit that generates events and/or metrics that define a new sub-tree breakdown of a "core bound" metric in TMA. In certain examples, the performance monitor circuit divides a reservation station (RS) (e.g., reservation station 108B in FIG. 1B) into stacks (for example, into a first type of execution circuits, a second type of execution circuits, etc., e.g., integer, vector, and memory address types) so that an execution bottleneck can be attributed (e.g., as indicated by the events and/or metrics) to one stack rather than the others. In FIG. 1B, a first type of execution circuits is the stack (e.g., first stack) of integer execution circuits 110-INT, a second type of execution circuits is the stack (e.g., second stack) of vector execution circuits 110-VEC, e.g., and a third type of execution circuits is the stack (e.g., third stack) of memory address execution (e.g., address generation, load, and/or store) circuits (for example, an address generation unit (AGU) to generate an address used by a memory access, e.g., for load buffer 138, load dTLB 140, store buffer 142, and/or store address dTLB 144). In certain examples, the sub-tree breakdown of a "core bound" metric indicates whether the reason behind the inefficiency is (i) execution bandwidth in each stack (e.g., overstressing the execution units) or (ii) is caused by something else (e.g., dependency between micro-ops).

FIG. 6 illustrates three example performance monitoring events 124E, e.g., generated by a performance monitor in response to the storing of a corresponding value in one or more configuration registers (e.g., registers 124 in FIG. 1A) of the performance monitor (e.g., performance monitor 116 in FIGS. 1A and 1B) to cause the performance monitor to monitor that event and/or generate a corresponding value (e.g., count). In certain examples, a performance monitor circuit supports one or more (e.g., any combination of) the following events (for example, for each selected type, e.g., each selected type of execution circuit (e.g., execution unit)) (e.g., where the event (e.g., counter) data may be used to determine one or more of the TMA metrics discussed herein):
- **STALL_CORE_BOUND.{TYPE OF EXECUTION RESOURCE TO USE, e.g., INTEGER, VECTOR, MEMORY ADDRESS (MEM_ADDRESS), SERIALIZATION, or GENERAL}**
   In certain examples, the STALL_CORE_BOUND.TYPE is a value that represents a number of allocation stall cycles when the stall is due to that type (e.g., integer, vector, memory address, serialization (e.g., atomic and/or in-order micro-operations), or general) resource (e.g., in an Out Of Order (OOO) processor core), e.g., and that stall is not a memory bound (Memory_Bound) stall (e.g., there is execution in the thread or no load is in flight and the store buffer is not full).
- **UOPS_SCHEDULED.{TYPE OF MICRO-OPERATION, e.g., INTEGER, VECTOR, INTEGER MEMORY ADDRESS (INT_MEM_ADDRESS), or VECTOR MEMORY ADDRESS (VEC_MEM_ADDRESS)}**
   In certain examples, the UOPS_SCHEDULED.TYPE is a value that represents a number of that type (e.g., integer, vector, memory address, vector to integer, or integer to vector) of micro-operations scheduled for execution. In certain examples, the UOPS_SCHEDULED.TYPE is a value that represents a number of that type (e.g., integer, vector, memory address, vector to integer, or integer to vector) of micro-operations that are (i) currently stored in a reservation station and/or scheduler, e.g., but not yet sent to a port, and/or (ii) picked for (e.g., speculative) execution but can still be cancelled at that time.
- **PORT_PUSHOUT.{TYPE OF PORTS, e.g., INTEGER PORTS (e.g., ports P0, P1, P5, P6, and/or P10 in** **FIG. 1B****), VECTOR PORTS (e.g., ports P0, P1, P5, P6, and/or P10 in** **FIG. 1B****), or MEM_ADDRESS PORTS (e.g., ports P2, P3, P4, P7, P8, P9, and/or P11 in** **FIG. 1B****)}**
   In certain examples, the PORT_PUSHOUT.TYPE is a value that represents the number of ports doing pushouts (e.g., delaying a ready to execute micro-operation due to being busy executing another micro-operation) of that type of (e.g., integer, vector, or memory address) execution port.

In certain examples, an event is a count of the number of micro-operations that were ready for execution (e.g., were assigned to a port, e.g., a buffer of that port), but were not accepted into an execution circuit for execution (e.g., because that execution circuit is busy executing another micro-operation). In certain examples, an event is a count of the number of ports of a certain type that queued a micro-operation that was ready for execution (e.g., was assigned to a port), but was not accepted from that port into an execution circuit for execution (e.g., because that execution circuit is busy executing another micro-operation).

FIG. 7 illustrates three example performance monitoring metrics 124M., e.g., generated by a performance monitor in response to the storing of a corresponding value in one or more configuration registers (e.g., registers 124 in FIG. 1A) of the performance monitor (e.g., performance monitor 116 in FIGS. 1A and 1B) to cause the performance monitor to monitor that metric and/or generate a corresponding value (e.g., count) for that metric. In certain examples, a performance monitor generates a metric from one or more events, e.g., counter value for the event(s). In certain examples, a performance monitor circuit supports one or more (e.g., any combination of) the following metrics (for example, for each selected type, e.g., for each selected type of execution circuit (e.g., execution unit)) (e.g., where the metric data may be used as one or more of the TMA metrics discussed herein):
- **CORE_BOUND_STALL_{TYPE OF EXECUTION RESOURCE TO USE, e.g., INTEGER, VECTOR, MEMORY ADDRESS (MEM_ADDRESS), SERIALIZATION, or GENERAL}**
   In certain examples, the CORE_BOUND_STALL_TYPE metric is a value that indicates the distribution of an entire "core bound "stall over that type of different types of allocation stalls, e.g., to shift the optimization focus to the stack that is the culprit in the inefficient and/or limited performance. In certain examples, the CORE_BOUND_STALL_TYPE metric for an integer type of stack's stall is that value (e.g., CORE_BOUND_STALL_INTEGER) divided by the total number of stalls of all types (e.g., summing all the CORE_BOUND_STALL data for each type together to generate that total number), e.g., for the stalls in a monitoring window (e.g., plurality of clock cycles).
- **CORE_EXEC_BW_{TYPE OF PORTS, e.g., INTEGER PORTS, VECTOR PORTS, or MEMORY_ADDRESS PORTS}**
   In certain examples, the CORE_EXEC_BW_TYPE metric is a heuristic to estimate how much of the "core bound" allocation stall is due to execution bandwidth limitation per execution stack. In certain examples, the CORE_EXEC_BW_TYPE metric is the pushout value (e.g., PORT_PUSHOUT.TYPE) for that type, divided by the number of scheduled micro-operations for that type (e.g., UOPS_SCHEDULED.TYPE).
- **PUSHOUT_PER_EXECUTION_{ TYPE OF PORTS, e.g., INTEGER PORTS, VECTOR PORTS, or MEMORY_ADDRESS PORTS** }
   In certain examples, the PUSHOUT_PER_EXECUTION_TYPE metric counts (e.g., on average) how many times execution circuits (e.g., execution units) pushout micro-operations per execution, e.g., such that this metric is used as an indication to being execution bandwidth bound. In certain examples, the PUSHOUT_PER_EXECUTION_TYPE metric is the number of ports doing pushouts (e.g., PORT_PUSHOUT.TYPE) in a monitored window divided by the number of execution cycles in that monitored window. In certain examples, a PUSHOUT metric is the number of delayed ready micro-operations (e.g., per execution circuit type), e.g., in addition to or alternatively to the number of ports doing pushouts.

FIG. 8 illustrates an example Top-down Microarchitecture Analysis (TMA) hierarchy 800 for out-of-order microarchitectures. In certain examples, TMA hierarchy 800 includes one or more of the events 124E and/or metrics 124M discussed herein, e.g., as a sub-tree for the core bound 804 metric (e.g., under the backend bound 802 classification in the stalled).

In certain examples, TMA simplifies cycle-accounting (e.g., the process of identifying costs of performance bottlenecks, also called Cycles per Instructions (CPI) breakdown) using microarchitecture-abstracted metrics organized in one hierarchy, e.g., hierarchy 800. In certain examples, the TMA hierarchy for out-of-order Microarchitectures (e.g., processors that can execute instructions out of program order) depicts the hierarchical approach to classify performance bottlenecks common to modern out-of-order microarchitectures. Using TMA, the high-learning curve associated with each microarchitecture generation is replaced by a structured drilldown that quickly guides the user to true performance limiters. This enables analyzing performance without requiring knowledge of every detail of the microarchitecture. The advantage of this top-down hierarchical framework is a structured approach to drill down and guide the user toward the likely area of microarchitecture to investigate. In certain examples, weights are assigned to nodes in the tree to enable a focus of analysis efforts on issues that matter and disregard minor issues.

For example, if instruction fetch issues significantly hurt an application, TMA categorizes it as Frontend Bound at the tree's top level. A user/tool can drill down and focus only on the Frontend sub-tree. The drill down is recursively performed until a tree-leaf is reached. A leaf can point to a specific stall of the workload or denote a subset of issues with a common micro-architectural symptom likely to limit the application's performance.

At the top-level, TMA classifies pipeline slots into four main categories: Frontend Bound, Backend Bound, Bad Speculation, and Retiring, e.g., where the latter two denote non-stalled slots while the former two indicate stalls, as illustrated in FIG. 8. In certain examples, Retiring denotes slots utilized by "good operations." Ideally, all slots should be attributed here since it correlates with Instructions Per Cycle (IPC). Nevertheless, a high Retiring fraction does not necessarily mean there is no room for speedup. In certain examples, Bad Speculation denotes slots wasted due to all aspects of incorrect speculations. In certain examples, Bad Speculation includes: (a) slots of operations that do not eventually retire and (b) slots where the issue pipeline was blocked due to recovery from earlier mis-speculations. Note there is a third portion covered by Branch_Resteers. This category can be split per type of speculation. For example, Branch Mispredicts and Machine Clears cover control-flow and data mis-speculation, respectively. Frontend Bound denotes when the pipeline's Frontend under-supplies the Backend (see, e.g., FIGS 1A and 1B). In certain examples, the Frontend is the pipeline portion responsible for delivering operations to be executed later by the Backend. In certain examples, the Front-end Bound category is further classified into Fetch Latency (for example, instruction cache or iTLB misses) and Fetch Bandwidth (for instance, sub-optimal decoding). In certain examples, Backend Bound denotes remaining stalled slots due to a lack of required Backend resources. In certain examples, Backend Bound category is split into Memory Bound (e.g., which reflects execution stalls due to the memory subsystem), and core bound (e.g., which demonstrates either pressure on the execution units (compute bound) or lack of Instruction-Level-Parallelism (ILP) in a program). In certain examples, core bound stalls can either manifest with short execution starvation periods, or with sub-optimal execution port utilization, which makes it more challenging to identify. For example, a long latency divide operation might serialize execution. In contrast, pressure on an execution port that serves specific varieties (e.g., types) of micro-operations might manifest as a small number of ports utilized in a cycle. core bound issues can often be mitigated with better code generation. For example, a sequence of dependent arithmetic operations would be classified as core bound in certain examples. A compiler may relieve this stall with better instruction scheduling. Vectorization can mitigate core bound issues as well.

In certain examples, the memory bound metric is the sum of the memory stalls for any load (MemStalls.AnyLoad) plus the memory stalls for any stores (MemStalls. Stores), with that sum divided by the number of clock cycles in the monitored window. In certain examples, the core bound metric is the number of execution stalls minus the memory bound metric.

In certain examples, core bound 804 includes respective sub-leaves that indicate ports utilization, usage of a divider (e.g., which may take numerous cycles to execute a division micro-operation), and/or the events 124E and/or metrics 124M discussed herein.

In certain examples, the ports utilization indicates a number of ports utilized (e.g., zero ports, one port, two ports, three (e.g., three or more) ports, etc.), e.g., but does not indicate and/or include any of the events 124E and/or metrics 124M discussed herein.

In certain examples, a divide unit (e.g., integer divide (IDIV) in FIG. 1B) cannot accept a new divide micro-operation when it is busy processing a previously dispatched divide micro-operation, and thus the divider (e.g., "CYCLES_DIV_BUSY.ANY") event will count cycles that the divide unit is busy, e.g., irrespective of whether or not another divide micro-operation is waiting to enter the divide unit (e.g., from the reservation station). In certain examples, this event will count cycles while a divide is in progress, e.g., even if the reservation station is empty.

FIG. 9 illustrates an example TMA hierarchy 900 for core bound that splits core bound issues for each execution resource (e.g., execution stack) type of multiple types between bandwidth and latency, for example, a first type of execution stack (e.g., one of the stack of integer execution circuits 110-INT in FIG. 1B or the stack of vector execution circuits 110-VEC in FIG. 1B), and for that type of stack 902, further dividing into its bandwidth 906 metrics/events and latency 908 metrics/events.

FIG. 10 illustrates an example TMA hierarchy for core bound that splits core bound issues for each execution resource type of multiple types between bandwidth and other issues, for example, an integer type of execution stack (e.g., the stack of integer execution circuits 110-INT in FIG. 1B) that is execution bound 1002, and for that stack, further dividing into its bandwidth 1006 metrics/events and other (e.g., latency) 1008 metrics/events, a vector type of execution stack (e.g., the stack vector execution circuits 110-VEC in FIG. 1B) that is execution bound 1010, and for that stack, further dividing into its bandwidth 1012 metrics/events and other (e.g., latency) 1014 metrics/events, and/or similarly for memory execution bandwidth bound execution stacks. In certain examples, serialization data is also included, e.g., indicating stall(s) caused by serialized (e.g., atomic and/or in-order) micro-operations.

Examples herein generate the events 124E and/or metrics 124M discussed herein, and one or more of the events 124E and/or metrics 124M are used to identify the reason behind inefficient performance when TMA method points out Core Bound to be the dominant performance bottleneck, e.g., taking a step forward to identify why Core Bound is the bottleneck. For parties that invest heavily in SW optimizations, e.g., a cloud provider, this gives the missing hint of where to focus the optimization effort in order to achieve the most gain in performance and optimize for certain processor core products.

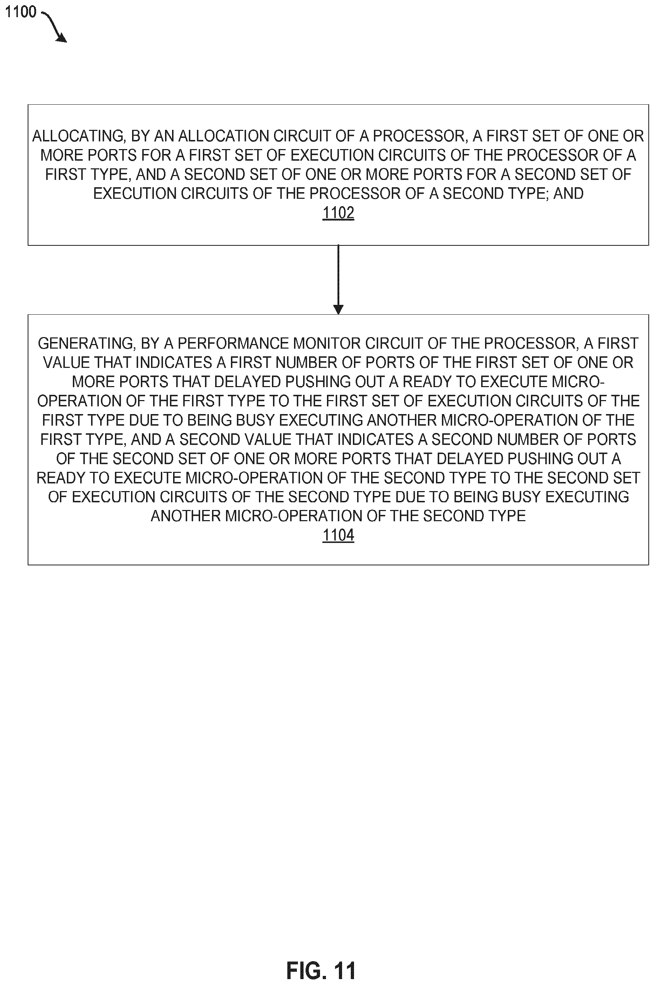

FIG. 11 illustrates an example of operations 1100 for a method of generating performance monitoring values according to examples of the disclosure. Some or all of the operations 1100 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 1100 are performed by a component(s) of the other figures (e.g., processor 100).

The operations 1100 include, at block 1102, allocating, by an allocation circuit of a processor, a first set of one or more ports for a first set of execution circuits of the processor of a first type, and a second set of one or more ports for a second set of execution circuits of the processor of a second type. The operations 1100 further include, at block 1104,

In certain examples, a performance monitor circuit generates one or more other events and/or metrics, e.g., one or any combination of the following.
- **TOPDOWN.SLOTS (or TOPDOWN.SLOTS_P)** event that indicates the number of available slots for an unhalted logical processor. In certain examples, the TOPDOWN.SLOTS event increments by the machine-width of the narrowest pipeline as employed by the Top-down Microarchitecture Analysis method (TMA). In certain examples, the count is distributed among unhalted logical processors (e.g., hyper-threads) who share the same physical core. Software can use this event as the denominator for the top-level metrics of the TMA method. In certain examples, this architectural event is counted on a designated fixed counter (e.g., fixed counter 3).
- **IDQ_BUBBLES.CORE** event as a subset of the Topdown Slots event that indicates no operation was delivered to the back-end pipeline due to instruction fetch limitations when the back-end could have accepted more operations. Certain examples include instruction cache misses or (e.g., x86) instruction decode limitations. The count may be distributed among unhalted logical processors (e.g., hyper-threads) who share the same physical core, e.g., in processors that support executing multiple threads on a single physical core (e.g., Hyper-Threading Technology). Software can use this event as the numerator for the Frontend Bound metric (or top-level category) of the Top-down Microarchitecture Analysis method.
- **TOPDOWN.BACKEND_BOUND_SLOTS** event that counts a subset of the Topdown Slots event that were not consumed by the back-end pipeline due to lack of back-end resources, as a result of memory subsystem delays, execution units' limitations, or other conditions. In certain examples, this count is distributed among unhalted logical processors (e.g., hyper-threads) who share the same physical core, e.g., in processors that support executing multiple threads on a single physical core (e.g., Hyper-Threading Technology). Software can use this event as the numerator for the Backend Bound metric (or top-level category) of the Top-down Microarchitecture Analysis method.
- **UOPS_RETIRED.SLOTS** event that counts a subset of the Topdown Slots event that are utilized by operations that eventually get retired (e.g., committed) by the processor pipeline. In certain examples, this event positively correlates with higher performance, for example, as measured by the instructions-per-cycle metric. Software can use this event as the numerator for the Retiring metric (or top-level category) of the Top-down Microarchitecture Analysis method.
- **INT_MISC.UOP_DROPPING** event that indicates an (e.g., estimated) number of Top-down Microarchitecture Analysis slots that got dropped due to non front-end reasons.

Certain examples herein indicate an event (e.g., one or any combination of events 124E in FIG. 6) to be monitored by using a MSR (e.g., PERFEVTSELx MSRs), for example, via an event select field of an MSR, e.g., as shown in FIG. 12.

Certain examples herein add an "equal" (EQ) flag (e.g., as bit 36 of PERFEVTSELx MSRs), for example, such that when the EQ flag is set (e.g., to one) and an invert counter mask (INV) flag is clear (e.g., set to zero), a comparison of a threshold evaluates to true if the selected performance monitoring event is equal to the specified counter mask (Cmask) value. In certain examples, when the EQ flag is set (e.g., to one) and the INV flag is set (e.g., to one), the comparison evaluates to true if the event is less than the Cmask value and the event is not zero. In certain examples, if the Cmask is zero, the EQ flag is ignored. In certain examples, the equal field is referred to as the zero behavior ("Z") field.

Additionally or alternatively, certain examples herein add an additional (e.g., 8-bit) unit mask field (e.g., to bits 47:40 of PERFEVTSELx MSRs), aka "UnitMask2". In certain examples, this is enumerated in new feature bit 0x21.0.EBX[0]. In certain examples, the UMASK2 field (e.g., bits 40 through 47) bits qualify the condition that the selected event logic unit detects. In certain examples, valid UMASK2 values for each event logic unit are specific to the unit. In certain examples, the second UMASK2 field may also be used in conjunction with a first UMASK field, e.g., as shown in FIG. 12.

In certain examples, IA32_PERFEVTSELx MSRs start at address 186H and occupy a contiguous block of MSR address space. In certain examples, each performance event select register is paired with a corresponding performance counter, e.g., in the 0C1H address block. Note the number of IA32_PERFEVTSELx MSRs may vary from the number of physical counters present on the hardware, e.g., because an agent running at a higher privilege level (e.g., a virtual machine monitor (VMM)) may not expose all counters. In certain examples, the bit width of an IA32_PMCx MSR is reported using the CPUID.0AH:EAX[23:16], e.g., the number of valid bits for a read operation. In certain examples, on write operations, the lower-order 32 bits of the MSR may be written with any value, and the high-order bits are sign-extended from the value of bit 31. In certain examples, the bit field layout of IA32_PERFEVTSELx MSRs is defined architecturally.

FIG. 12 illustrates examples of architectural performance monitoring layouts of the PERFEVTSELx MSRs 1200. In certain examples, PERFEVTSELx MSRs 1200 is 64 bits wide (e.g., as shown) or 32 bits wide. In certain examples, control register 122 in FIG. 1A and/or control register 380 in FIG. 3 utilizes the format of MSR 1200.

In certain examples, PERFEVTSELx MSRs 1200 includes an event select field, e.g., bits 0-7 of PERFEVTSELx MSRs 1200 (e.g., of bit indices 0 to 63). In certain examples, the event select field allows for the selection of event logic unit used to detect microarchitectural conditions. In certain examples, the set of values for this field is defined architecturally, e.g., each value corresponds to an event logic unit for use with an architectural performance event. In certain examples, the number of architectural events is queried using CPUID.0AH:EAX. A processor may support only a subset of pre-defined values.

In certain examples, PERFEVTSELx MSRs 1200 includes a unit mask (UMASK) field, e.g., bits 8-15 of PERFEVTSELx MSRs 1200 (e.g., of bit indices 0 to 63). In certain examples, the unit mask field bits qualify the condition that the selected event logic unit detects. In certain examples, valid UMASK values for each event logic unit are specific to the unit. In certain examples, for each architectural performance event, its corresponding UMASK value defines a specific microarchitectural condition. In certain examples, a pre-defined microarchitectural condition associated with an architectural event may not be applicable to a given processor, e.g., the processor then reports only a subset of pre-defined architectural events. In certain examples, the pre-defined architectural events are listed in the table below. In certain examples, support for pre-defined architectural events is enumerated using CPUID.0AH:EBX.

### Example Umask and Event Select Encodings for Pre-Defined Architectural Performance Events table

| **Bit Position CPUID.AH.EBX** | **Event Name** | **UMask** | **Event Select** |
|---|---|---|---|
| 0 | UnHalted Core Cycles | 00H | 3CH |
| 1 | Instruction Retired | 00H | C0H |
| 2 | UnHalted Reference Cycles | 01H | 3CH |
| 3 | LLC Reference | 4FH | 2EH |
| 4 | LLC Misses | 41H | 2EH |
| 5 | Branch Instruction Retired | 00H | C4H |
| 6 | Branch Misses Retired | 00H | C5H |
| 7 | Topdown Slots | 01H | A4H |

In certain examples, PERFEVTSELx MSRs 1200 includes a user mode (USR) field (e.g., bit or flag), e.g., bit 16 of PERFEVTSELx MSRs 1200 (e.g., of bit indices 0 to 63). In certain examples, the user mode field specifies that the selected microarchitectural condition is counted when the processor (e.g., core or logical processor) is operating at privilege levels 1, 2, or 3. This flag can be used with the OS flag.

In certain examples, PERFEVTSELx MSRs 1200 includes an operating system mode (OS) field (e.g., bit or flag), e.g., bit 17 of PERFEVTSELx MSRs 1200 (e.g., of bit indices 0 to 63). In certain examples, the operating system mode field specifies that the selected microarchitectural condition is counted when the processor (e.g., core or logical processor) is operating at privilege level 0 (e.g., OS or kernel level). This flag can be used with the USR flag.

In certain examples, PERFEVTSELx MSRs 1200 includes an edge detect (E) field (e.g., bit or flag), e.g., bit 18 of PERFEVTSELx MSRs 1200 (e.g., of bit indices 0 to 63). In certain examples, the edge detect field enables (when set) edge detection of the selected microarchitectural condition. In certain examples, the processor (e.g., core or logical processor) counts the number of de-asserted to asserted transitions for any condition that can be expressed by the other fields. In certain examples, this mechanism does not permit back-to-back assertions to be distinguished. In certain examples, this mechanism allows software to measure not only the fraction of time spent in a particular state, but also the average length of time spent in such a state (for example, the time spent waiting for an interrupt to be serviced).

In certain examples, PERFEVTSELx MSRs 1200 includes a pin control (PC) field (e.g., bit or flag), e.g., bit 19 of PERFEVTSELx MSRs 1200 (e.g., of bit indices 0 to 63). In certain examples, the pin control field bit is reserved (not writeable). In other examples, the processor (e.g., core or logical processor) (e.g., when the pin control field bit is set) toggles the PMi pins and increments the counter when performance-monitoring events occur (e.g., and when the pin control field bit is cleared), the processor (e.g., core or logical processor) toggles the PMi pins when the counter overflows. In certain examples, the toggling of a pin is defined as assertion of the pin for a single bus clock followed by de-assertion.

In certain examples, PERFEVTSELx MSRs 1200 includes an (e.g., Advanced Programmable Interrupt Controller (ACIP)) interrupt enable (INT) field (e.g., bit or flag), e.g., bit 20 of PERFEVTSELx MSRs 1200 (e.g., of bit indices 0 to 63). In certain examples, the (e.g., ACIP) interrupt enable field, when set, causes the processor (e.g., core or logical processor) to generates an exception through its local interrupt controller (e.g., APIC) on counter overflow.

In certain examples, PERFEVTSELx MSRs 1200 includes an any thread (ANY) field (e.g., bit or flag), e.g., bit 21 of PERFEVTSELx MSRs 1200 (e.g., of bit indices 0 to 63). In certain examples, the any thread field is used for any processor (e.g., processor core) comprising of two or more logical processors. In certain examples, when the any thread field is set to one, it enables counting the associated event conditions (e.g., including matching the thread's current privilege level (CPL) with the OS/USR setting of IA32_PERFEVTSELx) occurring across all logical processors sharing a processor core. In certain examples, when the any thread field is set to zero, the counter only increments the associated event conditions (e.g., including matching the thread's CPL with the OS/USR setting of IA32_PERFEVTSELx) occurring in the logical processor which programmed the IA32_PERFEVTSELx MSR. In certain examples, each fixed-function performance counter IA32_FIXED_CTRx (e.g., starting at MSR address 309H) is configured by a (e.g., 4-bit) control block in the IA32_PERF_FIXED_CTR_CTRL MSR. In certain examples, the control block also allows thread specificity configuration using an AnyThread bit for fixed-function counters 0, 1, and 2.

In certain examples, PERFEVTSELx MSRs 1200 includes an enable counters (EN) field (e.g., bit or flag), e.g., bit 22 of PERFEVTSELx MSRs 1200 (e.g., of bit indices 0 to 63). In certain examples, the enable counters field, when set, enables performance counting in the corresponding performance-monitoring counter, e.g., and when clear, the corresponding counter is disabled. In certain examples, the event logic unit for a UMASK is to be disabled (e.g., by setting IA32_PERFEVTSELx[bit 22] = 0) before writing to IA32_PMCx.

In certain examples, PERFEVTSELx MSRs 1200 includes an invert counter mask (INV) field (e.g., bit or flag) 1204, e.g., bit 23 of PERFEVTSELx MSRs 1200 (e.g., of bit indices 0 to 63). In certain examples, the invert field 1204, when set, inverts the counter-mask (CMASK) comparison, so that both greater than or equal to and less than comparisons can be made (e.g., set to a zero if greater than or equal, and set to 1 if less than). In certain examples, if the counter mask (CMASK) is programmed to zero, INV flag is ignored. In certain examples, the INV field is used as discussed in reference to the logic table 1300 in FIG. 13.

In certain examples, PERFEVTSELx MSRs 1200 includes a counter mask (CMASK) field (e.g., bits) 1206, e.g., bits 24-31 of PERFEVTSELx MSRs 1200 (e.g., of bit indices 0 to 63). In certain examples, the counter mask field 1206 (e.g., when this field is not zero), causes a processor (e.g., core or logical processor) to compare this mask (e.g., threshold indicated by the mask) to the events count of the detected microarchitectural condition, e.g., during a single cycle. In certain examples, if the event count is greater than or equal to this mask, the counter is incremented by one, e.g., otherwise the counter is not incremented. In certain examples, this mask allows for software to characterize microarchitectural conditions that can count multiple occurrences per cycle (for example, two or more instructions retired per clock; or bus queue occupations). In certain examples, if the counter-mask field is 0, then the counter is incremented each cycle by the event count associated with multiple occurrences. In certain examples, the CMASK field is used as discussed in reference to the logic table 1300 in FIG. 13.

In certain examples, PERFEVTSELx MSRs 1200 includes an in transaction region (IN_TX) field (e.g., bit or flag), e.g., bit 32 of PERFEVTSELx MSRs 1200 (e.g., of bit indices 0 to 63). In certain examples, the in transaction region field, when set, causes a counter to only include counts that occurred inside a transactional region, regardless of whether that region was aborted or committed. In certain examples, this bit may only be set if the processor supports hardware lock elision (HLE) or restricted transaction memory (RTM).

In certain examples, PERFEVTSELx MSRs 1200 includes an in transaction exclude abort (IN_TXCP) field (e.g., bit or flag), e.g., bit 33 of PERFEVTSELx MSRs 1200 (e.g., of bit indices 0 to 63). In certain examples, the in transaction exclude abort field, when set, causes a counter to not include counts that occurred inside of an aborted transactional region. In certain examples, this bit may only be set if the processor supports HLE or RTM. In certain examples, this bit may only be set for IA32_PERFEVTSEL2.

In certain examples, PERFEVTSELx MSRs 1200 includes an adaptive record (AR) field (e.g., bit or flag), e.g., bit 34 of PERFEVTSELx MSRs 1200 (e.g., of bit indices 0 to 63). In certain examples, the adaptive record field, when set, causes generation of an adaptive PEBS record (e.g., when set, modifies the sample information included in the PEBS record based on the configuration of an (e.g., separate) MSR).

In certain examples, PERFEVTSELx MSRs 1200 includes an LBR event logging enable (LEL) field (e.g., bit or flag), e.g., bit 35 of PERFEVTSELx MSRs 1200 (e.g., of bit indices 0 to 123). In certain examples, the LBR event logging enable field, when set, enables occurrences of the chosen event to be additionally logged in a new LBR field (e.g., IA32_LBR_INFO.PMCx_CNT field). In certain examples, this two-bit field represents the number of occurrences of the event since retirement of the operation that last recorded an LBR entry, saturating at a value of 3.

In certain examples, PERFEVTSELx MSRs 1200 includes an equal (EQ) field 1202 (e.g., bit or flag), e.g., bit 36 of PERFEVTSELx MSRs 1200 (e.g., of bit indices 0 to 63). In certain examples, when the EQ flag 1202 is set (e.g., to one) (e.g., and an invert counter mask (INV) flag 1204 is clear (e.g., set to zero)), a comparison of a threshold evaluates to true if the selected performance monitoring event is equal to the specified counter mask (CMask) 1206 value. In certain examples, when the EQ flag 1202 is set (e.g., to one) (e.g., and the INV flag 1204 is set (e.g., to one)), the comparison evaluates to true if the event is less than the CMask 1206 value and the event is not zero. In certain examples, if the CMask is zero, the EQ flag is ignored. In certain examples, the equal field is referred to as the zero behavior ("Z") field. In certain examples, the EQ field is used as discussed in reference to the logic table 1300 in FIG. 13.

In certain examples, some events may run out of usable unit mask bits, e.g., cache events or retired branch type. In certain examples, combining unit masks (e.g., UMASK and UMASK2 in FIG. 12) is a useful technique to synthesize new events, without wasting additional counters, e.g., setting L0_HIT and L1_HIT UMasks for MEM_LOAD_RETIRED give total data cache (e.g., data-cache unit (DCU)) hits.

In certain examples, PERFEVTSELx MSRs 1200 includes a second unit mask (UMASK2) field 1208, e.g., bits 40-47 of PERFEVTSELx MSRs 1200 (e.g., of bit indices 0 to 63). In certain examples, second unit mask (UMASK2) field 1208 (i) allows an indication of more/additional events and/or allow more events and/or (ii) allows for combining with the other UMASK in FIG. 1A2 to synthesize new events.

In certain examples, the value "N" (e.g., threshold) stored in the counter mask (CMASK) field 1206 causes a performance monitor (e.g., a counter for the monitored event) to increment (or decrement) a counter when greater than or equal to "N" number of those monitored events (e.g., any event discussed herein) occur, e.g., in the same cycle. In certain examples, this is useful to count specific pipeline conditions, for example, FETCH.UOPS:CMASK=6 counts when peak fetch bandwidth is reached in a 6-wide core.

In certain examples, setting (e.g., to one) the invert counter mask (INV) flag 1204 instead causes the performance monitor (e.g., a counter for the monitored event) to increment (or decrement) a counter when less than "N" number of events occur, e.g., in the same cycle. In certain examples, this is useful to count specific pipeline conditions, for example, FETCH. UOPS:CMASK=1:INV=1 counts starvation cycles (e.g., no fetched micro-operation (uop) was delivered.

However, there are some patterns that are difficult to express directly, for example, cycles with fewer than N but more than 0, or cycles with precisely N occurrences. In certain examples, "FETCH.UOPS:CMASK=1 - FETCH.UOPS:CMASK=6" counts fetch bandwidth (BW) cycles (e.g., suboptimal number of uops delivered), e.g., as a metrics in a top-down analysis, but this requires using two counters and a subtraction, which means they cannot be sampled and also waste scarce counter resources in certain examples.

To overcome these issues, certain examples herein utilize an equal field 1202 for implementation of one or more of the modes shown in the logic table 1300 in FIG. 13. In certain examples, the equal field 1202 is referred to as the zero behavior ("Z") field. In certain examples, PERFEVTSELx MSRs 1200 includes an equal (EQ) field (e.g., bit or flag) 1202, e.g., bit 36 of PERFEVTSELx MSRs 1200 (e.g., of bit indices 0 to 63).

FIG. 13 illustrates an example of a logic table (e.g., truth table) 1300 using certain fields of a PERFEVTSELx MSR (e.g., MSR 1200 in FIG. 12). In certain examples, use of the equal field (e.g., EQ bit 1202 in FIG. 12), invert counter mask field (e.g., INV bit 1204 in FIG. 12), and counter mask field 1206 (e.g., CMASK field 1206 in FIG. 12) in a (e.g., single) control register (e.g., control register 124 in FIG. 1A), allow for the control of performance monitoring for an event (e.g., performance monitor 116 in FIG. 1A). In certain examples, incrementing is mentioned, but it should be understood that a counter may be decremented in other examples. In certain examples, the counter is incremented and/or decremented by a value of 1.

Although eight modes (e.g., eight lines) are depicted in logic table 1300 (e.g., truth table), it should be understood that one or any combination of modes may be implemented for performance monitoring.

In certain examples, a first mode, third mode, fifth mode, and seventh mode (e.g., as shown in the corresponding lines of logic table 1300) is indicated by the EQ flag 1202 being cleared (e.g., set to zero), In certain examples, the counter mask (CMASK) field 1206 being cleared (e.g., set to zero) causes the EQ flag 1202 and INV flag 1204 to be ignored, e.g., causes the corresponding counter to be incremented (e.g., by performance monitor 116 in FIG. 1A) for each occurrence "X" of the corresponding (e.g., selected) performance monitoring event.

In certain examples, a second mode (e.g., as shown in the corresponding line of logic table 1300) is indicated by the EQ flag 1202 being cleared (e.g., set to zero), the invert counter mask (INV) flag 1204 being cleared (e.g., set to zero), and the counter mask (CMASK) field 1206 being set to a non-zero value "N" (e.g., an integer), such that the corresponding counter is incremented (e.g., by performance monitor 116 in FIG. 1A) only if the corresponding (e.g., selected) performance monitoring event count (e.g., in a single cycle) is equal to or greater than the specified counter mask (CMask) 1206 value.

In certain examples, a fourth mode (e.g., as shown in the corresponding line of logic table 1300) is indicated by the EQ flag 1202 being cleared (e.g., set to zero), the invert counter mask (INV) flag 1204 being set (e.g., to one), and the counter mask (CMASK) field 1206 being set to a non-zero value "N" (e.g., an integer), such that the corresponding counter is incremented (e.g., by performance monitor 116 in FIG. 1A) only if the corresponding (e.g., selected) performance monitoring event count (e.g., in a single cycle) (e.g., including zero) is less than the specified counter mask (CMask) 1206 value.

In certain examples, a sixth mode (e.g., as shown in the corresponding line of logic table 1300) is indicated by the EQ flag 1202 being set (e.g., to one), the invert counter mask (INV) flag 1204 being cleared (e.g., set to zero), and the counter mask (CMASK) field 1206 being set to a non-zero value "N" (e.g., an integer), such that the corresponding counter is incremented (e.g., by performance monitor 116 in FIG. 1A) only if the corresponding (e.g., selected) performance monitoring event count (e.g., in a single cycle) is equal to the specified counter mask (CMask) 1206 value (e.g., but not increment if the event count is greater or less than the CMask value).

In certain examples, an eighth mode (e.g., as shown in the corresponding line of logic table 1300) is indicated by the EQ flag 1202 being set (e.g., to one), the invert counter mask (INV) flag 1204 being set (e.g., to one), and the counter mask (CMASK) field 1206 being set to a non-zero value "N" (e.g., an integer), such that the corresponding counter is incremented (e.g., by performance monitor 116 in FIG. 1A) only if the corresponding (e.g., selected) performance monitoring event count (e.g., in a single cycle) is greater than zero and less than the specified counter mask (CMask) 1206 value (e.g., within a range of value(s) specified) (e.g., but not increment if the event count is zero or is greater than the CMask value).

In certain examples, a Performance Counter (e.g., MSR to control a performance counter) has a counter mask (CMask) 1206 field to express a threshold number of events in a cycle. In certain examples, the equal bit 1202 (e.g., EQ bit or z bit) [e.g., bit 36] is used to change the zero behavior (e.g., when EQ=1 Cmask=N, INV=0: count cycles when increment == N; when EQ=1 Cmask=N INV=1: count cycles when increment < N and increment > 0 (e.g., where the INV bit only applies to CMASK and the EQ bit only applies for CMASK non-zero). In certain examples, EQ=0 maintains a legacy behavior.

In certain examples, this functionality (e.g., shown in the corresponding line(s) of logic table 1300) is enumerated in new feature bit 0x21.0.EBX[1]. In certain examples, the use of the EQ bit allows for the expression of certain (e.g., common) patterns with one counter and the EQ bit enables sampling over constructs with multiple counters.

Some examples utilize instruction formats described herein. Some instructions support an 8-bit immediate. Some instructions support a 32-bit immediate. Some examples are implemented in one or more computer architectures, cores, accelerators, etc. Some examples are generated or are IP cores. Some examples utilize emulation and/or translation.

At least some examples of the disclosed technologies can be described in view of the following examples:
In a first set of examples, an apparatus (e.g., a processor core) comprises a first set of execution circuits of a first type; a second set of execution circuits of a second type different than the first type; an allocation circuit to allocate a first set of one or more ports for the first set of execution circuits of the first type, and a second set of one or more ports for the second set of execution circuits of the second type; and a performance monitor circuit to generate a first value that indicates a first number of ports of the first set of one or more ports that delayed pushing out a ready to execute micro-operation of the first type to the first set of execution circuits of the first type due to being busy executing another micro-operation of the first type, and a second value that indicates a second number of ports of the second set of one or more ports that delayed pushing out a ready to execute micro-operation of the second type to the second set of execution circuits of the second type due to being busy executing another micro-operation of the second type. In certain examples, the performance monitor circuit is to generate the first value that indicates the first number of ports of the first set of one or more ports that delayed pushing out the ready to execute micro-operation of the first type to the first set of execution circuits of the first type in a plurality of processing cycles due to being busy executing the another micro-operation of the first type, and the second value that indicates the second number of ports of the second set of one or more ports that delayed pushing out the ready to execute micro-operation of the second type to the second set of execution circuits of the second type in the plurality of processing cycles due to being busy executing the another micro-operation of the second type. In certain examples, the first type is an integer type and the second type is a vector type. In certain examples, the performance monitor circuit is to generate a third value that indicates a third number of the ready to execute micro-operations of the first type that were delayed from being pushed out on the first set of one or more ports for the first set of execution circuits of the first type, and a fourth value that indicates a fourth number of the ready to execute micro-operations of the second type that were delayed from being pushed out on the second set of one or more ports for the second set of execution circuits of the second type. In certain examples, the performance monitor circuit is to generate a third value that indicates a third number of stalls of micro-operations of the first type from being allocated by the allocation circuit, and a fourth value that indicates a fourth number of stalls of micro-operations of the second type from being allocated by the allocation circuit. In certain examples, the performance monitor circuit is to generate a third value that indicates a third number of micro-operations of the first type that are scheduled for execution, and a fourth value that indicates a fourth number of micro-operations of the second type that are scheduled for execution. In certain examples, the performance monitor circuit is to generate a fifth value that indicates how much of a core bound allocation stall of micro-operations of the first type is due to execution bandwidth limitation of the first set of execution circuits of the first type based at least in part on the first value and the third value, and a sixth value that indicates how much of a core bound allocation stall of micro-operations of the second type is due to execution bandwidth limitation of the second set of execution circuits of the second type based at least in part on the second value and the fourth value.

In another set of examples, a method comprises allocating, by an allocation circuit of a processor, a first set of one or more ports for a first set of execution circuits of the processor of a first type, and a second set of one or more ports for a second set of execution circuits of the processor of a second type; and generating, by a performance monitor circuit of the processor, a first value that indicates a first number of ports of the first set of one or more ports that delayed pushing out a ready to execute micro-operation of the first type to the first set of execution circuits of the first type due to being busy executing another micro-operation of the first type, and a second value that indicates a second number of ports of the second set of one or more ports that delayed pushing out a ready to execute micro-operation of the second type to the second set of execution circuits of the second type due to being busy executing another micro-operation of the second type. In certain examples, the generating comprises generating the first value that indicates the first number of ports of the first set of one or more ports that delayed pushing out the ready to execute micro-operation of the first type to the first set of execution circuits of the first type in a plurality of processing cycles due to being busy executing the another micro-operation of the first type, and the second value that indicates the second number of ports of the second set of one or more ports that delayed pushing out the ready to execute micro-operation of the second type to the second set of execution circuits of the second type in the plurality of processing cycles due to being busy executing the another micro-operation of the second type. In certain examples, the first type is an integer type and the second type is a vector type. In certain examples, the method further comprises generating, by the performance monitor circuit, a third value that indicates a third number of the ready to execute micro-operations of the first type that were delayed from being pushed out on the first set of one or more ports for the first set of execution circuits of the first type, and a fourth value that indicates a fourth number of the ready to execute micro-operations of the second type that were delayed from being pushed out on the second set of one or more ports for the second set of execution circuits of the second type. In certain examples, the method further comprises generating, by the performance monitor circuit, a third value that indicates a third number of stalls of micro-operations of the first type from being allocated by the allocation circuit, and a fourth value that indicates a fourth number of stalls of micro-operations of the second type from being allocated by the allocation circuit. In certain examples, the method further comprises generating, by the performance monitor circuit, a third value that indicates a third number of micro-operations of the first type that are scheduled for execution, and a fourth value that indicates a fourth number of micro-operations of the second type that are scheduled for execution. In certain examples, the method further comprises generating, by the performance monitor circuit, a fifth value that indicates how much of a core bound allocation stall of micro-operations of the first type is due to execution bandwidth limitation of the first set of execution circuits of the first type based at least in part on the first value and the third value, and a sixth value that indicates how much of a core bound allocation stall of micro-operations of the second type is due to execution bandwidth limitation of the second set of execution circuits of the second type based at least in part on the second value and the fourth value.

In yet another set of examples, an apparatus (e.g., a processor) comprises a memory; a first set of execution circuits of a first type; a second set of execution circuits of a second type different than the first type; an allocation circuit to allocate a first set of one or more ports for the first set of execution circuits of the first type, and a second set of one or more ports for the second set of execution circuits of the second type; and a performance monitor circuit to generate a first value that indicates a first number of ports of the first set of one or more ports that delayed pushing out a ready to execute micro-operation of the first type from the memory to the first set of execution circuits of the first type due to being busy executing another micro-operation of the first type, and a second value that indicates a second number of ports of the second set of one or more ports that delayed pushing out a ready to execute micro-operation of the second type from the memory to the second set of execution circuits of the second type due to being busy executing another micro-operation of the second type. In certain examples, the performance monitor circuit is to generate the first value that indicates the first number of ports of the first set of one or more ports that delayed pushing out the ready to execute micro-operation of the first type to the first set of execution circuits of the first type in a plurality of processing cycles due to being busy executing the another micro-operation of the first type, and the second value that indicates the second number of ports of the second set of one or more ports that delayed pushing out the ready to execute micro-operation of the second type to the second set of execution circuits of the second type in the plurality of processing cycles due to being busy executing the another micro-operation of the second type. In certain examples, the first type is an integer type and the second type is a vector type. In certain examples, the performance monitor circuit is to generate a third value that indicates a third number of the ready to execute micro-operations of the first type that were delayed from being pushed out on the first set of one or more ports for the first set of execution circuits of the first type, and a fourth value that indicates a fourth number of the ready to execute micro-operations of the second type that were delayed from being pushed out on the second set of one or more ports for the second set of execution circuits of the second type. In certain examples, the performance monitor circuit is to generate a third value that indicates a third number of stalls of micro-operations of the first type from being allocated by the allocation circuit, and a fourth value that indicates a fourth number of stalls of micro-operations of the second type from being allocated by the allocation circuit. In certain examples, the performance monitor circuit is to generate a third value that indicates a third number of micro-operations of the first type that are scheduled for execution, and a fourth value that indicates a fourth number of micro-operations of the second type that are scheduled for execution. In certain examples, the performance monitor circuit is to generate a fifth value that indicates how much of a core bound allocation stall of micro-operations of the first type is due to execution bandwidth limitation of the first set of execution circuits of the first type based at least in part on the first value and the third value, and a sixth value that indicates how much of a core bound allocation stall of micro-operations of the second type is due to execution bandwidth limitation of the second set of execution circuits of the second type based at least in part on the second value and the fourth value.

Exemplary architectures, systems, etc. that the above may be used in are detailed below.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

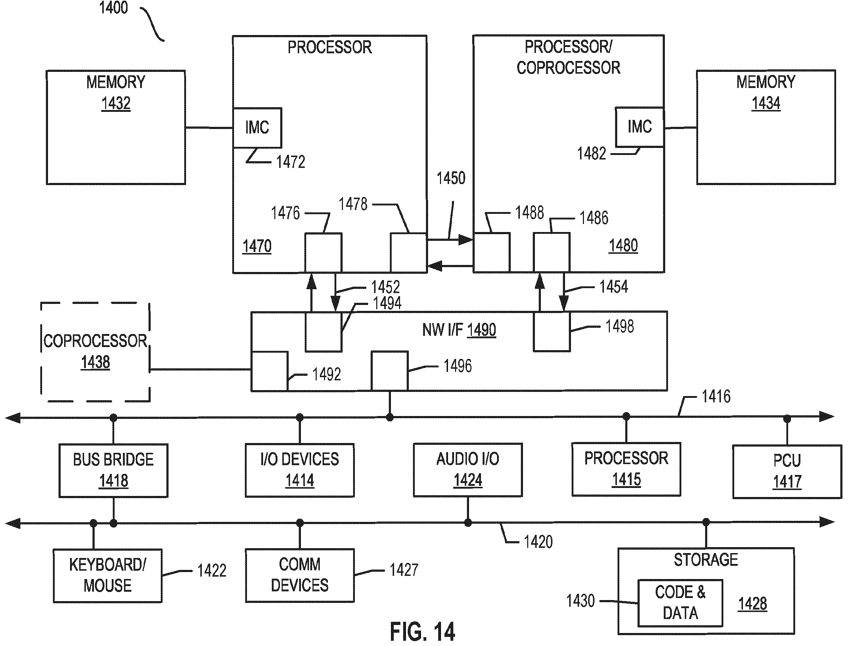

FIG. 14 illustrates an example computing system. Multiprocessor system 1400 is an interfaced system and includes a plurality of processors or cores including a first processor 1470 and a second processor 1480 coupled via an interface 1450 such as a point-to-point (P-P) interconnect, a fabric, and/or bus. In some examples, the first processor 1470 and the second processor 1480 are homogeneous. In some examples, first processor 1470 and the second processor 1480 are heterogenous. Though the example system 1400 is shown to have two processors, the system may have three or more processors, or may be a single processor system. In some examples, the computing system is a system on a chip (SoC).

Processors 1470 and 1480 are shown including integrated memory controller (IMC) circuitry 1472 and 1482, respectively. Processor 1470 also includes interface circuits 1476 and 1478; similarly, second processor 1480 includes interface circuits 1486 and 1488. Processors 1470, 1480 may exchange information via the interface 1450 using interface circuits 1478, 1488. IMCs 1472 and 1482 couple the processors 1470, 1480 to respective memories, namely a memory 1432 and a memory 1434, which may be portions of main memory locally attached to the respective processors.

Processors 1470, 1480 may each exchange information with a network interface (NW I/F) 1490 via individual interfaces 1452, 1454 using interface circuits 1476, 1494, 1486, 1498. The network interface 1490 (e.g., one or more of an interconnect, bus, and/or fabric, and in some examples is a chipset) may optionally exchange information with a coprocessor 1438 via an interface circuit 1492. In some examples, the coprocessor 1438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1470, 1480 or outside of both processors, yet connected with the processors via an interface such as P-P interconnect, such that either or both processors' local cache information may be stored in the shared cache if a processor is placed into a low power mode.

Network interface 1490 may be coupled to a first interface 1416 via interface circuit 1496. In some examples, first interface 1416 may be an interface such as a Peripheral Component Interconnect (PCI) interconnect, a PCI Express interconnect or another I/O interconnect. In some examples, first interface 1416 is coupled to a power control unit (PCU) 1417, which may include circuitry, software, and/or firmware to perform power management operations with regard to the processors 1470, 1480 and/or co-processor 1438. PCU 1417 provides control information to a voltage regulator (not shown) to cause the voltage regulator to generate the appropriate regulated voltage. PCU 1417 also provides control information to control the operating voltage generated. In various examples, PCU 1417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1417 is illustrated as being present as logic separate from the processor 1470 and/or processor 1480. In other cases, PCU 1417 may execute on a given one or more of cores (not shown) of processor 1470 or 1480. In some cases, PCU 1417 may be implemented as a microcontroller (dedicated or general-purpose) or other control logic configured to execute its own dedicated power management code, sometimes referred to as P-code. In yet other examples, power management operations to be performed by PCU 1417 may be implemented externally to a processor, such as by way of a separate power management integrated circuit (PMIC) or another component external to the processor. In yet other examples, power management operations to be performed by PCU 1417 may be implemented within BIOS or other system software.

Various I/O devices 1414 may be coupled to first interface 1416, along with a bus bridge 1418 which couples first interface 1416 to a second interface 1420. In some examples, one or more additional processor(s) 1415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1416. In some examples, second interface 1420 may be a low pin count (LPC) interface. Various devices may be coupled to second interface 1420 including, for example, a keyboard and/or mouse 1422, communication devices 1427 and storage circuitry 1428. Storage circuitry 1428 may be one or more non-transitory machine-readable storage media as described below, such as a disk drive or other mass storage device which may include instructions/code and data 1430 and may implement the storage 330 in some examples. Further, an audio I/O 1424 may be coupled to second interface 1420. Note that other architectures than the point-to-point architecture described above are possible. For example, instead of the point-to-point architecture, a system such as multiprocessor system 1400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

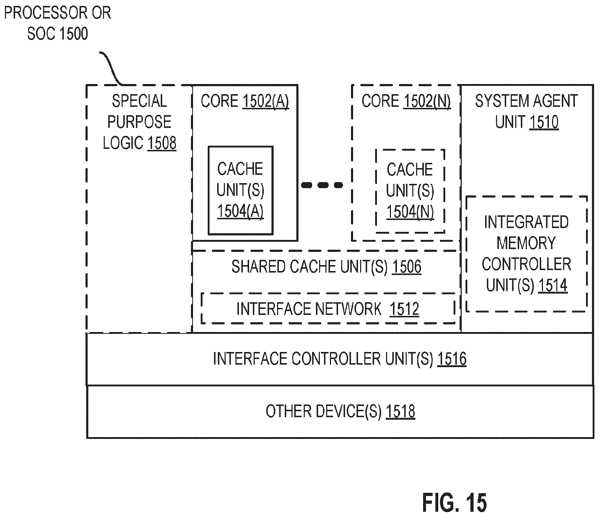

FIG. 15 illustrates a block diagram of an example processor and/or SoC 1500 that may have one or more cores and an integrated memory controller. The solid lined boxes illustrate a processor 1500 with a single core 1502(A), system agent unit circuitry 1510, and a set of one or more interface controller unit(s) circuitry 1516, while the optional addition of the dashed lined boxes illustrates an alternative processor 1500 with multiple cores 1502(A)-(N), a set of one or more integrated memory controller unit(s) circuitry 1514 in the system agent unit circuitry 1510, and special purpose logic 1508, as well as a set of one or more interface controller units circuitry 1516. Note that the processor 1500 may be one of the processors 1470 or 1480, or co-processor 1438 or 1415 of FIG. 14.

Thus, different implementations of the processor 1500 may include: 1) a CPU with the special purpose logic 1508 being integrated graphics and/or scientific (throughput) logic (which may include one or more cores, not shown), and the cores 1502(A)-(N) being one or more general purpose cores (e.g., general purpose in-order cores, general purpose out-of-order cores, or a combination of the two); 2) a coprocessor with the cores 1502(A)-(N) being a large number of special purpose cores intended primarily for graphics and/or scientific (throughput); and 3) a coprocessor with the cores 1502(A)-(N) being a large number of general purpose in-order cores. Thus, the processor 1500 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1504(A)-(N) within the cores 1502(A)-(N), a set of one or more shared cache unit(s) circuitry 1506, and external memory (not shown) coupled to the set of integrated memory controller unit(s) circuitry 1514. The set of one or more shared cache unit(s) circuitry 1506 may include one or more mid-level caches, such as level 2 (L2), level 3 (L3), level 4 (L4), or other levels of cache, such as a last level cache (LLC), and/or combinations thereof. While in some examples interface network circuitry 1512 (e.g., a ring interconnect) interfaces the special purpose logic 1508 (e.g., integrated graphics logic), the set of shared cache unit(s) circuitry 1506, and the system agent unit circuitry 1510, alternative examples use any number of well-known techniques for interfacing such units. In some examples, coherency is maintained between one or more of the shared cache unit(s) circuitry 1506 and cores 1502(A)-(N). In some examples, interface controller units circuitry 1516 couple the cores 1502 to one or more other devices 1518 such as one or more I/O devices, storage, one or more communication devices (e.g., wireless networking, wired networking, etc.), etc.

In some examples, one or more of the cores 1502(A)-(N) are capable of multi-threading. The system agent unit circuitry 1510 includes those components coordinating and operating cores 1502(A)-(N). The system agent unit circuitry 1510 may include, for example, power control unit (PCU) circuitry and/or display unit circuitry (not shown). The PCU may be or may include logic and components needed for regulating the power state of the cores 1502(A)-(N) and/or the special purpose logic 1508 (e.g., integrated graphics logic). The display unit circuitry is for driving one or more externally connected displays.

The cores 1502(A)-(N) may be homogenous in terms of instruction set architecture (ISA). Alternatively, the cores 1502(A)-(N) may be heterogeneous in terms of ISA; that is, a subset of the cores 1502(A)-(N) may be capable of executing an ISA, while other cores may be capable of executing only a subset of that ISA or another ISA.

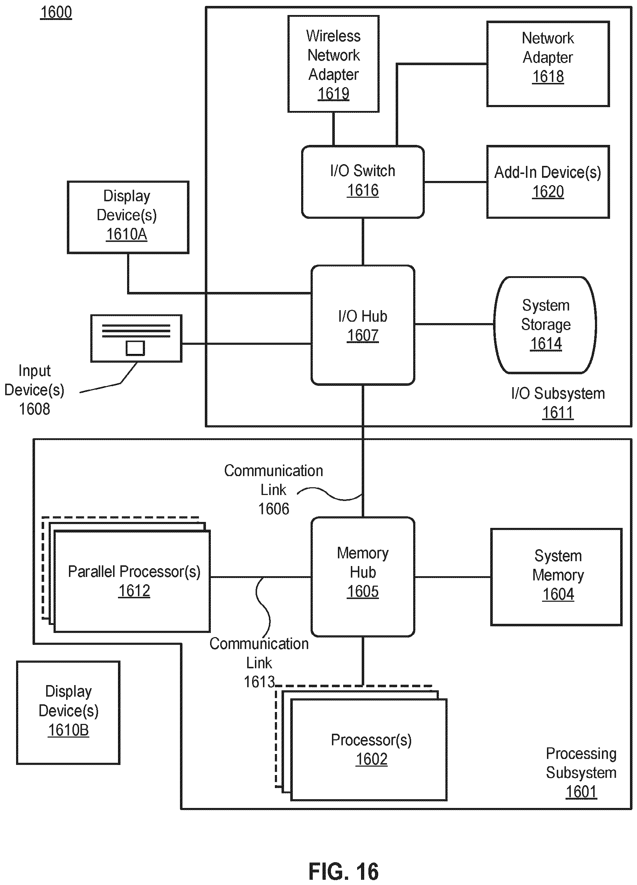

FIG. 16 is a block diagram illustrating a computing system 1600 configured to implement one or more aspects of the examples described herein. The computing system 1600 includes a processing subsystem 1601 having one or more processor(s) 1602 and a system memory 1604 communicating via an interconnection path that may include a memory hub 1605. The memory hub 1605 may be a separate component within a chipset component or may be integrated within the one or more processor(s) 1602. The memory hub 1605 couples with an I/O subsystem 1611 via a communication link 1606. The I/O subsystem 1611 includes an I/O hub 1607 that can enable the computing system 1600 to receive input from one or more input device(s) 1608. Additionally, the I/O hub 1607 can enable a display controller, which may be included in the one or more processor(s) 1602, to provide outputs to one or more display device(s) 1610A. In some examples the one or more display device(s) 1610A coupled with the I/O hub 1607 can include a local, internal, or embedded display device.

The processing subsystem 1601, for example, includes one or more parallel processor(s) 1612 coupled to memory hub 1605 via a bus or other communication link 1613. The communication link 1613 may be one of any number of standards-based communication link technologies or protocols, such as, but not limited to PCI Express, or may be a vendor specific communications interface or communications fabric. The one or more parallel processor(s) 1612 may form a computationally focused parallel or vector processing system that can include a large number of processing cores and/or processing clusters, such as a many integrated core (MIC) processor. For example, the one or more parallel processor(s) 1612 form a graphics processing subsystem that can output pixels to one of the one or more display device(s) 1610A coupled via the I/O hub 1607. The one or more parallel processor(s) 1612 can also include a display controller and display interface (not shown) to enable a direct connection to one or more display device(s) 1610B.

Within the I/O subsystem 1611, a system storage unit 1614 can connect to the I/O hub 1607 to provide a storage mechanism for the computing system 1600. An I/O switch 1616 can be used to provide an interface mechanism to enable connections between the I/O hub 1607 and other components, such as a network adapter 1618 and/or wireless network adapter 1619 that may be integrated into the platform, and various other devices that can be added via one or more add-in device(s) 1620. The add-in device(s) 1620 may also include, for example, one or more external graphics processor devices, graphics cards, and/or compute accelerators. The network adapter 1618 can be an Ethernet adapter or another wired network adapter. The wireless network adapter 1619 can include one or more of a Wi-Fi, Bluetooth, near field communication (NFC), or other network device that includes one or more wireless radios.

The computing system 1600 can include other components not explicitly shown, including USB or other port connections, optical storage drives, video capture devices, and the like, which may also be connected to the I/O hub 1607. Communication paths interconnecting the various components in FIG. 16 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1612 may incorporate circuitry optimized for graphics and video processing, including, for example, video output circuitry, and constitutes a graphics processing unit (GPU). Alternatively or additionally, the one or more parallel processor(s) 1612 can incorporate circuitry optimized for general purpose processing, while preserving the underlying computational architecture, described in greater detail herein. Components of the computing system 1600 may be integrated with one or more other system elements on a single integrated circuit. For example, the one or more parallel processor(s) 1612, memory hub 1605, processor(s) 1602, and I/O hub 1607 can be integrated into a system on chip (SoC) integrated circuit. Alternatively, the components of the computing system 1600 can be integrated into a single package to form a system in package (SIP) configuration. In some examples at least a portion of the components of the computing system 1600 can be integrated into a multi-chip module (MCM), which can be interconnected with other multi-chip modules into a modular computing system.

It will be appreciated that the computing system 1600 shown herein is illustrative and that variations and modifications are possible. The connection topology, including the number and arrangement of bridges, the number of processor(s) 1602, and the number of parallel processor(s) 1612, may be modified as desired. For instance, system memory 1604 can be connected to the processor(s) 1602 directly rather than through a bridge, while other devices communicate with system memory 1604 via the memory hub 1605 and the processor(s) 1602. In other alternative topologies, the parallel processor(s) 1612 are connected to the I/O hub 1607 or directly to one of the one or more processor(s) 1602, rather than to the memory hub 1605. In other examples, the I/O hub 1607 and memory hub 1605 may be integrated into a single chip. It is also possible that two or more sets of processor(s) 1602 are attached via multiple sockets, which can couple with two or more instances of the parallel processor(s) 1612.

Some of the particular components shown herein are optional and may not be included in all implementations of the computing system 1600. For example, any number of add-in cards or peripherals may be supported, or some components may be eliminated. Furthermore, some architectures may use different terminology for components similar to those illustrated in FIG. 16. For example, the memory hub 1605 may be referred to as a Northbridge in some architectures, while the I/O hub 1607 may be referred to as a Southbridge.

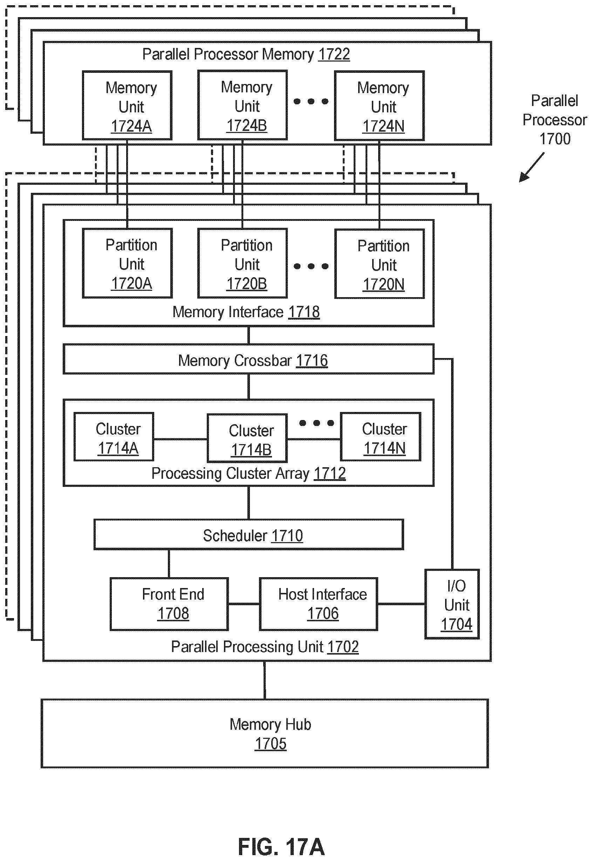

FIG. 17A illustrates examples of a parallel processor 1700. The parallel processor 1700 may be a GPU, GPGPU or the like as described herein. The various components of the parallel processor 1700 may be implemented using one or more integrated circuit devices, such as programmable processors, application specific integrated circuits (ASICs), or field programmable gate arrays (FPGA). The illustrated parallel processor 1700 may be one or more of the parallel processor(s) 1612 shown in FIG. 16.

The parallel processor 1700 includes a parallel processing unit 1702. The parallel processing unit includes an I/O unit 1704 that enables communication with other devices, including other instances of the parallel processing unit 1702. The I/O unit 1704 may be directly connected to other devices. For instance, the I/O unit 1704 connects with other devices via the use of a hub or switch interface, such as memory hub 1605. The connections between the memory hub 1605 and the I/O unit 1704 form a communication link 1613. Within the parallel processing unit 1702, the I/O unit 1704 connects with a host interface 1706 and a memory crossbar 1716, where the host interface 1706 receives commands directed to performing processing operations and the memory crossbar 1716 receives commands directed to performing memory operations.

When the host interface 1706 receives a command buffer via the I/O unit 1704, the host interface 1706 can direct work operations to perform those commands to a front end 1708. In some examples the front end 1708 couples with a scheduler 1710, which is configured to distribute commands or other work items to a processing cluster array 1712. The scheduler 1710 ensures that the processing cluster array 1712 is properly configured and in a valid state before tasks are distributed to the processing clusters of the processing cluster array 1712. The scheduler 1710 may be implemented via firmware logic executing on a microcontroller. The microcontroller implemented scheduler 1710 is configurable to perform complex scheduling and work distribution operations at coarse and fine granularity, enabling rapid preemption and context switching of threads executing on the processing cluster array 1712. Preferably, the host software can prove workloads for scheduling on the processing cluster array 1712 via one of multiple graphics processing doorbells. In other examples, polling for new workloads or interrupts can be used to identify or indicate availability of work to perform. The workloads can then be automatically distributed across the processing cluster array 1712 by the scheduler 1710 logic within the scheduler microcontroller.

The processing cluster array 1712 can include up to "N" processing clusters (e.g., cluster 1714A, cluster 1714B, through cluster 1714N). Each cluster 1714A-1714N of the processing cluster array 1712 can execute a large number of concurrent threads. The scheduler 1710 can allocate work to the clusters 1714A-1714N of the processing cluster array 1712 using various scheduling and/or work distribution algorithms, which may vary depending on the workload arising for each type of program or computation. The scheduling can be handled dynamically by the scheduler 1710 or can be assisted in part by compiler logic during compilation of program logic configured for execution by the processing cluster array 1712. Optionally, different clusters 1714A-1714N of the processing cluster array 1712 can be allocated for processing different types of programs or for performing different types of computations.

The processing cluster array 1712 can be configured to perform various types of parallel processing operations. For example, the processing cluster array 1712 is configured to perform general-purpose parallel compute operations. For example, the processing cluster array 1712 can include logic to execute processing tasks including filtering of video and/or audio data, performing modeling operations, including physics operations, and performing data transformations.

The processing cluster array 1712 is configured to perform parallel graphics processing operations. In such examples in which the parallel processor 1700 is configured to perform graphics processing operations, the processing cluster array 1712 can include additional logic to support the execution of such graphics processing operations, including, but not limited to texture sampling logic to perform texture operations, as well as tessellation logic and other vertex processing logic. Additionally, the processing cluster array 1712 can be configured to execute graphics processing related shader programs such as, but not limited to vertex shaders, tessellation shaders, geometry shaders, and pixel shaders. The parallel processing unit 1702 can transfer data from system memory via the I/O unit 1704 for processing. The transferred data can be stored to on-chip memory (e.g., parallel processor memory 1722) during processing, then written back to system memory.

In examples in which the parallel processing unit 1702 is used to perform graphics processing, the scheduler 1710 may be configured to divide the processing workload into approximately equal sized tasks, to better enable distribution of the graphics processing operations to multiple clusters 1714A-1714N of the processing cluster array 1712. In some of these examples, portions of the processing cluster array 1712 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1714A-1714N may be stored in buffers to allow the intermediate data to be transmitted between clusters 1714A-1714N for further processing.

During operation, the processing cluster array 1712 can receive processing tasks to be executed via the scheduler 1710, which receives commands defining processing tasks from front end 1708. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1710 may be configured to fetch the indices corresponding to the tasks or may receive the indices from the front end 1708. The front end 1708 can be configured to ensure the processing cluster array 1712 is configured to a valid state before the workload specified by incoming command buffers (e.g., batch-buffers, push buffers, etc.) is initiated.

Each of the one or more instances of the parallel processing unit 1702 can couple with parallel processor memory 1722. The parallel processor memory 1722 can be accessed via the memory crossbar 1716, which can receive memory requests from the processing cluster array 1712 as well as the I/O unit 1704. The memory crossbar 1716 can access the parallel processor memory 1722 via a memory interface 1718. The memory interface 1718 can include multiple partition units (e.g., partition unit 1720A, partition unit 1720B, through partition unit 1720N) that can each couple to a portion (e.g., memory unit) of parallel processor memory 1722. The number of partition units 1720A-1720N may be configured to be equal to the number of memory units, such that a first partition unit 1720A has a corresponding first memory unit 1724A, a second partition unit 1720B has a corresponding second memory unit 1724B, and an Nth partition unit 1720N has a corresponding Nth memory unit 1724N. In other examples, the number of partition units 1720A-1720N may not be equal to the number of memory devices.

The memory units 1724A-1724N can include various types of memory devices, including dynamic random-access memory (DRAM) or graphics random access memory, such as synchronous graphics random access memory (SGRAM), including graphics double data rate (GDDR) memory. Optionally, the memory units 1724A-1724N may also include 3D stacked memory, including but not limited to high bandwidth memory (HBM). Persons skilled in the art will appreciate that the specific implementation of the memory units 1724A-1724N can vary and can be selected from one of various conventional designs. Render targets, such as frame buffers or texture maps may be stored across the memory units 1724A-1724N, allowing partition units 1720A-1720N to write portions of each render target in parallel to efficiently use the available bandwidth of parallel processor memory 1722. In some examples, a local instance of the parallel processor memory 1722 may be excluded in favor of a unified memory design that utilizes system memory in conjunction with local cache memory.

Optionally, any one of the clusters 1714A-1714N of the processing cluster array 1712 has the ability to process data that will be written to any of the memory units 1724A-1724N within parallel processor memory 1722. The memory crossbar 1716 can be configured to transfer the output of each cluster 1714A-1714N to any partition unit 1720A-1720N or to another cluster 1714A-1714N, which can perform additional processing operations on the output. Each cluster 1714A-1714N can communicate with the memory interface 1718 through the memory crossbar 1716 to read from or write to various external memory devices. In one of the examples with the memory crossbar 1716 the memory crossbar 1716 has a connection to the memory interface 1718 to communicate with the I/O unit 1704, as well as a connection to a local instance of the parallel processor memory 1722, enabling the processing units within the different processing clusters 1714A-1714N to communicate with system memory or other memory that is not local to the parallel processing unit 1702. Generally, the memory crossbar 1716 may, for example, be able to use virtual channels to separate traffic streams between the clusters 1714A-1714N and the partition units 1720A-1720N.

While a single instance of the parallel processing unit 1702 is illustrated within the parallel processor 1700, any number of instances of the parallel processing unit 1702 can be included. For example, multiple instances of the parallel processing unit 1702 can be provided on a single add-in card, or multiple add-in cards can be interconnected. For example, the parallel processor 1700 can be an add-in device, such as add-in device 1620 of FIG. 16, which may be a graphics card such as a discrete graphics card that includes one or more GPUs, one or more memory devices, and device-to-device or network or fabric interfaces. The different instances of the parallel processing unit 1702 can be configured to inter-operate even if the different instances have different numbers of processing cores, different amounts of local parallel processor memory, and/or other configuration differences. Optionally, some instances of the parallel processing unit 1702 can include higher precision floating point units relative to other instances. Systems incorporating one or more instances of the parallel processing unit 1702 or the parallel processor 1700 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1702 can be partitioned into multiple instances. Those multiple instances can be configured to execute workloads associated with different clients in an isolated manner, enabling a pre-determined quality of service to be provided for each client. For example, each cluster 1714A-1714N can be compartmentalized and isolated from other clusters, allowing the processing cluster array 1712 to be divided into multiple compute partitions or instances. In such configuration, workloads that execute on an isolated partition are protected from faults or errors associated with a different workload that executes on a different partition. The partition units 1720A-1720N can be configured to enable a dedicated and/or isolated path to memory for the clusters 1714A-1714N associated with the respective compute partitions. This datapath isolation enables the compute resources within a partition can communicate with one or more assigned memory units 1724A-1724N without being subjected to inference by the activities of other partitions.

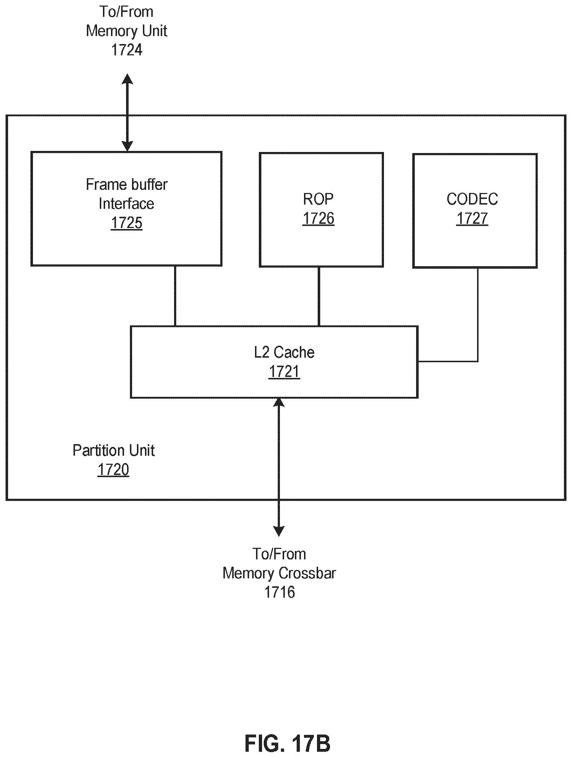

FIG. 17B is a block diagram of a partition unit 1720. The partition unit 1720 may be an instance of one of the partition units 1720A-1720N of FIG. 17A. As illustrated, the partition unit 1720 includes an L2 cache 1721, a frame buffer interface 1725, and a ROP 1726 (raster operations unit). The L2 cache 1721 is a read/write cache that is configured to perform load and store operations received from the memory crossbar 1716 and ROP 1726. Read misses and urgent write-back requests are output by L2 cache 1721 to frame buffer interface 1725 for processing. Updates can also be sent to the frame buffer via the frame buffer interface 1725 for processing. In some examples the frame buffer interface 1725 interfaces with one of the memory units in parallel processor memory, such as the memory units 1724A-1724N of FIG. 17A (e.g., within parallel processor memory 1722). The partition unit 1720 may additionally or alternatively also interface with one of the memory units in parallel processor memory via a memory controller (not shown).

In graphics applications, the ROP 1726 is a processing unit that performs raster operations such as stencil, z test, blending, and the like. The ROP 1726 then outputs processed graphics data that is stored in graphics memory. In some examples the ROP 1726 includes or couples with a CODEC 1727 that includes compression logic to compress depth or color data that is written to memory or the L2 cache 1721 and decompress depth or color data that is read from memory or the L2 cache 1721. The compression logic can be lossless compression logic that makes use of one or more of multiple compression algorithms. The type of compression that is performed by the CODEC 1727 can vary based on the statistical characteristics of the data to be compressed. For example, in some examples, delta color compression is performed on depth and color data on a per-tile basis. In some examples the CODEC 1727 includes compression and decompression logic that can compress and decompress compute data associated with machine learning operations. The CODEC 1727 can, for example, compress sparse matrix data for sparse machine learning operations. The CODEC 1727 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1726 may be included within each processing cluster (e.g., cluster 1714A-1714N of FIG. 17A) instead of within the partition unit 1720. In such example, read and write requests for pixel data are transmitted over the memory crossbar 1716 instead of pixel fragment data. The processed graphics data may be displayed on a display device, such as one of the one or more display device(s) 1610A-1610B of FIG. 16, routed for further processing by the processor(s) 1602, or routed for further processing by one of the processing entities within the parallel processor 1700 of FIG. 17A.

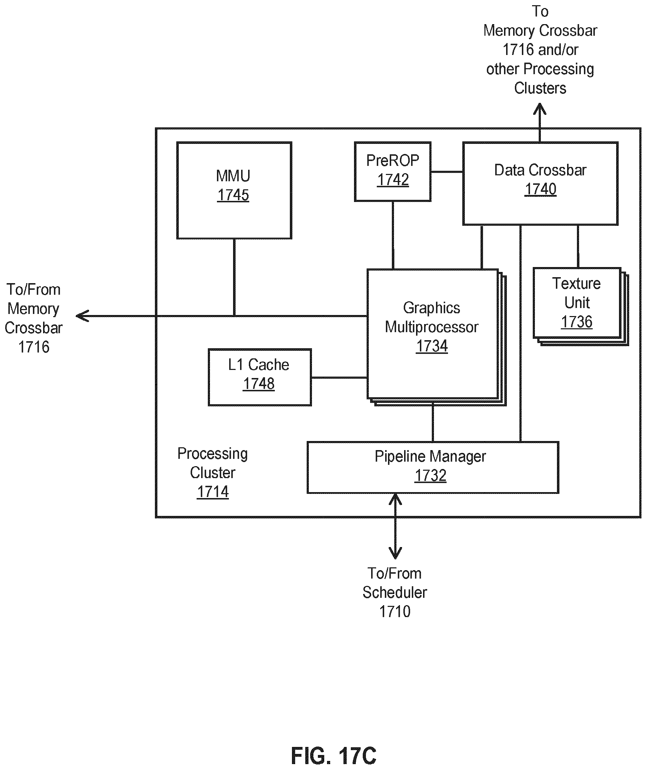

FIG. 17C is a block diagram of a processing cluster 1714 within a parallel processing unit. For example, the processing cluster is an instance of one of the processing clusters 1714A-1714N of FIG. 17A. The processing cluster 1714 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1714 can be controlled via a pipeline manager 1732 that distributes processing tasks to SIMT parallel processors. The pipeline manager 1732 receives instructions from the scheduler 1710 of FIG. 17A and manages execution of those instructions via a graphics multiprocessor 1734 and/or a texture unit 1736. The illustrated graphics multiprocessor 1734 is an exemplary instance of a SIMT parallel processor. However, various types of SIMT parallel processors of differing architectures may be included within the processing cluster 1714. One or more instances of the graphics multiprocessor 1734 can be included within a processing cluster 1714. The graphics multiprocessor 1734 can process data and a data crossbar 1740 can be used to distribute the processed data to one of multiple possible destinations, including other shader units. The pipeline manager 1732 can facilitate the distribution of processed data by specifying destinations for processed data to be distributed via the data crossbar 1740.

Each graphics multiprocessor 1734 within the processing cluster 1714 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1714 constitute a thread. A set of threads executing across the set of parallel processing engines is a thread group. A thread group executes the same program on different input data. Each thread within a thread group can be assigned to a different processing engine within a graphics multiprocessor 1734. A thread group may include fewer threads than the number of processing engines within the graphics multiprocessor 1734. When a thread group includes fewer threads than the number of processing engines, one or more of the processing engines may be idle during cycles in which that thread group is being processed. A thread group may also include more threads than the number of processing engines within the graphics multiprocessor 1734. When the thread group includes more threads than the number of processing engines within the graphics multiprocessor 1734, processing can be performed over consecutive clock cycles. Optionally, multiple thread groups can be executed concurrently on the graphics multiprocessor 1734.

The graphics multiprocessor 1734 may include an internal cache memory to perform load and store operations. Optionally, the graphics multiprocessor 1734 can forego an internal cache and use a cache memory (e.g., level 1 (L1) cache 1748) within the processing cluster 1714. Each graphics multiprocessor 1734 also has access to level 2 (L2) caches within the partition units (e.g., partition units 1720A-1720N of FIG. 17A) that are shared among all processing clusters 1714 and may be used to transfer data between threads. The graphics multiprocessor 1734 may also access off-chip global memory, which can include one or more of local parallel processor memory and/or system memory. Any memory external to the parallel processing unit 1702 may be used as global memory. Examples in which the processing cluster 1714 includes multiple instances of the graphics multiprocessor 1734 can share common instructions and data, which may be stored in the L1 cache 1748.

Each processing cluster 1714 may include an MMU 1745 (memory management unit) that is configured to map virtual addresses into physical addresses. In other examples, one or more instances of the MMU 1745 may reside within the memory interface 1718 of FIG. 17A. The MMU 1745 includes a set of page table entries (PTEs) used to map a virtual address to a physical address of a tile and optionally a cache line index. The MMU 1745 may include address translation lookaside buffers (TLB) or caches that may reside within the graphics multiprocessor 1734 or the L1 cache 1748 of processing cluster 1714. The physical address is processed to distribute surface data access locality to allow efficient request interleaving among partition units. The cache line index may be used to determine whether a request for a cache line is a hit or miss.

In graphics and computing applications, a processing cluster 1714 may be configured such that each graphics multiprocessor 1734 is coupled to a texture unit 1736 for performing texture mapping operations, e.g., determining texture sample positions, reading texture data, and filtering the texture data. Texture data is read from an internal texture L1 cache (not shown) or in some examples from the L1 cache within graphics multiprocessor 1734 and is fetched from an L2 cache, local parallel processor memory, or system memory, as needed. Each graphics multiprocessor 1734 outputs processed tasks to the data crossbar 1740 to provide the processed task to another processing cluster 1714 for further processing or to store the processed task in an L2 cache, local parallel processor memory, or system memory via the memory crossbar 1716. A preROP 1742 (pre-raster operations unit) is configured to receive data from graphics multiprocessor 1734, direct data to ROP units, which may be located with partition units as described herein (e.g., partition units 1720A-1720N of FIG. 17A). The preROP 1742 unit can perform optimizations for color blending, organize pixel color data, and perform address translations.

It will be appreciated that the core architecture described herein is illustrative and that variations and modifications are possible. Any number of processing units, e.g., graphics multiprocessor 1734, texture units 1736, preROPs 1742, etc., may be included within a processing cluster 1714. Further, while only one processing cluster 1714 is shown, a parallel processing unit as described herein may include any number of instances of the processing cluster 1714. Optionally, each processing cluster 1714 can be configured to operate independently of other processing clusters 1714 using separate and distinct processing units, L1 caches, L2 caches, etc.

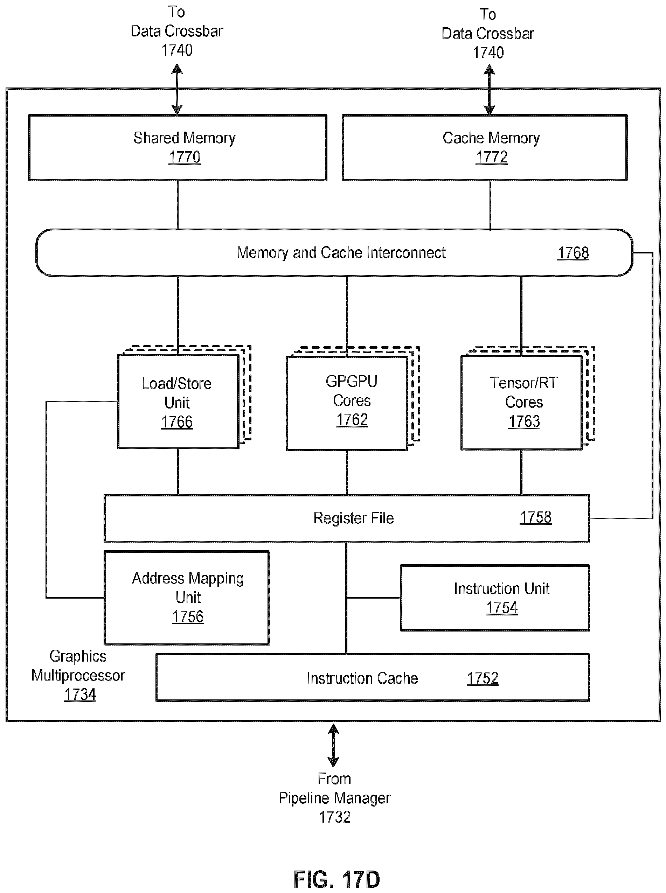

FIG. 17D shows an example of the graphics multiprocessor 1734 in which the graphics multiprocessor 1734 couples with the pipeline manager 1732 of the processing cluster 1714. The graphics multiprocessor 1734 has an execution pipeline including but not limited to an instruction cache 1752, an instruction unit 1754, an address mapping unit 1756, a register file 1758, one or more general purpose graphics processing unit (GPGPU) cores 1762, and one or more load/store units 1766. The GPGPU cores 1762 and load/store units 1766 are coupled with cache memory 1772 and shared memory 1770 via a memory and cache interconnect 1768. The graphics multiprocessor 1734 may additionally include tensor and/or ray-tracing cores 1763 that include hardware logic to accelerate matrix and/or ray-tracing operations.

The instruction cache 1752 may receive a stream of instructions to execute from the pipeline manager 1732. The instructions are cached in the instruction cache 1752 and dispatched for execution by the instruction unit 1754. The instruction unit 1754 can dispatch instructions as thread groups (e.g., warps), with each thread of the thread group assigned to a different execution unit within GPGPU core 1762. An instruction can access any of a local, shared, or global address space by specifying an address within a unified address space. The address mapping unit 1756 can be used to translate addresses in the unified address space into a distinct memory address that can be accessed by the load/store units 1766.

The register file 1758 provides a set of registers for the functional units of the graphics multiprocessor 1734. The register file 1758 provides temporary storage for operands connected to the data paths of the functional units (e.g., GPGPU cores 1762, load/store units 1766) of the graphics multiprocessor 1734. The register file 1758 may be divided between each of the functional units such that each functional unit is allocated a dedicated portion of the register file 1758. For example, the register file 1758 may be divided between the different warps being executed by the graphics multiprocessor 1734.

The GPGPU cores 1762 can each include floating point units (FPUs) and/or integer arithmetic logic units (ALUs) that are used to execute instructions of the graphics multiprocessor 1734. In some implementations, the GPGPU cores 1762 can include hardware logic that may otherwise reside within the tensor and/or ray-tracing cores 1763. The GPGPU cores 1762 can be similar in architecture or can differ in architecture. For example and in some examples, a first portion of the GPGPU cores 1762 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1734 can additionally include one or more fixed function or special function units to perform specific functions such as copy rectangle or pixel blending operations. One or more of the GPGPU cores can also include fixed or special function logic.

The GPGPU cores 1762 may include SIMD logic capable of performing a single instruction on multiple sets of data. Optionally, GPGPU cores 1762 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1768 is an interconnect network that connects each of the functional units of the graphics multiprocessor 1734 to the register file 1758 and to the shared memory 1770. For example, the memory and cache interconnect 1768 is a crossbar interconnect that allows the load/store unit 1766 to implement load and store operations between the shared memory 1770 and the register file 1758. The register file 1758 can operate at the same frequency as the GPGPU cores 1762, thus data transfer between the GPGPU cores 1762 and the register file 1758 is very low latency. The shared memory 1770 can be used to enable communication between threads that execute on the functional units within the graphics multiprocessor 1734. The cache memory 1772 can be used as a data cache for example, to cache texture data communicated between the functional units and the texture unit 1736. The shared memory 1770 can also be used as a program managed cached. The shared memory 1770 and the cache memory 1772 can couple with the data crossbar 1740 to enable communication with other components of the processing cluster. Threads executing on the GPGPU cores 1762 can programmatically store data within the shared memory in addition to the automatically cached data that is stored within the cache memory 1772.

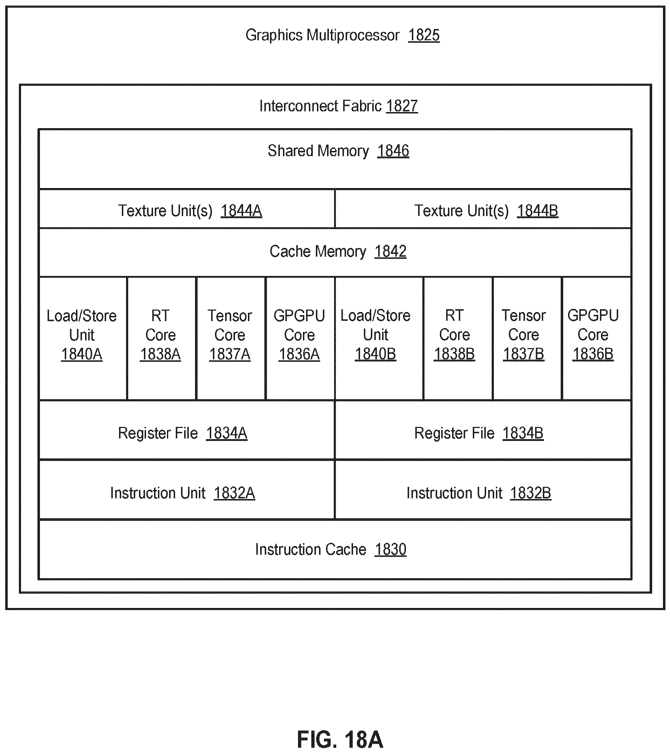

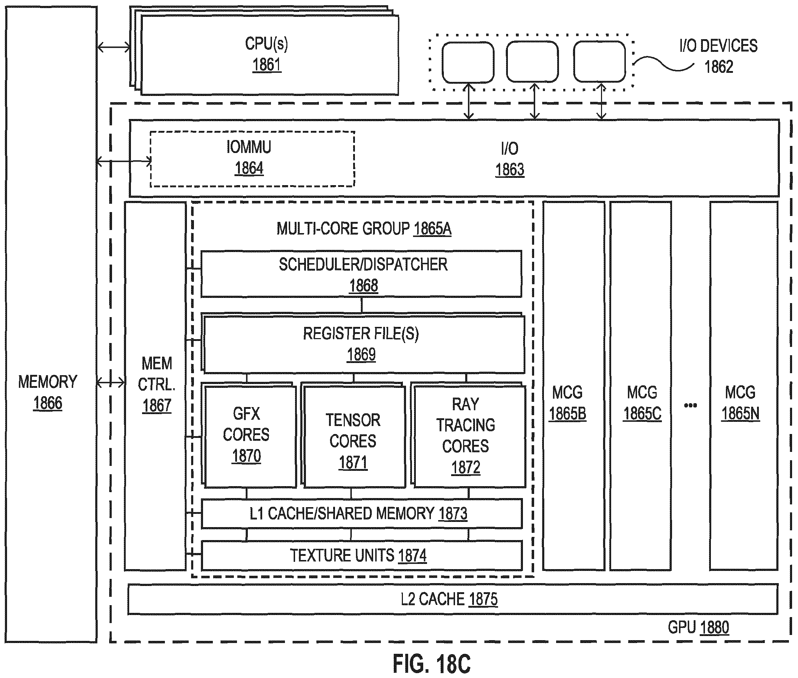

FIGS. 18A-18C illustrate additional graphics multiprocessors, according to examples. FIG. 18A-18B illustrate graphics multiprocessors 1825, 1850, which are related to the graphics multiprocessor 1734 of FIG. 17C and may be used in place of one of those. Therefore, the disclosure of any features in combination with the graphics multiprocessor 1734 herein also discloses a corresponding combination with the graphics multiprocessor(s) 1825, 1850, but is not limited to such. FIG. 18C illustrates a graphics processing unit (GPU) 1880 which includes dedicated sets of graphics processing resources arranged into multi-core groups 1865A-1865N, which correspond to the graphics multiprocessors 1825, 1850. The illustrated graphics multiprocessors 1825, 1850 and the multi-core groups 1865A-1865N can be streaming multiprocessors (SM) capable of simultaneous execution of a large number of execution threads.

The graphics multiprocessor 1825 of FIG. 18A includes multiple additional instances of execution resource units relative to the graphics multiprocessor 1734 of FIG. 17D. For example, the graphics multiprocessor 1825 can include multiple instances of the instruction unit 1832A-1832B, register file 1834A-1834B, and texture unit(s) 1844A-1844B. The graphics multiprocessor 1825 also includes multiple sets of graphics or compute execution units (e.g., GPGPU core 1836A-1836B, tensor core 1837A-1837B, ray-tracing core 1838A-1838B) and multiple sets of load/store units 1840A-1840B. The execution resource units have a common instruction cache 1830, texture and/or data cache memory 1842, and shared memory 1846.

The various components can communicate via an interconnect fabric 1827. The interconnect fabric 1827 may include one or more crossbar switches to enable communication between the various components of the graphics multiprocessor 1825. The interconnect fabric 1827 may be a separate, high-speed network fabric layer upon which each component of the graphics multiprocessor 1825 is stacked. The components of the graphics multiprocessor 1825 communicate with remote components via the interconnect fabric 1827. For example, the cores 1836A-1836B, 1837A-1837B, and 1838A-1838B can each communicate with shared memory 1846 via the interconnect fabric 1827. The interconnect fabric 1827 can arbitrate communication within the graphics multiprocessor 1825 to ensure a fair bandwidth allocation between components.

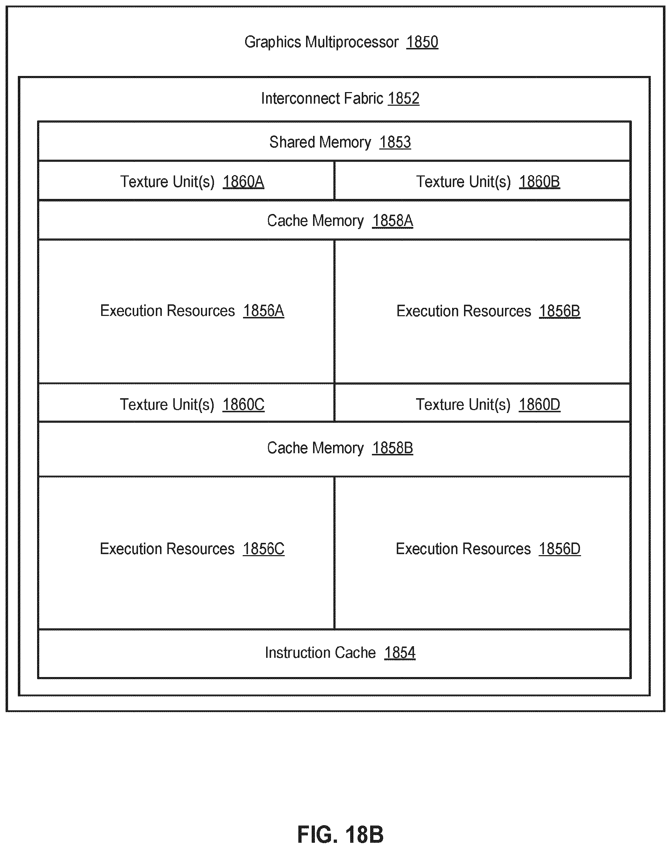

The graphics multiprocessor 1850 of FIG. 18B includes multiple sets of execution resources 1856A-1856D, where each set of execution resource includes multiple instruction units, register files, GPGPU cores, and load store units, as illustrated in FIG. 17D and FIG. 18A. The execution resources 1856A-1856D can work in concert with texture unit(s) 1860A-1860D for texture operations, while sharing an instruction cache 1854, and shared memory 1853. For example, the execution resources 1856A-1856D can share an instruction cache 1854 and shared memory 1853, as well as multiple instances of a texture and/or data cache memory 1858A-1858B. The various components can communicate via an interconnect fabric 1852 similar to the interconnect fabric 1827 of FIG. 18A.

Persons skilled in the art will understand that the architecture described in FIG. 1A, 17A-17D, and 18A-18B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1702 of FIG. 17A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (e.g., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 18C illustrates a graphics processing unit (GPU) 1880 which includes dedicated sets of graphics processing resources arranged into multi-core groups 1865A-1865N. While the details of only a single multi-core group 1865A are provided, it will be appreciated that the other multi-core groups 1865B-1865N may be equipped with the same or similar sets of graphics processing resources. Details described with respect to the multi-core groups 1865A-1865N may also apply to any graphics multiprocessor 1734, 1825, 1850 described herein.

As illustrated, a multi-core group 1865A may include a set of graphics cores 1870, a set of tensor cores 1871, and a set of ray tracing cores 1872. A scheduler/dispatcher 1868 schedules and dispatches the graphics threads for execution on the various cores 1870, 1871, 1872. A set of register files 1869 store operand values used by the cores 1870, 1871, 1872 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1873 store graphics data such as texture data, vertex data, pixel data, ray data, bounding volume data, etc., locally within each multi-core group 1865A. One or more texture units 1874 can also be used to perform texturing operations, such as texture mapping and sampling. A Level 2 (L2) cache 1875 shared by all or a subset of the multi-core groups 1865A-1865N stores graphics data and/or instructions for multiple concurrent graphics threads. As illustrated, the L2 cache 1875 may be shared across a plurality of multi-core groups 1865A-1865N. One or more memory controllers 1867 couple the GPU 1880 to a memory 1866 which may be a system memory (e.g., DRAM) and/or a dedicated graphics memory (e.g., GDDR6 memory).

Input/output (I/O) circuitry 1863 couples the GPU 1880 to one or more I/O devices 1862 such as digital signal processors (DSPs), network controllers, or user input devices. An on-chip interconnect may be used to couple the I/O devices 1862 to the GPU 1880 and memory 1866. One or more I/O memory management units (IOMMUs) 1864 of the I/O circuitry 1863 couple the I/O devices 1862 directly to the system memory 1866. Optionally, the IOMMU 1864 manages multiple sets of page tables to map virtual addresses to physical addresses in system memory 1866. The I/O devices 1862, CPU(s) 1861, and GPU(s) 1880 may then share the same virtual address space.

In one implementation of the IOMMU 1864, the IOMMU 1864 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1866). The base addresses of each of the first and second sets of page tables may be stored in control registers and swapped out on a context switch (e.g., so that the new context is provided with access to the relevant set of page tables). While not illustrated in FIG. 18C, each of the cores 1870, 1871, 1872 and/or multi-core groups 1865A-1865N may include translation lookaside buffers (TLBs) to cache guest virtual to guest physical translations, guest physical to host physical translations, and guest virtual to host physical translations.

The CPU(s) 1861, GPUs 1880, and I/O devices 1862 may be integrated on a single semiconductor chip and/or chip package. The illustrated memory 1866 may be integrated on the same chip or may be coupled to the memory controllers 1867 via an off-chip interface. In one implementation, the memory 1866 comprises GDDR6 memory which shares the same virtual address space as other physical system-level memories, although the underlying principles described herein are not limited to this specific implementation.

The tensor cores 1871 may include a plurality of execution units specifically designed to perform matrix operations, which are the fundamental compute operation used to perform deep learning operations. For example, simultaneous matrix multiplication operations may be used for neural network training and inferencing. The tensor cores 1871 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1871. The training of neural networks, in particular, requires a significant number of matrix dot product operations. In order to process an inner-product formulation of an N x N x N matrix multiply, the tensor cores 1871 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1871 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1871 support a sparse mode of operation for matrices in which the vast majority of values are zero. The tensor cores 1871 include support for sparse input matrices that are encoded in a sparse matrix representation (e.g., coordinate list encoding (COO), compressed sparse row (CSR), compress sparse column (CSC), etc.). The tensor cores 1871 also include support for compressed sparse matrix representations in the event that the sparse matrix representation may be further compressed. Compressed, encoded, and/or compressed and encoded matrix data, along with associated compression and/or encoding metadata, can be read by the tensor cores 1871 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1871, output matrix C may be output in a compressed format, a sparse encoding, or a compressed sparse encoding.

The ray tracing cores 1872 may accelerate ray tracing operations for both real-time ray tracing and non-real-time ray tracing implementations. In particular, the ray tracing cores 1872 may include ray traversal/intersection circuitry for performing ray traversal using bounding volume hierarchies (BVHs) and identifying intersections between rays and primitives enclosed within the BVH volumes. The ray tracing cores 1872 may also include circuitry for performing depth testing and culling (e.g., using a Z buffer or similar arrangement). In one implementation, the ray tracing cores 1872 perform traversal and intersection operations in concert with the image denoising techniques described herein, at least a portion of which may be executed on the tensor cores 1871. For example, the tensor cores 1871 may implement a deep learning neural network to perform denoising of frames generated by the ray tracing cores 1872. However, the CPU(s) 1861, graphics cores 1870, and/or ray tracing cores 1872 may also implement all or a portion of the denoising and/or deep learning algorithms.

In addition, as described above, a distributed approach to denoising may be employed in which the GPU 1880 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1872 may process all BVH traversal and/or ray-primitive intersections, saving the graphics cores 1870 from being overloaded with thousands of instructions per ray. For example, each ray tracing core 1872 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1865A can simply launch a ray probe, and the ray tracing cores 1872 independently perform ray traversal and intersection and return hit data (e.g., a hit, no hit, multiple hits, etc.) to the thread context. The other cores 1870, 1871 are freed to perform other graphics or compute work while the ray tracing cores 1872 perform the traversal and intersection operations.

Optionally, each ray tracing core 1872 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1870 and tensor cores 1871) are freed to perform other forms of graphics work.

In some examples described below, a hybrid rasterization/ray tracing approach is used in which work is distributed between the graphics cores 1870 and ray tracing cores 1872.

The ray tracing cores 1872 (and/or other cores 1870, 1871) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1872, graphics cores 1870 and tensor cores 1871 is Vulkan API (e.g., Vulkan version 1.1.85 and later). Note, however, that the underlying principles described herein are not limited to any particular ray tracing ISA.

In general, the various cores 1872, 1871, 1870 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1872 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1872 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1872 can also be used to perform computations that are not directly analogous to ray tracing. For example, mesh projection, mesh refinement, and volume sampling computations can be accelerated using the ray tracing cores 1872. Generic coordinate space calculations, such as nearest neighbor calculations can also be performed. For example, the set of points near a given point can be discovered by defining a bounding box in the coordinate space around the point. BVH and ray probe logic within the ray tracing cores 1872 can then be used to determine the set of point intersections within the bounding box. The intersections constitute the origin point and the nearest neighbors to that origin point. Computations that are performed using the ray tracing cores 1872 can be performed in parallel with computations performed on the graphics cores 1872 and tensor cores 1871. A shader compiler can be configured to compile a compute shader or other general-purpose graphics processing program into low level primitives that can be parallelized across the graphics cores 1870, tensor cores 1871, and ray tracing cores 1872.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Examples described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

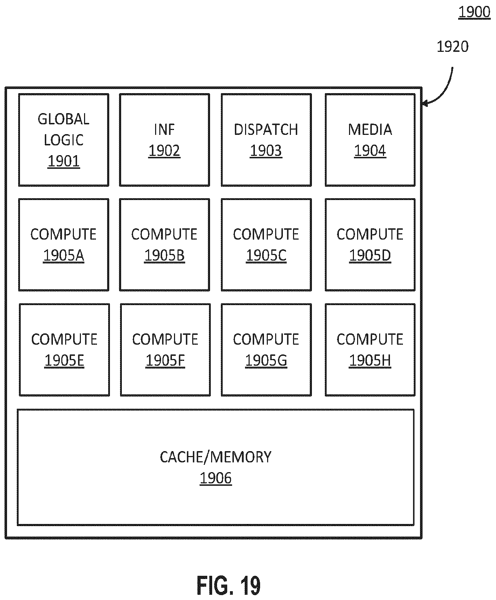

FIG. 19 shows a parallel compute system 1900, according to some examples. In some examples the parallel compute system 1900 includes a parallel processor 1920, which can be a graphics processor or compute accelerator as described herein. The parallel processor 1920 includes a global logic unit 1901, an interface 1902, a thread dispatcher 1903, a media unit 1904, a set of compute units 1905A-1905H, and a cache/memory units 1906. The global logic unit 1901, in some examples, includes global functionality for the parallel processor 1920, including device configuration registers, global schedulers, power management logic, and the like. The interface 1902 can include a front-end interface for the parallel processor 1920. The thread dispatcher 1903 can receive workloads from the interface 1902 and dispatch threads for the workload to the compute units 1905A-1905H. If the workload includes any media operations, at least a portion of those operations can be performed by the media unit 1904. The media unit can also offload some operations to the compute units 1905A-1905H. The cache/memory units 1906 can include cache memory (e.g., L3 cache) and local memory (e.g., HBM, GDDR) for the parallel processor 1920.

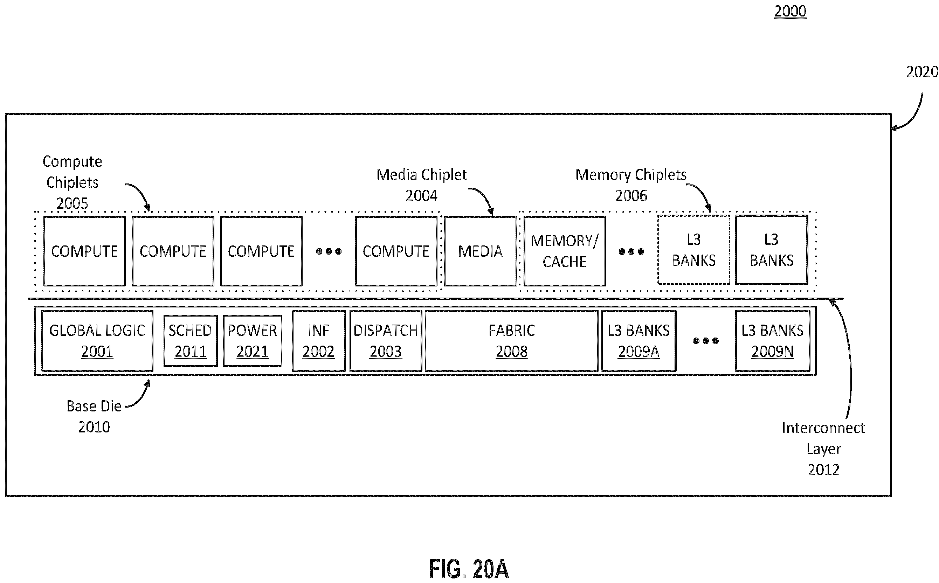

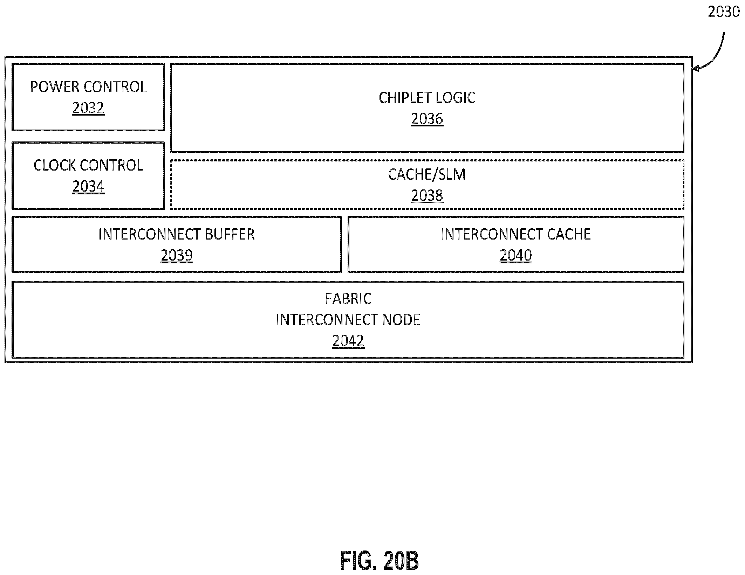

FIGS. 20A-20B illustrate a hybrid logical/physical view of a disaggregated parallel processor, according to examples described herein. FIG. 20A illustrates a disaggregated parallel compute system 2000. FIG. 20B illustrates a chiplet 2030 of the disaggregated parallel compute system 2000.

As shown in FIG. 20A, a disaggregated compute system 2000 can include a parallel processor 2020 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 2005, a media chiplet 2004, and memory chiplets 2006. Each chiplet can be separately manufactured using different process technologies. For example, compute chiplets 2005 may be manufactured using the smallest or most advanced process technology available at the time of fabrication, while memory chiplets 2006 or other chiplets (e.g., I/O, networking, etc.) may be manufactured using a larger or less advanced process technologies.

The various chiplets can be bonded to a base die 2010 and configured to communicate with each other and logic within the base die 2010 via an interconnect layer 2012. In some examples, the base die 2010 can include global logic 2001, which can include scheduler 2011 and power management 2021 logic units, an interface 2002, a dispatch unit 2003, and an interconnect fabric module 2008 coupled with or integrated with one or more L3 cache banks 2009A-2009N. The interconnect fabric 2008 can be an inter-chiplet fabric that is integrated into the base die 2010. Logic chiplets can use the fabric 2008 to relay messages between the various chiplets. Additionally, L3 cache banks 2009A-2009N in the base die and/or L3 cache banks within the memory chiplets 2006 can cache data read from and transmitted to DRAM chiplets within the memory chiplets 2006 and to system memory of a host.

In some examples the global logic 2001 is a microcontroller that can execute firmware to perform scheduler 2011 and power management 2021 functionality for the parallel processor 2020. The microcontroller that executes the global logic can be tailored for the target use case of the parallel processor 2020. The scheduler 2011 can perform global scheduling operations for the parallel processor 2020. The power management 2021 functionality can be used to enable or disable individual chiplets within the parallel processor when those chiplets are not in use.

The various chiplets of the parallel processor 2020 can be designed to perform specific functionality that, in existing designs, would be integrated into a single die. A set of compute chiplets 2005 can include clusters of compute units (e.g., execution units, streaming multiprocessors, etc.) that include programmable logic to execute compute or graphics shader instructions. A media chiplet 2004 can include hardware logic to accelerate media encode and decode operations. Memory chiplets 2006 can include volatile memory (e.g., DRAM) and one or more SRAM cache memory banks (e.g., L3 banks).

As shown in FIG. 20B, each chiplet 2030 can include common components and application specific components. Chiplet logic 2036 within the chiplet 2030 can include the specific components of the chiplet, such as an array of streaming multiprocessors, compute units, or execution units described herein. The chiplet logic 2036 can couple with an optional cache or shared local memory 2038 or can include a cache or shared local memory within the chiplet logic 2036. The chiplet 2030 can include a fabric interconnect node 2042 that receives commands via the inter-chiplet fabric. Commands and data received via the fabric interconnect node 2042 can be stored temporarily within an interconnect buffer 2039. Data transmitted to and received from the fabric interconnect node 2042 can be stored in an interconnect cache 2040. Power control 2032 and clock control 2034 logic can also be included within the chiplet. The power control 2032 and clock control 2034 logic can receive configuration commands via the fabric can configure dynamic voltage and frequency scaling for the chiplet 2030. In some examples, each chiplet can have an independent clock domain and power domain and can be clock gated and power gated independently of other chiplets.

At least a portion of the components within the illustrated chiplet 2030 can also be included within logic embedded within the base die 2010 of FIG. 20A. For example, logic within the base die that communicates with the fabric can include a version of the fabric interconnect node 2042. Base die logic that can be independently clock or power gated can include a version of the power control 2032 and/or clock control 2034 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

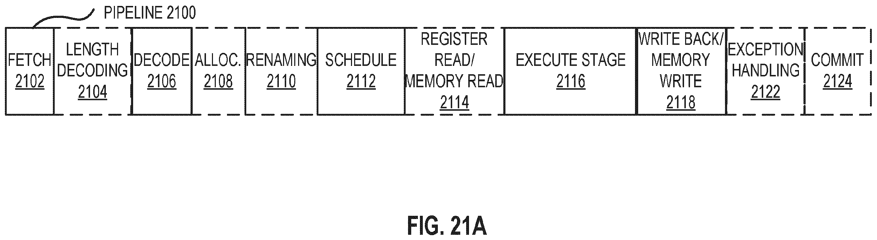

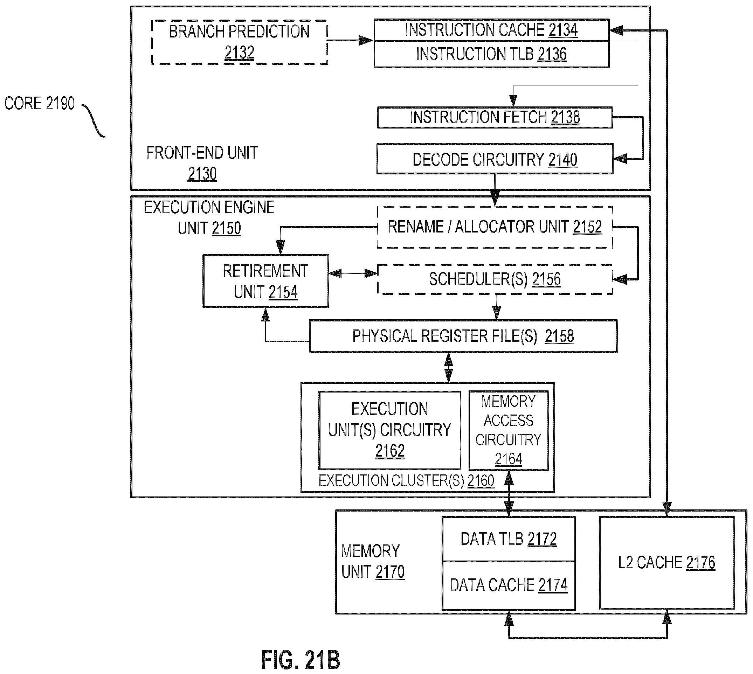

FIG. 21A is a block diagram illustrating both an example in-order pipeline and an example register renaming, out-of-order issue/execution pipeline according to examples. FIG. 21B is a block diagram illustrating both an example in-order architecture core and an example register renaming, out-of-order issue/execution architecture core to be included in a processor according to examples. The solid lined boxes in FIGS. 21A-21B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 21A, a processor pipeline 2100 includes a fetch stage 2102, an optional length decoding stage 2104, a decode stage 2106, an optional allocation (Alloc) stage 2108, an optional renaming stage 2110, a schedule (also known as a dispatch or issue) stage 2112, an optional register read/memory read stage 2114, an execute stage 2116, a write back/memory write stage 2118, an optional exception handling stage 2122, and an optional commit stage 2124. One or more operations can be performed in each of these processor pipeline stages. For example, during the fetch stage 2102, one or more instructions are fetched from instruction memory, and during the decode stage 2106, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 2106 and the register read/memory read stage 2114 may be combined into one pipeline stage. In some examples, during the execute stage 2116, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 21B may implement the pipeline 2100 as follows: 1) the instruction fetch circuitry 2138 performs the fetch and length decoding stages 2102 and 2104; 2) the decode circuitry 2140 performs the decode stage 2106; 3) the rename/allocator unit circuitry 2152 performs the allocation stage 2108 and renaming stage 2110; 4) the scheduler(s) circuitry 2156 performs the schedule stage 2112; 5) the physical register file(s) circuitry 2158 and the memory unit circuitry 2170 perform the register read/memory read stage 2114; the execution cluster(s) 2160 perform the execute stage 2116; 6) the memory unit circuitry 2170 and the physical register file(s) circuitry 2158 perform the write back/memory write stage 2118; 7) various circuitry may be involved in the exception handling stage 2122; and 8) the retirement unit circuitry 2154 and the physical register file(s) circuitry 2158 perform the commit stage 2124.

FIG. 21B shows a processor core 2190 including front-end unit circuitry 2130 coupled to execution engine unit circuitry 2150, and both are coupled to memory unit circuitry 2170. The core 2190 may be a reduced instruction set architecture computing (RISC) core, a complex instruction set architecture computing (CISC) core, a very long instruction word (VLIW) core, or a hybrid or alternative core type. As yet another option, the core 2190 may be a special-purpose core, such as, for example, a network or communication core, compression engine, coprocessor core, general purpose computing graphics processing unit (GPGPU) core, graphics core, or the like.

The front-end unit circuitry 2130 may include branch prediction circuitry 2132 coupled to instruction cache circuitry 2134, which is coupled to an instruction translation lookaside buffer (TLB) 2136, which is coupled to instruction fetch circuitry 2138, which is coupled to decode circuitry 2140. In some examples, the instruction cache circuitry 2134 is included in the memory unit circuitry 2170 rather than the front-end circuitry 2130. The decode circuitry 2140 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2140 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 2140 may be implemented using various different mechanisms. Examples of suitable mechanisms include, but are not limited to, look-up tables, hardware implementations, programmable logic arrays (PLAs), microcode read only memories (ROMs), etc. In some examples, the core 2190 includes a microcode ROM (not shown) or other medium that stores microcode for certain macroinstructions (e.g., in decode circuitry 2140 or otherwise within the front-end circuitry 2130). In some examples, the decode circuitry 2140 includes a micro-operation (micro-op) or operation cache (not shown) to hold/cache decoded operations, micro-tags, or micro-operations generated during the decode or other stages of the processor pipeline 2100. The decode circuitry 2140 may be coupled to rename/allocator unit circuitry 2152 in the execution engine circuitry 2150.

The execution engine circuitry 2150 includes the rename/allocator unit circuitry 2152 coupled to retirement unit circuitry 2154 and a set of one or more scheduler(s) circuitry 2156. The scheduler(s) circuitry 2156 represents any number of different schedulers, including reservations stations, central instruction window, etc. In some examples, the scheduler(s) circuitry 2156 can include arithmetic logic unit (ALU) scheduler/scheduling circuitry, ALU queues, address generation unit (AGU) scheduler/scheduling circuitry, AGU queues, etc. The scheduler(s) circuitry 2156 is coupled to the physical register file(s) circuitry 2158. Each of the physical register file(s) circuitry 2158 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 2158 includes vector registers unit circuitry, writemask registers unit circuitry, and scalar register unit circuitry. These register units may provide architectural vector registers, vector mask registers, general-purpose registers, etc. The physical register file(s) circuitry 2158 is coupled to the retirement unit circuitry 2154 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2154 and the physical register file(s) circuitry 2158 are coupled to the execution cluster(s) 2160. The execution cluster(s) 2160 includes a set of one or more execution unit(s) circuitry 2162 and a set of one or more memory access circuitry 2164. The execution unit(s) circuitry 2162 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2156, physical register file(s) circuitry 2158, and execution cluster(s) 2160 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2164). It should also be understood that where separate pipelines are used, one or more of these pipelines may be out-of-order issue/execution and the rest in-order.

In some examples, the execution engine unit circuitry 2150 may perform load store unit (LSU) address/data pipelining to an Advanced Microcontroller Bus (AMB) interface (not shown), and address phase and writeback, data phase load, store, and branches.

The set of memory access circuitry 2164 is coupled to the memory unit circuitry 2170, which includes data TLB circuitry 2172 coupled to data cache circuitry 2174 coupled to level 2 (L2) cache circuitry 2176. In some examples, the memory access circuitry 2164 may include load unit circuitry, store address unit circuitry, and store data unit circuitry, each of which is coupled to the data TLB circuitry 2172 in the memory unit circuitry 2170. The instruction cache circuitry 2134 is further coupled to the level 2 (L2) cache circuitry 2176 in the memory unit circuitry 2170. In some examples, the instruction cache 2134 and the data cache 2174 are combined into a single instruction and data cache (not shown) in L2 cache circuitry 2176, level 3 (L3) cache circuitry (not shown), and/or main memory. The L2 cache circuitry 2176 is coupled to one or more other levels of cache and eventually to a main memory.

The core 2190 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 2190 includes logic to support a packed data instruction set architecture extension (e.g., AVX1, AVX2), thereby allowing the operations used by many multimedia applications to be performed using packed data.

### Example Execution Unit(s) Circuitry.

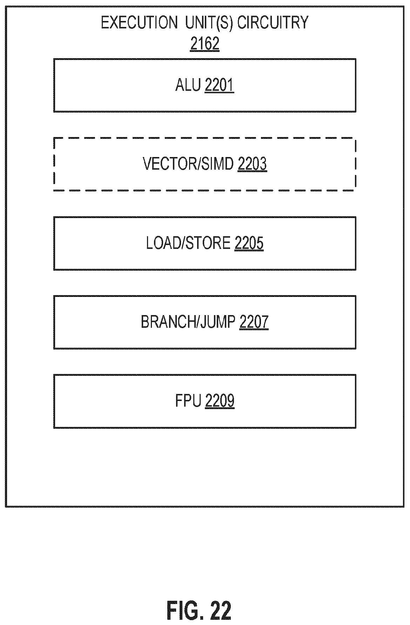

FIG. 22 illustrates examples of execution unit(s) circuitry, such as execution unit(s) circuitry 2162 of FIG. 21B. As illustrated, execution unit(s) circuity 2162 may include one or more ALU circuits 2201, optional vector/single instruction multiple data (SIMD) circuits 2203, load/store circuits 2205, branch/jump circuits 2207, and/or Floating-point unit (FPU) circuits 2209. ALU circuits 2201 perform integer arithmetic and/or Boolean operations. Vector/SIMD circuits 2203 perform vector/SIMD operations on packed data (such as SIMD/vector registers). Load/store circuits 2205 execute load and store instructions to load data from memory into registers or store from registers to memory. Load/store circuits 2205 may also generate addresses. Branch/jump circuits 2207 cause a branch or jump to a memory address depending on the instruction. FPU circuits 2209 perform floating-point arithmetic. The width of the execution unit(s) circuitry 2162 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

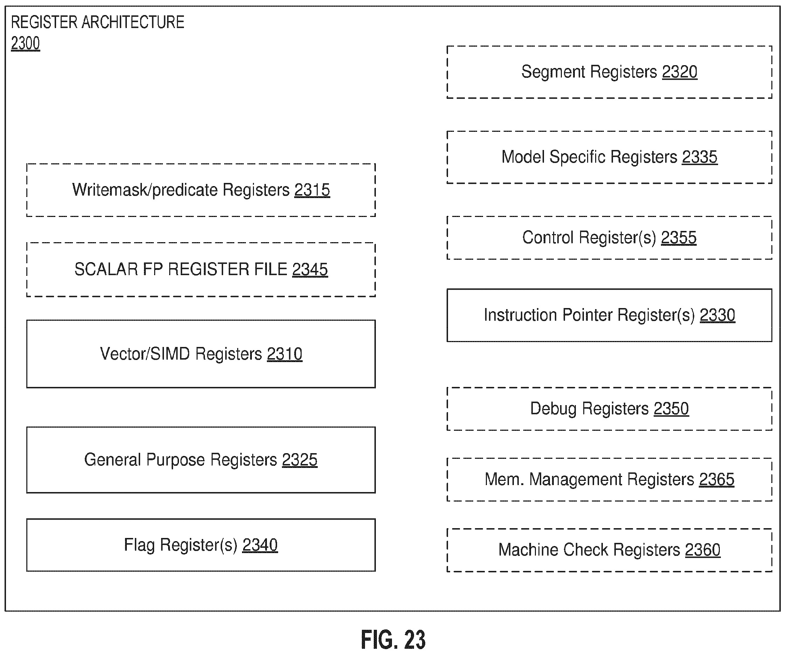

FIG. 23 is a block diagram of a register architecture 2300 according to some examples. As illustrated, the register architecture 2300 includes vector/SIMD registers 2310 that vary from 128-bit to 1,024 bits width. In some examples, the vector/SIMD registers 2310 are physically 512-bits and, depending upon the mapping, only some of the lower bits are used. For example, in some examples, the vector/SIMD registers 2310 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2300 includes writemask/predicate registers 2315. For example, in some examples, there are 8 writemask/predicate registers (sometimes called k0 through k7) that are each 16-bit, 32-bit, 64-bit, or 128-bit in size. Writemask/predicate registers 2315 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2315 corresponds to a data element position of the destination. In other examples, the writemask/predicate registers 2315 are scalable and consists of a set number of enable bits for a given vector element (e.g., 8 enable bits per 64-bit vector element).

The register architecture 2300 includes a plurality of general-purpose registers 2325. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2300 includes scalar floating-point (FP) register file 2345 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2340 (e.g., EFLAGS, RFLAGS, etc.) store status and control information for arithmetic, compare, and system operations. For example, the one or more flag registers 2340 may store condition code information such as carry, parity, auxiliary carry, zero, sign, and overflow. In some examples, the one or more flag registers 2340 are called program status and control registers.

Segment registers 2320 contain segment points for use in accessing memory. In some examples, these registers are referenced by the names CS, DS, SS, ES, FS, and GS.

Model specific registers or machine specific registers (MSRs) 2335 control and report on processor performance. Most MSRs 2335 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2360 consist of control, status, and error reporting MSRs that are used to detect and report on hardware errors. Control register(s) 2355 (e.g., CR0-CR4) determine the operating mode of a processor (e.g., processor 1470, 1480, 1438, 1415, and/or 1500) and the characteristics of a currently executing task. In some examples, MSRs 2335 are a subset of control registers 2355.

One or more instruction pointer register(s) 2330 store an instruction pointer value. Debug registers 2350 control and allow for the monitoring of a processor or core's debugging operations.

Memory (mem) management registers 2365 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2300 may, for example, be used in register file / memory 112, or physical register file(s) circuitry 2158.

### Instruction Set Architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

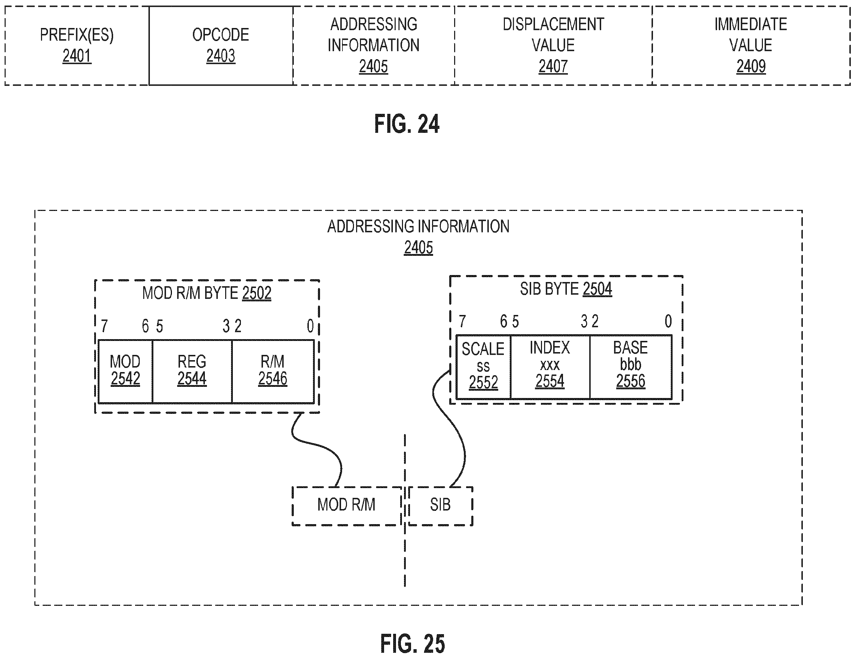

FIG. 24 illustrates examples of an instruction format. As illustrated, an instruction may include multiple components including, but not limited to, one or more fields for: one or more prefixes 2401, an opcode 2403, addressing information 2405 (e.g., register identifiers, memory addressing information, etc.), a displacement value 2407, and/or an immediate value 2409. Note that some instructions utilize some or all the fields of the format whereas others may only use the field for the opcode 2403. In some examples, the order illustrated is the order in which these fields are to be encoded, however, it should be appreciated that in other examples these fields may be encoded in a different order, combined, etc.

The prefix(es) field(s) 2401, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2403 is used to at least partially define the operation to be performed upon a decoding of the instruction. In some examples, a primary opcode encoded in the opcode field 2403 is one, two, or three bytes in length. In other examples, a primary opcode can be a different length. An additional 3-bit opcode field is sometimes encoded in another field.

The addressing information field 2405 is used to address one or more operands of the instruction, such as a location in memory or one or more registers. FIG. 25 illustrates examples of the addressing information field 2405. In this illustration, an optional MOD R/M byte 2502 and an optional Scale, Index, Base (SIB) byte 2504 are shown. The MOD R/M byte 2502 and the SIB byte 2504 are used to encode up to two operands of an instruction, each of which is a direct register or effective memory address. Note that both of these fields are optional in that not all instructions include one or more of these fields. The MOD R/M byte 2502 includes a MOD field 2542, a register (reg) field 2544, and R/M field 2546.

The content of the MOD field 2542 distinguishes between memory access and non-memory access modes. In some examples, when the MOD field 2542 has a binary value of 11 (11b), a register-direct addressing mode is utilized, and otherwise a register-indirect addressing mode is used.

The register field 2544 may encode either the destination register operand or a source register operand or may encode an opcode extension and not be used to encode any instruction operand. The content of register field 2544, directly or through address generation, specifies the locations of a source or destination operand (either in a register or in memory). In some examples, the register field 2544 is supplemented with an additional bit from a prefix (e.g., prefix 2401) to allow for greater addressing.

The R/M field 2546 may be used to encode an instruction operand that references a memory address or may be used to encode either the destination register operand or a source register operand. Note the R/M field 2546 may be combined with the MOD field 2542 to dictate an addressing mode in some examples.

The SIB byte 2504 includes a scale field 2552, an index field 2554, and a base field 2556 to be used in the generation of an address. The scale field 2552 indicates a scaling factor. The index field 2554 specifies an index register to use. In some examples, the index field 2554 is supplemented with an additional bit from a prefix (e.g., prefix 2401) to allow for greater addressing. The base field 2556 specifies a base register to use. In some examples, the base field 2556 is supplemented with an additional bit from a prefix (e.g., prefix 2401) to allow for greater addressing. In practice, the content of the scale field 2552 allows for the scaling of the content of the index field 2554 for memory address generation (e.g., for address generation that uses 2scale * index + base).

Some addressing forms utilize a displacement value to generate a memory address. For example, a memory address may be generated according to 2scale * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2407 provides this value. Additionally, in some examples, a displacement factor usage is encoded in the MOD field of the addressing information field 2405 that indicates a compressed displacement scheme for which a displacement value is calculated and stored in the displacement field 2407.

In some examples, the immediate value field 2409 specifies an immediate value for the instruction. An immediate value may be encoded as a 1-byte value, a 2-byte value, a 4-byte value, etc.

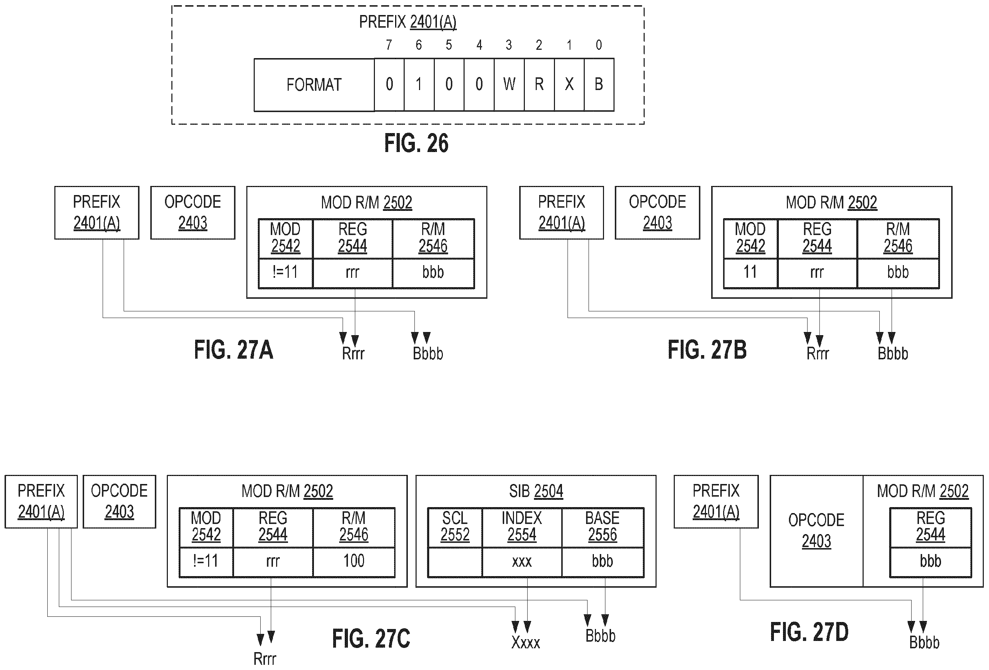

FIG. 26 illustrates examples of a first prefix 2401(A). In some examples, the first prefix 2401(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2401(A) may specify up to three registers using 3-bit fields depending on the format: 1) using the reg field 2544 and the R/M field 2546 of the MOD R/M byte 2502; 2) using the MOD R/M byte 2502 with the SIB byte 2504 including using the reg field 2544 and the base field 2556 and index field 2554; or 3) using the register field of an opcode.

In the first prefix 2401(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD R/M reg field 2544 and MOD R/M R/M field 2546 alone can each only address 8 registers.

In the first prefix 2401(A), bit position 2 (R) may be an extension of the MOD R/M reg field 2544 and may be used to modify the MOD R/M reg field 2544 when that field encodes a general-purpose register, a 64-bit packed data register (e.g., an SSE register), or a control or debug register. R is ignored when MOD R/M byte 2502 specifies other registers or defines an extended opcode.

Bit position 1 (X) may modify the SIB byte index field 2554.

Bit position 0 (B) may modify the base in the MOD R/M R/M field 2546 or the SIB byte base field 2556; or it may modify the opcode register field used for accessing general purpose registers (e.g., general purpose registers 2325).

FIGS. 27A-27D illustrate examples of how the R, X, and B fields of the first prefix 2401(A) are used. FIG. 27A illustrates R and B from the first prefix 2401(A) being used to extend the reg field 2544 and R/M field 2546 of the MOD R/M byte 2502 when the SIB byte 25 04 is not used for memory addressing. FIG. 27B illustrates R and B from the first prefix 2401(A) being used to extend the reg field 2544 and R/M field 2546 of the MOD R/M byte 2502 when the SIB byte 25 04 is not used (register-register addressing). FIG. 27C illustrates R, X, and B from the first prefix 2401(A) being used to extend the reg field 2544 of the MOD R/M byte 2502 and the index field 2554 and base field 2556 when the SIB byte 25 04 being used for memory addressing. FIG. 27D illustrates B from the first prefix 2401(A) being used to extend the reg field 2544 of the MOD R/M byte 2502 when a register is encoded in the opcode 2403.

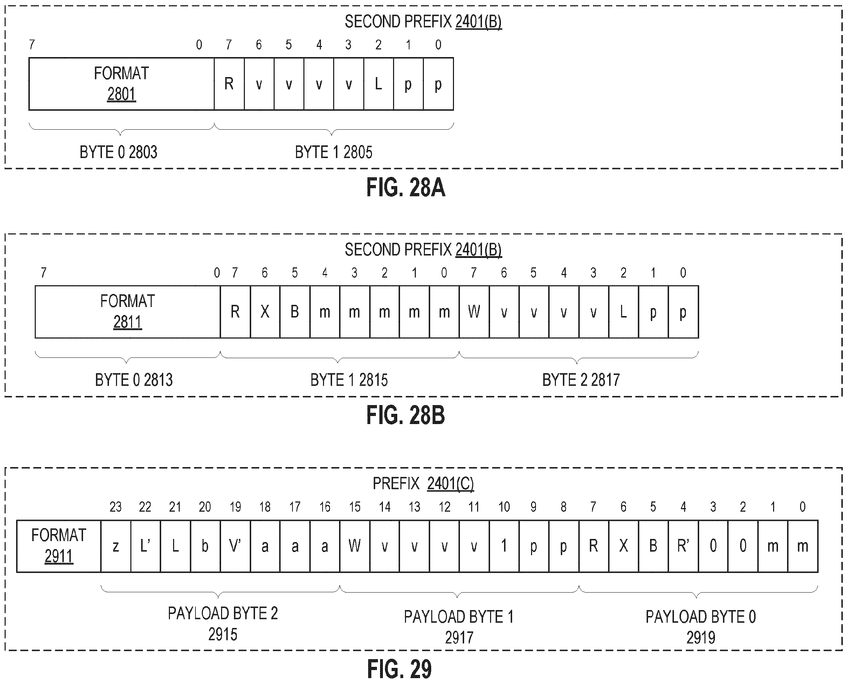

FIGS. 28A-28B illustrate examples of a second prefix 2401(B). In some examples, the second prefix 2401(B) is an example of a VEX prefix. The second prefix 2401(B) encoding allows instructions to have more than two operands, and allows SIMD vector registers (e.g., vector/SIMD registers 2310) to be longer than 64-bits (e.g., 128-bit and 256-bit). The use of the second prefix 2401(B) provides for three-operand (or more) syntax. For example, previous two-operand instructions performed operations such as A = A + B, which overwrites a source operand. The use of the second prefix 2401(B) enables operands to perform nondestructive operations such as A = B + C.

In some examples, the second prefix 2401(B) comes in two forms - a two-byte form and a three-byte form. The two-byte second prefix 2401(B) is used mainly for 128-bit, scalar, and some 256-bit instructions; while the three-byte second prefix 2401(B) provides a compact replacement of the first prefix 2401(A) and 3-byte opcode instructions.

FIG. 28A illustrates examples of a two-byte form of the second prefix 2401(B). In some examples, a format field 2801 (byte 0 2803) contains the value C5H. In some examples, byte 1 2805 includes an "R" value in bit[7]. This value is the complement of the "R" value of the first prefix 2401(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2546 to encode the instruction operand that references a memory address or encode either the destination register operand or a source register operand.

Instructions that use this prefix may use the MOD R/M reg field 2544 to encode either the destination register operand or a source register operand, or to be treated as an opcode extension and not used to encode any instruction operand.

For instruction syntax that support four operands, vvvv, the MOD R/M R/M field 2546 and the MOD R/M reg field 2544 encode three of the four operands. Bits[7:4] of the immediate value field 2409 are then used to encode the third source register operand.

FIG. 28B illustrates examples of a three-byte form of the second prefix 2401(B). In some examples, a format field 2811 (byte 0 2813) contains the value C4H. Byte 1 2815 includes in bits[7:5] "R," "X," and "B" which are the complements of the same values of the first prefix 2401(A). Bits[4:0] of byte 1 2815 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2817 is used similar to W of the first prefix 2401(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2546 to encode the instruction operand that references a memory address or encode either the destination register operand or a source register operand.

Instructions that use this prefix may use the MOD R/M reg field 2544 to encode either the destination register operand or a source register operand, or to be treated as an opcode extension and not used to encode any instruction operand.

For instruction syntax that support four operands, vvvv, the MOD R/M R/M field 2546, and the MOD R/M reg field 2544 encode three of the four operands. Bits[7:4] of the immediate value field 2409 are then used to encode the third source register operand.

FIG. 29 illustrates examples of a third prefix 2401(C). In some examples, the third prefix 2401(C) is an example of an EVEX prefix. The third prefix 2401(C) is a four-byte prefix.

The third prefix 2401(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 23) or predication utilize this prefix. Opmask register allow for conditional processing or selection control. Opmask instructions, whose source/destination operands are opmask registers and treat the content of an opmask register as a single value, are encoded using the second prefix 2401(B).

The third prefix 2401(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2401(C) is a format field 2911 that has a value, in some examples, of 62H. Subsequent bytes are referred to as payload bytes 2915-2919 and collectively form a 24-bit value of P[23:0] providing specific capability in the form of one or more fields (detailed herein).

In some examples, P[1:0] of payload byte 2919 are identical to the low two mm bits. P[3:2] are reserved in some examples. Bit P[4] (R') allows access to the high 16 vector register set when combined with P[7] and the MOD R/M reg field 2544. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2544 and MOD R/M R/M field 2546. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2401(A) and second prefix 2401(B) and may serve as an opcode extension bit or operand size promotion.

P[18:16] specify the index of a register in the opmask (writemask) registers (e.g., writemask/predicate registers 2315). In some examples, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a nondestructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2401(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### Graphics Execution Units

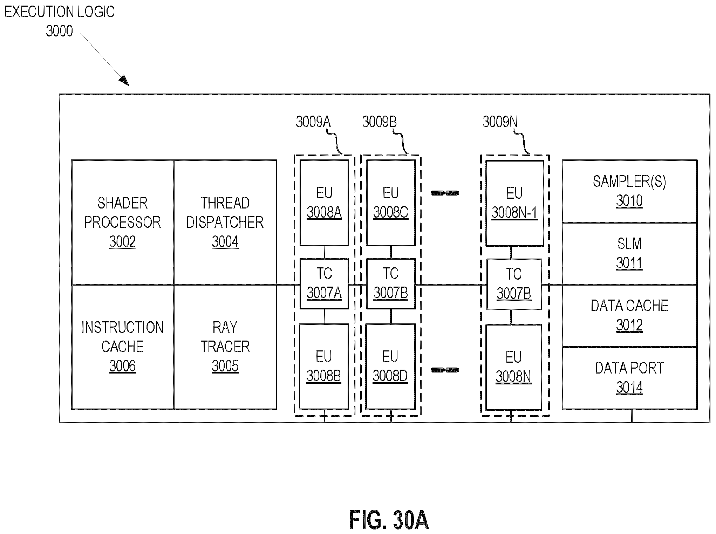

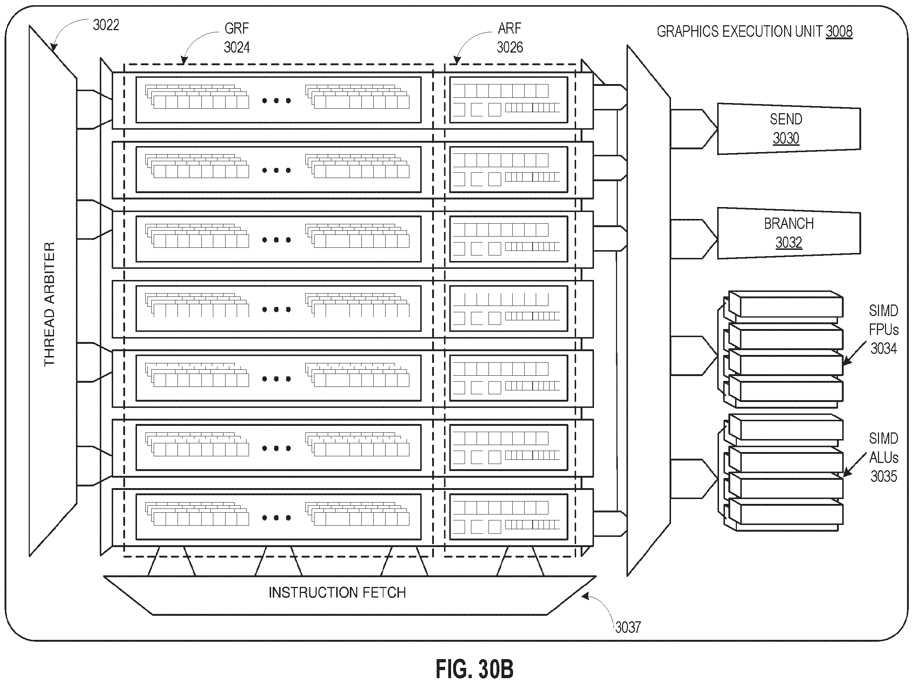

FIGS. 30A-30B illustrate thread execution logic 3000 including an array of processing elements employed in a graphics processor core according to examples described herein. Elements of Figures 30A-30B having the same reference numbers (or names) as the elements of any other figure herein can operate or function in any manner similar to that described elsewhere herein, but are not limited to such. Figure 30A is representative of an execution unit within a general-purpose graphics processor, while Figure 30B is representative of an execution unit that may be used within a compute accelerator.

As illustrated in Figure 30A, in some examples thread execution logic 3000 includes a shader processor 3002, a thread dispatcher 3004, instruction cache 3006, a scalable execution unit array including a plurality of execution units 3008A-3008N, a sampler 3010, shared local memory 3011, a data cache 3012, and a data port 3014. In some examples the scalable execution unit array can dynamically scale by enabling or disabling one or more execution units (e.g., any of execution units 3008A, 3008B, 3008C, 3008D, through 3008N-1 and 3008N) based on the computational requirements of a workload. In some examples the included components are interconnected via an interconnect fabric that links to each of the components. In some examples, thread execution logic 3000 includes one or more connections to memory, such as system memory or cache memory, through one or more of instruction cache 3006, data port 3014, sampler 3010, and execution units 3008A-3008N. In some examples, each execution unit (e.g., 3008A) is a stand-alone programmable general-purpose computational unit that is capable of executing multiple simultaneous hardware threads while processing multiple data elements in parallel for each thread. In various examples, the array of execution units 3008A-3008N is scalable to include any number individual execution units.

In some examples, the execution units 3008A-3008N are primarily used to execute shader programs. A shader processor 3002 can process the various shader programs and dispatch execution threads associated with the shader programs via a thread dispatcher 3004. In some examples the thread dispatcher includes logic to arbitrate thread initiation requests from the graphics and media pipelines and instantiate the requested threads on one or more execution unit in the execution units 3008A-3008N. For example, a geometry pipeline can dispatch vertex, tessellation, or geometry shaders to the thread execution logic for processing. In some examples, thread dispatcher 3004 can also process runtime thread spawning requests from the executing shader programs.

In some examples, the execution units 3008A-3008N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 3008A-3008N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 3008A-3008N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 3008A-3008N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 3008A-3008N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 3009A-3009N having thread control logic (3007A-3007N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 3009A-3009N includes at least two execution units. For example, fused execution unit 3009A includes a first EU 3008A, second EU 3008B, and thread control logic 3007A that is common to the first EU 3008A and the second EU 3008B. The thread control logic 3007A controls threads executed on the fused graphics execution unit 3009A, allowing each EU within the fused execution units 3009A-3009N to execute using a common instruction pointer register.

One or more internal instruction caches (e.g., 3006) are included in the thread execution logic 3000 to cache thread instructions for the execution units. In some examples, one or more data caches (e.g., 3012) are included to cache thread data during thread execution. Threads executing on the execution logic 3000 can also store explicitly managed data in the shared local memory 3011. In some examples, a sampler 3010 is included to provide texture sampling for 3D operations and media sampling for media operations. In some examples, sampler 3010 includes specialized texture or media sampling functionality to process texture or media data during the sampling process before providing the sampled data to an execution unit.

During execution, the graphics and media pipelines send thread initiation requests to thread execution logic 3000 via thread spawning and dispatch logic. Once a group of geometric objects has been processed and rasterized into pixel data, pixel processor logic (e.g., pixel shader logic, fragment shader logic, etc.) within the shader processor 3002 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 3002 then executes an application programming interface (API)-supplied pixel or fragment shader program. To execute the shader program, the shader processor 3002 dispatches threads to an execution unit (e.g., 3008A) via thread dispatcher 3004. In some examples, shader processor 3002 uses texture sampling logic in the sampler 3010 to access texture data in texture maps stored in memory. Arithmetic operations on the texture data and the input geometry data compute pixel color data for each geometric fragment, or discards one or more pixels from further processing.

In some examples, the data port 3014 provides a memory access mechanism for the thread execution logic 3000 to output processed data to memory for further processing on a graphics processor output pipeline. In some examples, the data port 3014 includes or couples to one or more cache memories (e.g., data cache 3012) to cache data for memory access via the data port.

In some examples, the execution logic 3000 can also include a ray tracer 3005 that can provide ray tracing acceleration functionality. The ray tracer 3005 can support a ray tracing instruction set that includes instructions/functions for ray generation.

Figure 30B illustrates exemplary internal details of an execution unit 3008, according to examples. A graphics execution unit 3008 can include an instruction fetch unit 3037, a general register file array (GRF) 3024, an architectural register file array (ARF) 3026, a thread arbiter 3022, a send unit 3030, a branch unit 3032, a set of SIMD floating point units (FPUs) 3034, and in some examples a set of dedicated integer SIMD ALUs 3035. The GRF 3024 and ARF 3026 includes the set of general register files and architecture register files associated with each simultaneous hardware thread that may be active in the graphics execution unit 3008. In some examples, per thread architectural state is maintained in the ARF 3026, while data used during thread execution is stored in the GRF 3024. The execution state of each thread, including the instruction pointers for each thread, can be held in thread-specific registers in the ARF 3026.

In some examples the graphics execution unit 3008 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 3008 is not limited to the number of hardware threads, and multiple logical threads can be assigned to each hardware thread.

In some examples, the graphics execution unit 3008 can co-issue multiple instructions, which may each be different instructions. The thread arbiter 3022 of the graphics execution unit thread 3008 can dispatch the instructions to one of the send unit 3030, branch unit 3032, or SIMD FPU(s) 3034 for execution. Each execution thread can access 128 general-purpose registers within the GRF 3024, where each register can store 32 bytes, accessible as a SIMD 8-element vector of 32-bit data elements. In some examples, each execution unit thread has access to 4 Kbytes within the GRF 3024, although examples are not so limited, and greater or fewer register resources may be provided in other examples. In some examples the graphics execution unit 3008 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 3024 can store a total of 28 Kbytes. Where 16 threads may access 4Kbytes, the GRF 3024 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 3030. In some examples, branch instructions are dispatched to a dedicated branch unit 3032 to facilitate SIMD divergence and eventual convergence.

In some examples the graphics execution unit 3008 includes one or more SIMD floating point units (FPU(s)) 3034 to perform floating-point operations. In some examples, the FPU(s) 3034 also support integer computation. In some examples the FPU(s) 3034 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 3035 are also present, and may be specifically optimized to perform operations associated with machine learning computations.

In some examples, arrays of multiple instances of the graphics execution unit 3008 can be instantiated in a graphics sub-core grouping (e.g., a sub-slice). For scalability, product architects can choose the exact number of execution units per sub-core grouping. In some examples the execution unit 3008 can execute instructions across a plurality of execution channels. In a further example, each thread executed on the graphics execution unit 3008 is executed on a different channel.

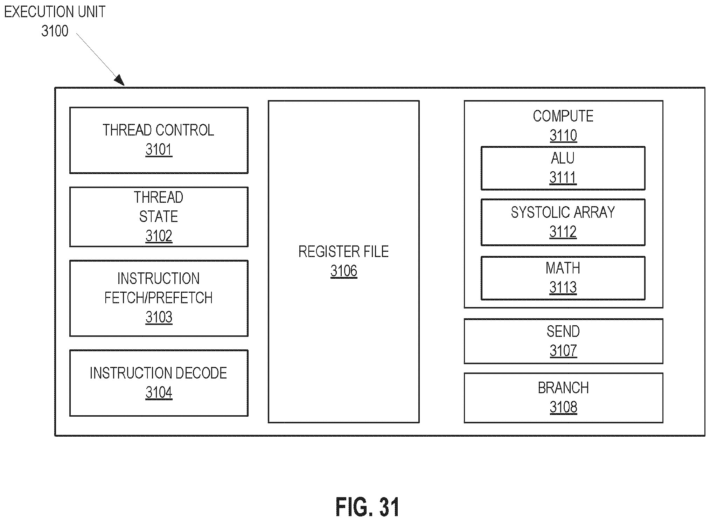

Figure 31 illustrates an additional execution unit 3100, according to an example. In some examples, the execution unit 3100 includes a thread control unit 3101, a thread state unit 3102, an instruction fetch/prefetch unit 3103, and an instruction decode unit 3104. The execution unit 3100 additionally includes a register file 3106 that stores registers that can be assigned to hardware threads within the execution unit. The execution unit 3100 additionally includes a send unit 3107 and a branch unit 3108. In some examples, the send unit 3107 and branch unit 3108 can operate similarly as the send unit 3030 and a branch unit 3032 of the graphics execution unit 3008 of Figure 30B.

The execution unit 3100 also includes a compute unit 3110 that includes multiple different types of functional units. In some examples the compute unit 3110 includes an ALU unit 3111 that includes an array of arithmetic logic units. The ALU unit 3111 can be configured to perform 64-bit, 32-bit, and 16-bit integer and floating point operations. Integer and floating point operations may be performed simultaneously. The compute unit 3110 can also include a systolic array 3112, and a math unit 3113. The systolic array 3112 includes a W wide and D deep network of data processing units that can be used to perform vector or other data-parallel operations in a systolic manner. In some examples the systolic array 3112 can be configured to perform matrix operations, such as matrix dot product operations. In some examples the systolic array 3112 support 16-bit floating point operations, as well as 8-bit and 4-bit integer operations. In some examples the systolic array 3112 can be configured to accelerate machine learning operations. In such examples, the systolic array 3112 can be configured with support for the bfloat 16-bit floating point format. In some examples, a math unit 3113 can be included to perform a specific subset of mathematical operations in an efficient and lower-power manner than then ALU unit 3111. The math unit 3113 can include a variant of math logic that may be found in shared function logic of a graphics processing engine provided by other examples. In some examples the math unit 3113 can be configured to perform 32-bit and 64-bit floating point operations.

The thread control unit 3101 includes logic to control the execution of threads within the execution unit. The thread control unit 3101 can include thread arbitration logic to start, stop, and preempt execution of threads within the execution unit 3100. The thread state unit 3102 can be used to store thread state for threads assigned to execute on the execution unit 3100. Storing the thread state within the execution unit 3100 enables the rapid pre-emption of threads when those threads become blocked or idle. The instruction fetch/prefetch unit 3103 can fetch instructions from an instruction cache of higher level execution logic (e.g., instruction cache 3006 as in Figure 30A). The instruction fetch/prefetch unit 3103 can also issue prefetch requests for instructions to be loaded into the instruction cache based on an analysis of currently executing threads. The instruction decode unit 3104 can be used to decode instructions to be executed by the compute units. In some examples, the instruction decode unit 3104 can be used as a secondary decoder to decode complex instructions into constituent micro-operations.

The execution unit 3100 additionally includes a register file 3106 that can be used by hardware threads executing on the execution unit 3100. Registers in the register file 3106 can be divided across the logic used to execute multiple simultaneous threads within the compute unit 3110 of the execution unit 3100. The number of logical threads that may be executed by the graphics execution unit 3100 is not limited to the number of hardware threads, and multiple logical threads can be assigned to each hardware thread. The size of the register file 3106 can vary across examples based on the number of supported hardware threads. In some examples, register renaming may be used to dynamically allocate registers to hardware threads.

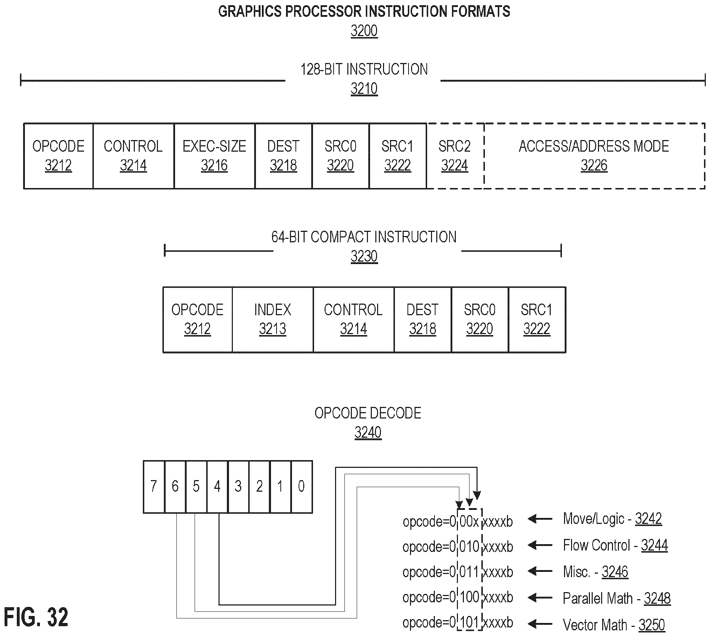

Figure 32 is a block diagram illustrating a graphics processor instruction formats 3200 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 3200 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 3210. A 64-bit compacted instruction format 3230 is available for some instructions based on the selected instruction, instruction options, and number of operands. The native 128-bit instruction format 3210 provides access to all instruction options, while some options and operations are restricted in the 64-bit format 3230. The native instructions available in the 64-bit format 3230 vary by example. In some examples, the instruction is compacted in part using a set of index values in an index field 3213. The execution unit hardware references a set of compaction tables based on the index values and uses the compaction table outputs to reconstruct a native instruction in the 128-bit instruction format 3210. Other sizes and formats of instruction can be used.

For each format, instruction opcode 3212 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 3214 enables control over certain execution options, such as channels selection (e.g., predication) and data channel order (e.g., swizzle). For instructions in the 128-bit instruction format 3210 an exec-size field 3216 limits the number of data channels that will be executed in parallel. In some examples, exec-size field 3216 is not available for use in the 64-bit compact instruction format 3230.

Some execution unit instructions have up to three operands including two source operands, src0 3220, src1 3222, and one destination 3218. In some examples, the execution units support dual destination instructions, where one of the destinations is implied. Data manipulation instructions can have a third source operand (e.g., SRC2 3224), where the instruction opcode 3212 determines the number of source operands. An instruction's last source operand can be an immediate (e.g., hard-coded) value passed with the instruction.

In some examples, the 128-bit instruction format 3210 includes an access/address mode field 3226 specifying, for example, whether direct register addressing mode or indirect register addressing mode is used. When direct register addressing mode is used, the register address of one or more operands is directly provided by bits in the instruction.

In some examples, the 128-bit instruction format 3210 includes an access/address mode field 3226, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 3226 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 3212 bit-fields to simplify Opcode decode 3240. For an 8-bit opcode, bits 4, 5, and 6 allow the execution unit to determine the type of opcode. The precise opcode grouping shown is merely an example. In some examples, a move and logic opcode group 3242 includes data movement and logic instructions (e.g., move (mov), compare (cmp)). In some examples, move and logic group 3242 shares the five most significant bits (MSB), where move (mov) instructions are in the form of 0000xxxxb and logic instructions are in the form of 0001xxxxb. A flow control instruction group 3244 (e.g., call, jump (jmp)) includes instructions in the form of 0010xxxxb (e.g., 0x20). A miscellaneous instruction group 3246 includes a mix of instructions, including synchronization instructions (e.g., wait, send) in the form of 0011xxxxb (e.g., 0x30). A parallel math instruction group 3248 includes component-wise arithmetic instructions (e.g., add, multiply (mul)) in the form of 0100xxxxb (e.g., 0x40). The parallel math group 3248 performs the arithmetic operations in parallel across data channels. The vector math group 3250 includes arithmetic instructions (e.g., dp4) in the form of 0101xxxxb (e.g., 0x50). The vector math group performs arithmetic such as dot product calculations on vector operands. The illustrated opcode decode 3240, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

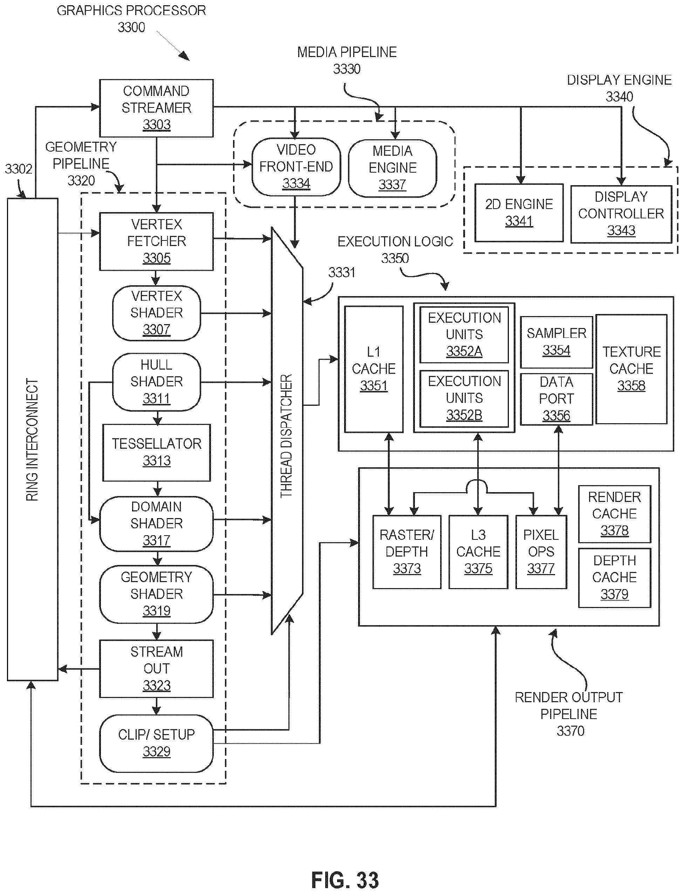

Figure 33 is a block diagram of another example of a graphics processor 3300. Elements of Figure 33 having the same reference numbers (or names) as the elements of any other figure herein can operate or function in any manner similar to that described elsewhere herein, but are not limited to such.

In some examples, graphics processor 3300 includes a geometry pipeline 3320, a media pipeline 3330, a display engine 3340, thread execution logic 3350, and a render output pipeline 3370. In some examples, graphics processor 3300 is a graphics processor within a multi-core processing system that includes one or more general-purpose processing cores. The graphics processor is controlled by register writes to one or more control registers (not shown) or via commands issued to graphics processor 3300 via a ring interconnect 3302. In some examples, ring interconnect 3302 couples graphics processor 3300 to other processing components, such as other graphics processors or general-purpose processors. Commands from ring interconnect 3302 are interpreted by a command streamer 3303, which supplies instructions to individual components of the geometry pipeline 3320 or the media pipeline 3330.

In some examples, command streamer 3303 directs the operation of a vertex fetcher 3305 that reads vertex data from memory and executes vertex-processing commands provided by command streamer 3303. In some examples, vertex fetcher 3305 provides vertex data to a vertex shader 3307, which performs coordinate space transformation and lighting operations to each vertex. In some examples, vertex fetcher 3305 and vertex shader 3307 execute vertex-processing instructions by dispatching execution threads to execution units 3352A-3352B via a thread dispatcher 3331.

In some examples, execution units 3352A-3352B are an array of vector processors having an instruction set for performing graphics and media operations. In some examples, execution units 3352A-3352B have an attached L1 cache 3351 that is specific for each array or shared between the arrays. The cache can be configured as a data cache, an instruction cache, or a single cache that is partitioned to contain data and instructions in different partitions.

In some examples, geometry pipeline 3320 includes tessellation components to perform hardware-accelerated tessellation of 3D objects. In some examples, a programmable hull shader 3311 configures the tessellation operations. A programmable domain shader 3317 provides back-end evaluation of tessellation output. A tessellator 3313 operates at the direction of hull shader 3311 and contains special purpose logic to generate a set of detailed geometric objects based on a coarse geometric model that is provided as input to geometry pipeline 3320. In some examples, if tessellation is not used, tessellation components (e.g., hull shader 3311, tessellator 3313, and domain shader 3317) can be bypassed.

In some examples, complete geometric objects can be processed by a geometry shader 3319 via one or more threads dispatched to execution units 3352A-3352B, or can proceed directly to the clipper 3329. In some examples, the geometry shader operates on entire geometric objects, rather than vertices or patches of vertices as in previous stages of the graphics pipeline. If the tessellation is disabled the geometry shader 3319 receives input from the vertex shader 3307. In some examples, geometry shader 3319 is programmable by a geometry shader program to perform geometry tessellation if the tessellation units are disabled.

Before rasterization, a clipper 3329 processes vertex data. The clipper 3329 may be a fixed function clipper or a programmable clipper having clipping and geometry shader functions. In some examples, a rasterizer and depth test component 3373 in the render output pipeline 3370 dispatches pixel shaders to convert the geometric objects into per pixel representations. In some examples, pixel shader logic is included in thread execution logic 3350. In some examples, an application can bypass the rasterizer and depth test component 3373 and access un-rasterized vertex data via a stream out unit 3323.

The graphics processor 3300 has an interconnect bus, interconnect fabric, or some other interconnect mechanism that allows data and message passing amongst the major components of the processor. In some examples, execution units 3352A-3352B and associated logic units (e.g., L1 cache 3351, sampler 3354, texture cache 3358, etc.) interconnect via a data port 3356 to perform memory access and communicate with render output pipeline components of the processor. In some examples, sampler 3354, caches 3351, 3358 and execution units 3352A-3352B each have separate memory access paths. In some examples the texture cache 3358 can also be configured as a sampler cache.

In some examples, render output pipeline 3370 contains a rasterizer and depth test component 3373 that converts vertex-based objects into an associated pixel-based representation. In some examples, the rasterizer logic includes a windower/masker unit to perform fixed function triangle and line rasterization. An associated render cache 3378 and depth cache 3379 are also available in some examples. A pixel operations component 3377 performs pixel-based operations on the data, though in some instances, pixel operations associated with 2D operations (e.g., bit block image transfers with blending) are performed by the 2D engine 3341, or substituted at display time by the display controller 3343 using overlay display planes. In some examples, a shared L3 cache 3375 is available to all graphics components, allowing the sharing of data without the use of main system memory.

In some examples, graphics processor media pipeline 3330 includes a media engine 3337 and a video front-end 3334. In some examples, video front-end 3334 receives pipeline commands from the command streamer 3303. In some examples, media pipeline 3330 includes a separate command streamer. In some examples, video front-end 3334 processes media commands before sending the command to the media engine 3337. In some examples, media engine 3337 includes thread spawning functionality to spawn threads for dispatch to thread execution logic 3350 via thread dispatcher 3331.

In some examples, graphics processor 3300 includes a display engine 3340. In some examples, display engine 3340 is external to processor 3300 and couples with the graphics processor via the ring interconnect 3302, or some other interconnect bus or fabric. In some examples, display engine 3340 includes a 2D engine 3341 and a display controller 3343. In some examples, display engine 3340 contains special purpose logic capable of operating independently of the 3D pipeline. In some examples, display controller 3343 couples with a display device (not shown), which may be a system integrated display device, as in a laptop computer, or an external display device attached via a display device connector.

In some examples, the geometry pipeline 3320 and media pipeline 3330 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

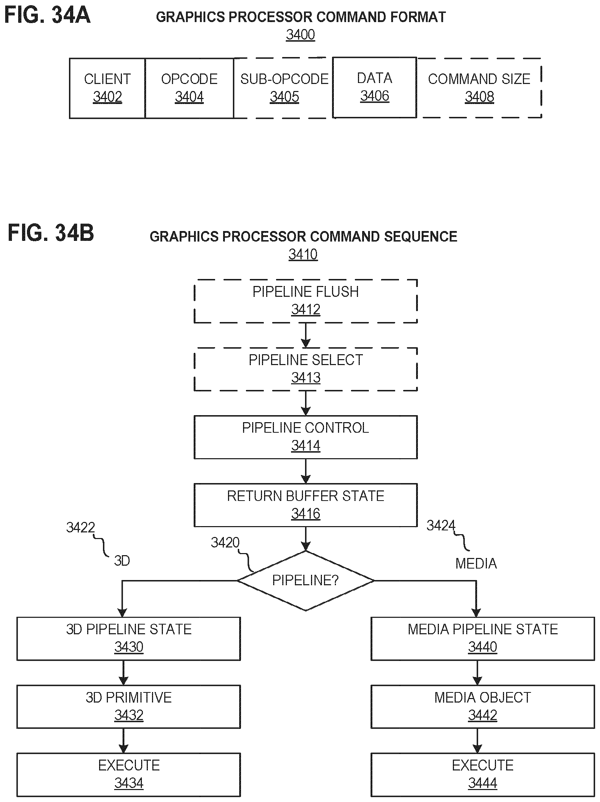

Figure 34A is a block diagram illustrating a graphics processor command format 3400 according to some examples. Figure 34B is a block diagram illustrating a graphics processor command sequence 3410 according to an example. The solid lined boxes in Figure 34A illustrate the components that are generally included in a graphics command while the dashed lines include components that are optional or that are only included in a sub-set of the graphics commands. The exemplary graphics processor command format 3400 of Figure 34A includes data fields to identify a client 3402, a command operation code (opcode) 3404, and data 3406 for the command. A sub-opcode 3405 and a command size 3408 are also included in some commands.

In some examples, client 3402 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3404 and, if present, sub-opcode 3405 to determine the operation to perform. The client unit performs the command using information in data field 3406. For some commands, an explicit command size 3408 is expected to specify the size of the command. In some examples, the command parser automatically determines the size of at least some of the commands based on the command opcode. In some examples commands are aligned via multiples of a double word. Other command formats can be used.

The flow diagram in Figure 34B illustrates an exemplary graphics processor command sequence 3410. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3410 may begin with a pipeline flush command 3412 to cause any active graphics pipeline to complete the currently pending commands for the pipeline. In some examples, the 3D pipeline 3422 and the media pipeline 3424 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3412 can be used for pipeline synchronization or before placing the graphics processor into a low power state.

In some examples, a pipeline select command 3413 is used when a command sequence requires the graphics processor to explicitly switch between pipelines. In some examples, a pipeline select command 3413 is required only once within an execution context before issuing pipeline commands unless the context is to issue commands for both pipelines. In some examples, a pipeline flush command 3412 is required immediately before a pipeline switch via the pipeline select command 3413.

In some examples, a pipeline control command 3414 configures a graphics pipeline for operation and is used to program the 3D pipeline 3422 and the media pipeline 3424. In some examples, pipeline control command 3414 configures the pipeline state for the active pipeline. In some examples, the pipeline control command 3414 is used for pipeline synchronization and to clear data from one or more cache memories within the active pipeline before processing a batch of commands.

In some examples, return buffer state commands 3416 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 3416 includes selecting the size and number of return buffers to use for a set of pipeline operations.

The remaining commands in the command sequence differ based on the active pipeline for operations. Based on a pipeline determination 3420, the command sequence is tailored to the 3D pipeline 3422 beginning with the 3D pipeline state 3430 or the media pipeline 3424 beginning at the media pipeline state 3440.

The commands to configure the 3D pipeline state 3430 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3430 commands are also able to selectively disable or bypass certain pipeline elements if those elements will not be used.

In some examples, 3D primitive 3432 command is used to submit 3D primitives to be processed by the 3D pipeline. Commands and associated parameters that are passed to the graphics processor via the 3D primitive 3432 command are forwarded to the vertex fetch function in the graphics pipeline. The vertex fetch function uses the 3D primitive 3432 command data to generate vertex data structures. The vertex data structures are stored in one or more return buffers. In some examples, 3D primitive 3432 command is used to perform vertex operations on 3D primitives via vertex shaders. To process vertex shaders, 3D pipeline 3422 dispatches shader execution threads to graphics processor execution units.

In some examples, 3D pipeline 3422 is triggered via an execute 3434 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3410 follows the media pipeline 3424 path when performing media operations. In general, the specific use and manner of programming for the media pipeline 3424 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3424 is configured in a similar manner as the 3D pipeline 3422. A set of commands to configure the media pipeline state 3440 are dispatched or placed into a command queue before the media object commands 3442. In some examples, commands for the media pipeline state 3440 include data to configure the media pipeline elements that will be used to process the media objects. This includes data to configure the video decode and video encode logic within the media pipeline, such as encode or decode format. In some examples, commands for the media pipeline state 3440 also support the use of one or more pointers to "indirect" state elements that contain a batch of state settings.

In some examples, media object commands 3442 supply pointers to media objects for processing by the media pipeline. The media objects include memory buffers containing video data to be processed. In some examples, all media pipeline states must be valid before issuing a media object command 3442. Once the pipeline state is configured and media object commands 3442 are queued, the media pipeline 3424 is triggered via an execute command 3444 or an equivalent execute event (e.g., register write). Output from media pipeline 3424 may then be post processed by operations provided by the 3D pipeline 3422 or the media pipeline 3424. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

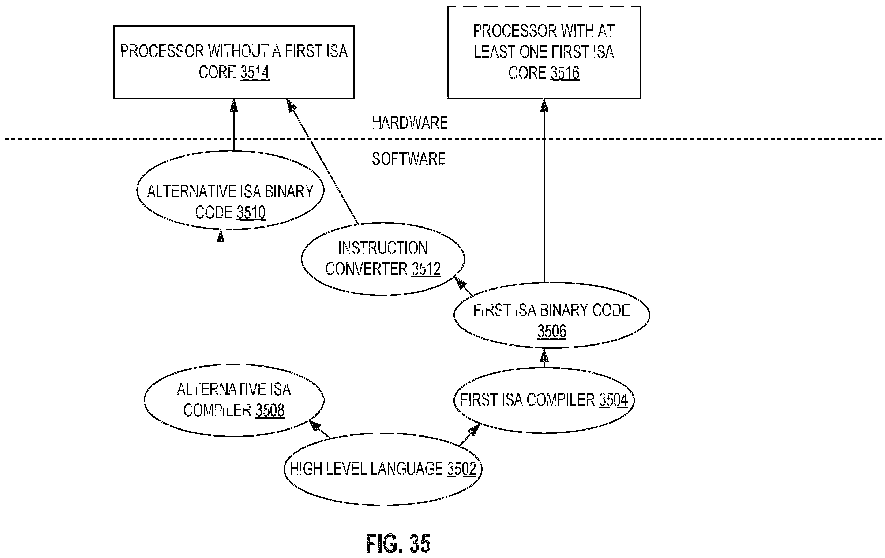

FIG. 35 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 35 shows a program in a high-level language 3502 may be compiled using a first ISA compiler 3504 to generate first ISA binary code 3506 that may be natively executed by a processor with at least one first ISA core 3516. The processor with at least one first ISA core 3516 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3504 represents a compiler that is operable to generate first ISA binary code 3506 (e.g., object code) that can, with or without additional linkage processing, be executed on the processor with at least one first ISA core 3516. Similarly, FIG. 35 shows the program in the high-level language 3502 may be compiled using an alternative ISA compiler 3508 to generate alternative ISA binary code 3510 that may be natively executed by a processor without a first ISA core 3514. The instruction converter 3512 is used to convert the first ISA binary code 3506 into code that may be natively executed by the processor without a first ISA core 3514. This converted code is not necessarily to be the same as the alternative ISA binary code 3510; however, the converted code will accomplish the general operation and be made up of instructions from the alternative ISA. Thus, the instruction converter 3512 represents software, firmware, hardware, or a combination thereof that, through emulation, simulation or any other process, allows a processor or other electronic device that does not have a first ISA processor or core to execute the first ISA binary code 3506.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

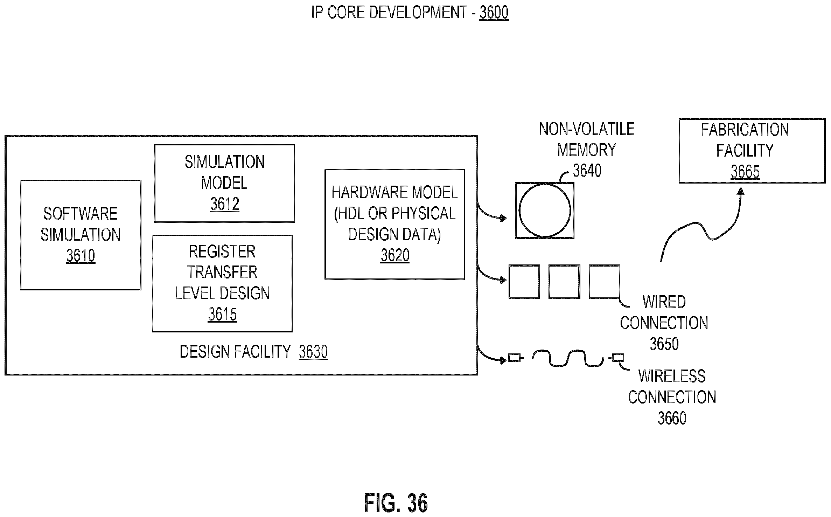

FIG. 36 is a block diagram illustrating an IP core development system 3600 that may be used to manufacture an integrated circuit to perform operations according to some examples. The IP core development system 3600 may be used to generate modular, re-usable designs that can be incorporated into a larger design or used to construct an entire integrated circuit (e.g., an SOC integrated circuit). A design facility 3630 can generate a software simulation 3610 of an IP core design in a high-level programming language (e.g., C/C++). The software simulation 3610 can be used to design, test, and verify the behavior of the IP core using a simulation model 3612. The simulation model 3612 may include functional, behavioral, and/or timing simulations. A register transfer level (RTL) design 3615 can then be created or synthesized from the simulation model 3612. The RTL design 3615 is an abstraction of the behavior of the integrated circuit that models the flow of digital signals between hardware registers, including the associated logic performed using the modeled digital signals. In addition to an RTL design 3615, lower-level designs at the logic level or transistor level may also be created, designed, or synthesized. Thus, the particular details of the initial design and simulation may vary.

The RTL design 3615 or equivalent may be further synthesized by the design facility into a hardware model 3620, which may be in a hardware description language (HDL), or some other representation of physical design data. The HDL may be further simulated or tested to verify the IP core design. The IP core design can be stored for delivery to a 3rd party fabrication facility 3665 using non-volatile memory 3640 (e.g., hard disk, flash memory, or any non-volatile storage medium). Alternatively, the IP core design may be transmitted (e.g., via the Internet) over a wired connection 3650 or wireless connection 3660. The fabrication facility 3665 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A processor core comprising:
a first set of execution circuits of a first type;
a second set of execution circuits of a second type different than the first type;
an allocation circuit to allocate a first set of one or more ports for the first set of execution circuits of the first type, and a second set of one or more ports for the second set of execution circuits of the second type; and
a performance monitor circuit to generate a first value that indicates a first number of ports of the first set of one or more ports that delayed pushing out a ready to execute micro-operation of the first type to the first set of execution circuits of the first type due to being busy executing another micro-operation of the first type, and a second value that indicates a second number of ports of the second set of one or more ports that delayed pushing out a ready to execute micro-operation of the second type to the second set of execution circuits of the second type due to being busy executing another micro-operation of the second type.

2. The processor core of claim 1, wherein the performance monitor circuit is to generate the first value that indicates the first number of ports of the first set of one or more ports that delayed pushing out the ready to execute micro-operation of the first type to the first set of execution circuits of the first type in a plurality of processing cycles due to being busy executing the another micro-operation of the first type, and the second value that indicates the second number of ports of the second set of one or more ports that delayed pushing out the ready to execute micro-operation of the second type to the second set of execution circuits of the second type in the plurality of processing cycles due to being busy executing the another micro-operation of the second type.

3. The processor core of any one of claims 1-2, wherein the first type is an integer type and the second type is a vector type.

4. The processor core of claim 1, wherein the performance monitor circuit is to generate a third value that indicates a third number of the ready to execute micro-operations of the first type that were delayed from being pushed out on the first set of one or more ports for the first set of execution circuits of the first type, and a fourth value that indicates a fourth number of the ready to execute micro-operations of the second type that were delayed from being pushed out on the second set of one or more ports for the second set of execution circuits of the second type.

5. The processor core of claim 1, wherein the performance monitor circuit is to generate a third value that indicates a third number of stalls of micro-operations of the first type from being allocated by the allocation circuit, and a fourth value that indicates a fourth number of stalls of micro-operations of the second type from being allocated by the allocation circuit.

6. The processor core of claim 1, wherein the performance monitor circuit is to generate a third value that indicates a third number of micro-operations of the first type that are scheduled for execution, and a fourth value that indicates a fourth number of micro-operations of the second type that are scheduled for execution.

7. The processor core of claim 6, wherein the performance monitor circuit is to generate a fifth value that indicates how much of a core bound allocation stall of micro-operations of the first type is due to execution bandwidth limitation of the first set of execution circuits of the first type based at least in part on the first value and the third value, and a sixth value that indicates how much of a core bound allocation stall of micro-operations of the second type is due to execution bandwidth limitation of the second set of execution circuits of the second type based at least in part on the second value and the fourth value.

8. A method comprising:
allocating, by an allocation circuit of a processor, a first set of one or more ports for a first set of execution circuits of the processor of a first type, and a second set of one or more ports for a second set of execution circuits of the processor of a second type; and
generating, by a performance monitor circuit of the processor, a first value that indicates a first number of ports of the first set of one or more ports that delayed pushing out a ready to execute micro-operation of the first type to the first set of execution circuits of the first type due to being busy executing another micro-operation of the first type, and a second value that indicates a second number of ports of the second set of one or more ports that delayed pushing out a ready to execute micro-operation of the second type to the second set of execution circuits of the second type due to being busy executing another micro-operation of the second type.

9. The method of claim 8, wherein the generating comprises generating the first value that indicates the first number of ports of the first set of one or more ports that delayed pushing out the ready to execute micro-operation of the first type to the first set of execution circuits of the first type in a plurality of processing cycles due to being busy executing the another micro-operation of the first type, and the second value that indicates the second number of ports of the second set of one or more ports that delayed pushing out the ready to execute micro-operation of the second type to the second set of execution circuits of the second type in the plurality of processing cycles due to being busy executing the another micro-operation of the second type.

10. The method of any one of claims 8-9, wherein the first type is an integer type and the second type is a vector type.

11. The method of claim 8, further comprising generating, by the performance monitor circuit, a third value that indicates a third number of the ready to execute micro-operations of the first type that were delayed from being pushed out on the first set of one or more ports for the first set of execution circuits of the first type, and a fourth value that indicates a fourth number of the ready to execute micro-operations of the second type that were delayed from being pushed out on the second set of one or more ports for the second set of execution circuits of the second type.

12. The method of claim 8, further comprising generating, by the performance monitor circuit, a third value that indicates a third number of stalls of micro-operations of the first type from being allocated by the allocation circuit, and a fourth value that indicates a fourth number of stalls of micro-operations of the second type from being allocated by the allocation circuit.

13. The method of claim 8, further comprising generating, by the performance monitor circuit, a third value that indicates a third number of micro-operations of the first type that are scheduled for execution, and a fourth value that indicates a fourth number of micro-operations of the second type that are scheduled for execution.

14. The method of claim 13, further comprising generating, by the performance monitor circuit, a fifth value that indicates how much of a core bound allocation stall of micro-operations of the first type is due to execution bandwidth limitation of the first set of execution circuits of the first type based at least in part on the first value and the third value, and a sixth value that indicates how much of a core bound allocation stall of micro-operations of the second type is due to execution bandwidth limitation of the second set of execution circuits of the second type based at least in part on the second value and the fourth value.
